# EUROPÄISCHE PATENTSCHRIFT

(11) **EP 1 334 107 B1**
(45) Veröffentlichungstag und Bekanntmachung des Hinweises auf die Patenterteilung: **26.07.2006**
(21) Anmeldenummer: 01987752.1
(22) Anmeldetag: 17.10.2001
(51) Int. Cl.: C07F 7/00

(54) **NON-METALLOCENE, VERFAHREN ZUR HERSTELLUNG VON DIESEN UND DEREN VERWENDUNG ZUR POLYMERISATION VON OLEFINEN**
NON-METALLOCENE COMPOUNDS, METHOD FOR THE PRODUCTION THEREOF AND USE OF THE SAME FOR THE POLYMERISATION OF OLEFINS
COMPOSES NON METALLOCENES, LEUR PROCEDE DE PRODUCTION ET LEUR UTILISATION DANS LA POLYMERISATION D'OLEFINES

(30) Priorität: 17.11.2000 DE 10057009
(43) Veröffentlichungstag der Anmeldung: 13.08.2003
(73) Patentinhaber: Basell Polyolefine GmbH, 50389 Wesseling (DE)
(72) Erfinder: SCHOTTEK, Jörg, 60486 Frankfurt (DE); SCHULTE, Jörg, Ludwig, 60487 Frankfurt (DE)
(86) Internationale Anmeldenummer: PCT/EP2001/011999
(87) Internationale Veröffentlichungsnummer: WO 2002/032908

(56) Entgegenhaltungen:
- EP-A- 0 874 005
- CHEN Y ET AL: "Heptane-Soluble Homogeneous Zirconocene Catalyst: Synthesis of a Single Diastereomer, Polymerization Catalysis, and Effect of Silica Supports" JOURNAL OF POLYMER SCIENCE, PART A: POLYMER CHEMISTRY, Bd. 33, Nr. 13, 1995, Seiten 2093-2108, XP001055335 ISSN: 0887-624X

## Beschreibung

Die vorliegende Erfindung betrifft ein Verfahren zur Herstellung von speziellen Übergangsmetallverbindungen, neue Übergangsmetallverbindungen und deren Verwendung zur Polymerisation von Olefinen

In den letzten Jahren wurden zur Olefinpolymerisation neben herkömmlichen Ziegler Katalysatoren Metallocene verwendet um Polyolefine mit besonderen Eigenschaften zu generieren, die man mit herkömmlichen Ziegler Katalysatoren nicht erreicht. Metallocene können, gegebenenfalls in Kombination mit einem oder mehreren CoKatalysatoren, als Katalysatorkomponente für die Polymerisation und Copolymerisation von Olefinen verwendet werden. Insbesondere werden als Katalysatorvorstufen halogenhaltige Metallocene eingesetzt, die sich beispielsweise durch ein Aluminoxan in einen polymerisationsaktiven kationischen Metallocenkomplex überführen lassen.

Die Darstellung und Verwendung von Metallocene stellt aber heute noch einen Kostenfaktor da, welcher weder durch erhöhte Aktivität noch durch verbesserte Synthesemethoden überwunden werden konnte. Zudem stellt die Heterogenisierung solcher Katalysatoren ein weiteres Problem dar, da hier vor allem die Aktivitäten einen starken Einbruch gegenüber der homogen geführten Polymerisation erleiden.

Im JOURNAL OF POLYMER SCIENCE; PART A: POLYMER CHEMISTRY, Bd. 33, Nr. 13, 1995, Seiten 2093-2108 werden siliziumverbrückte Bisindenylmetallocene beschrieben, wobei das Siliziumatom mit zwei Menthoxyresten substituiert ist. In der Literatur sind verschiedene "Non-Metallocene" beschrieben wie z.B. Phenoxyimin-substituierte Übergangsmetallkomplexe in EP 874 005, die sich durch Vorteile in der Darstellbarkeit und den Kosten der Edukte auszeichnen. Die hohen Aktivitäten dieser Komplexe stellen einen weiteren kostensparenden Faktor dar.

Trotz zahlreicher literaturbekannter Verbindungen ist es bis heute jedoch nicht gelungen "Non-Metallocene" zu entwickeln, die isotaktisches PP mit einer ausreichenden Taktizität generieren.

Es bestand somit die Aufgabe neue Metallkatalysatoren zu entwickeln die einen neuen vorteilhaften Zugang zu Polyolefinen ermöglichen und dabei die Nachteile des beschriebenen Stands der Technik vermeiden.

Es wurde nun überraschenderweise gefunden, daß ausgehend von substituierten oder unsubstituierten Salicylaldimenen und verschiedenen silylierten Indenen eine neue Ligandenstruktur aufgebaut werden kann, die dann durch Umsetzung mit Metallchloriden neuartige Metallkomplexe liefert. Diese Darstellungsweise stellt einen universellen Zugang zu dieser neuartigen Verbindungsklasse dar. Durch diese Verbindungen wird somit die der Erfindung zugrunde liegende Aufgabe gelöst.

Gegenstand der vorliegenden Erfindung sind Verbindungen der Formel (I) worin 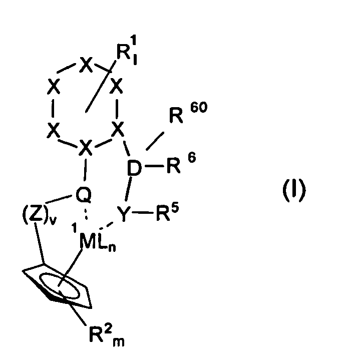
- M¹: Ti, Zr, Hf, Ni, Co, Fe, Pd, Sc, Cr oder Nb ist,
- R¹: gleich oder verschieden sind und ein Wasserstoffatom oder Si(R¹²)₃ sind,
worin R¹² gleich oder verschieden ein Wasserstoffatom oder eine C₁-C₄₀₋kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind,
oder R¹ gleich oder verschieden sind und eine C₁-C₃₀ - kohlenstoffhaltige Gruppe wie C₁-C₂₅-Alkyl, z. B. Methyl, Ethyl, tert.-Butyl, n-Hexyl, Cyclohexyl oder Octyl, C₂-C₂₅-Alkenyl, C₃-C₁₅-Alkylalkenyl, C₆-C₂₄-Aryl, C₅-C₂₄-Heteroaryl, C₇-C₃₀-Arylalkyl, C₇-C₃₀-Alkylaryl, fluorhaltiges C₁-C₂₅-Alkyl, fluorhaltiges C₆₋C₂₄-Aryl, fluorhaltiges C₇-C₃₀-Arylalkyl, fluorhaltiges C₇-C₃₀-Alkylaryl oder C₁₋C₁₂-Alkoxy ist,
oder zwei oder mehrere Reste R¹ können so miteinander verbunden sein, daß die Reste R¹ und die sie verbindenden Atome ein C₄-C₂₄-Ringsystem bilden, welches seinerseits substituiert sein kann,
- R²: gleich oder verschieden sind und ein Wasserstoffatom oder Si(R¹²)₃ sind,
worin R¹² gleich oder verschieden ein Wasserstoffatom oder eine C₁-C₄₀₋kohlenstoffhaltige Gruppe wie C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind,
oder R² gleich oder verschieden sind und eine C₁-C₃₀ - kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl die mit dem Cyclopentadienylring Azapentalene, Thiopentalen oder Phosphorpentalene bilden, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀₋Alkylaryl oder C₁-C₁₂-Alkoxy ist,
oder zwei oder mehrere Reste R² können so miteinander verbunden sein, daß die Reste R² und die sie verbindenden Atome des Cyclopentadienylringes ein C₄-C₂₄-Ringsystem bilden, welches seinerseits substituiert sein kann,
- R⁵, R⁶: gleich oder verschieden sind und ein Wasserstoffatom oder Si(R¹²)₃ sind,
worin R¹² gleich oder verschieden ein Wasserstoffatom oder eine C₁-C₄₀₋kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind,
oder R⁵ oder R⁶ gleich oder verschieden sind und eine C₁-C₃₀₋kohlenstoffhaltige Gruppe wie C₁-C₂₅-Alkyl, z. B. Methyl, Ethyl, tert.-Butyl, n-Hexyl, Cyclohexyl oder Octyl, C₂-C₂₅-Alkenyl, C₃-C₁₅-Alkylalkenyl, C₆-C₂₄-Aryl, C₅-C₂₄-Heteroaryl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀₋Alkylaryl oder C₁-C₁₂-Alkoxy ist,
oder die Reste R⁵ und R⁶ können miteinander verbunden sein, daß die Reste
R⁵ und R⁶ ein C₄-C₂₄-Ringsystem bilden, welches seinerseits substituiert sein kann,
- R⁶⁰: ein Wasserstoffatom oder eine C₁-C₁₂-Alkylgruppe, bevorzugt ein
Wasserstoffatom,
- I: gleich 4 ist,
- m: gleich 4 ist,
- D, Q, Y: ein Element der 13., 14., 15. oder 16. Gruppe des Periodensystems der Elemente ist,
- X: gleich und verschieden sein können und ein Element der 13., 14., 15. oder 16. Gruppe des Periodensystems der Elemente ist, wobei sie untereinander cyclische Systeme wie Aromaten oder Aliphaten bilden,
- L: gleich oder verschieden sein können und ein Wasserstoffatom, eine C₁-C₁₀₋Kohlenwasserstoffgruppe wie C₁-C₁₀-Alkyl oder C₆-C₁₀-Aryl, ein Halogenatom, oder OR⁹, SR⁹, OSiR⁹₃, SiR⁹₃, PR⁹₂ oder NR⁹₂ bedeuten, worin R⁹ ein Halogenatom, eine C₁-C₁₀ Alkylgruppe, eine halogenierte C₁-C₁₀ Alkylgruppe, eine C₆-C₂₀ Arylgruppe oder eine halogenierte C₆-C₂₀ Arylgruppe sind, oder L sind eine Toluolsulfonyl-, Trifluoracetyl-, Trifluoracetoxyl-, Trifluormethansulfonyl-, Nonafluorbutansulfonyl- oder 2,2,2-Trifluorethansulfonyl-Gruppe,
- n: eine ganze Zahl von 1 bis 4, bevorzugt 2 ist,
- Z: gleich M²R¹⁰R¹¹ ist, worin M² Kohlenstoff, Silizium, Germanium, Bor oder Zinn ist und R¹⁰ und R¹¹ gleich oder verschieden sind und C₁-C₁₀-Alkyl, C₆-C₁₄-Aryl oder Trimethylsilyl bedeuten, und
- v: ist 1.

Bevorzugt ist Z gleich CH₂, CH₂CH₂, CH(CH₃)CH₂, CH(C₄H₉)C(CH₃)₂, C(CH₃)₂, (CH₃)₂Si, (CH₃)₂Ge, (CH₃)₂Sn, (C₆H₅)₂Si, (C₆H₅)(CH₃)Si, (C₆H₅)₂Ge, (CH₃)₃Si-Si(CH₃)(C₆H₅)₂Sn, (CH₂)₄Si, CH₂Si(CH3)2, o-C₆H₄ oder 2,2'-(C₆H₄)₂, sowie 1,2-(1-Methyl-ethandiyl)-, 1,2-(1,1-Dimethyl-ethandiyl)- und 1,2(1,2-Dimethyl-ethandiyl)-Brücken. Z kann auch mit einem oder mehreren Resten R¹⁰ und/oder R¹¹ ein mono- oder polycyclisches Ringsystem bilden, wobei R¹⁰ und R¹¹ die vorstehende Bedeutung haben.

Bevorzugt sind verbrückte metallorganische Verbindungen der Formel (I), insbesondere solche in denen v gleich 1 ist und der Cyclopentadienylring so mit R² substituiert ist, daß er einen Indenylring darstellt.
Besonders bevorzugt sind verbrückte metallorganische Verbindungen der Formel (II), 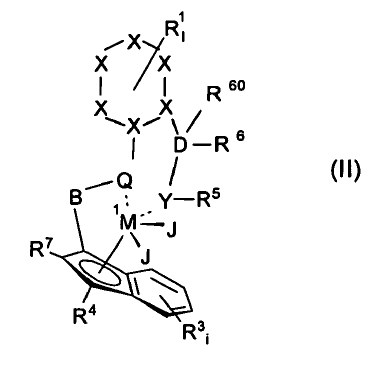 worin
- M¹: gleich Ti, Zr oder Hf ist, besonders bevorzugt Zirkonium,
- R¹: gleich oder verschieden sind und ein Wasserstoffatom, O-Si(R¹²)₃ oder Si(R¹²)₃ sind, worin R¹² gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁₋C₁₀-Alkoxy, C₆-C₂₀-Aryl, C₆-C₁₀-Fluoraryl, C₆-C₁₀-Aryloxy, C₂-C₁₀-Alkenyl, C₇₋C₄₀-Arylalkyl, C₇-C₄₀-Alkylaryl oder C₈-C₄₀-Arylalkenyl sind,
oder R¹ gleich oder verschieden sind und eine C₁-C₃₀ - kohlenstoffhaltige Gruppe wie C₁-C₂₅-Alkyl, z. B. Methyl, Ethyl, tert.-Butyl, n-Hexyl, Cyclohexyl oder Octyl, C₂-C₂₅-Alkenyl, C₃-C₁₅-Alkylalkenyl, C₆-C₂₄-Aryl, C₅-C₂₄₋Heteroaryl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀₋Alkylaryl oder C₁-C₁₂-Alkoxy ist,
oder zwei oder mehrere Reste R¹ können so miteinander verbunden sein, daß die Reste R¹ und die sie verbindenden Atome ein C₄-C₂₄-Ringsystem bilden, welches seinerseits substituiert sein kann,
- R⁴, R⁷: gleich ein Wasserstoffatom, ein C₁-C₂₀ - kohlenstoffhaltige Gruppe, bevorzugt C₁-C₁₈-Alkyl, wie Methyl, Ethyl, n-Butyl, n-Hexyl, Cyclohexyl oder Octyl, C₂-C₁₀-Alkenyl, C₃-C₁₅-Alkylalkenyl, C₆-C₁₈-Aryl, C₅-C₁₈-Heteroaryl, C₇₋C₂₀-Arylalkyl, C₇-C₂₀-Alkylaryl, fluorhaltiges C₁-C₁₂-Alkyl, fluorhaltiges C₆-C₁₈₋Aryl, fluorhaltiges C₇-C₂₀-Arylalkyl oder fluorhaltiges C₇-C₂₀-Alkylaryl ist,
- R⁵, R⁶: gleich oder verschieden sind und ein Wasserstoffatom oder Si(R¹²)₃ sind,
worin R¹² gleich oder verschieden ein Wasserstoffatom oder eine C₁-C₄₀₋kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀₋Arylalkyl, C₇-C₄₀-Alkylaryl oder C₈-C₄₀-Arylalkenyl sind,
oder R⁵ oder R⁶ gleich oder verschieden sind und eine C₁-C₃₀₋kohlenstoffhaltige Gruppe wie C₁-C₂₅-Alkyl, z. B. Methyl, Ethyl, tert.-Butyl, n-Hexyl, Cyclohexyl oder Octyl, C₂-C₂₅-Alkenyl, C₃-C₁₅-Alkylalkenyl, C₆-C₂₄₋Aryl, C₅-C₂₄-Heteroaryl, C₇-C₃₀-Arylalkyl, C₇-C₃₀-Alkylaryl, fluorhaltiges C₁₋C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist,
oder die Reste R⁵ und R⁶ können miteinander verbunden sein, daß die Reste R⁵ und R⁶ ein C₄-C₂₄-Ringsystem bilden, welches seinerseits substituiert sein kann,
- R³: ein Wasserstoffatom, Halogenatom oder eine C₁-C₂₀ - kohlenstoffhaltige Gruppe bedeuteten, bevorzugt eine lineare oder verzweigte C₁-C₁₈₋Alkylgruppe, wie Methyl, Ethyl, tert.-Butyl, Cyclohexyl oder Octyl, C₂-C₁₀₋Alkenyl, C₃-C₁₅-Alkylalkenyl, eine C₆-C₁₈-Arylgruppe, die gegebenenfalls substituiert sein kann, insbesondere Phenyl, Tolyl, Xylyl, tert.-Butylphenyl, Ethylphenyl, Naphthyl, Acenaphthyl, Phenanthrenyl oder Anthracenyl, C₅₋C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl sind, und zwei oder mehr Reste R³ ein mono- oder polycyclisches Ringssystem bilden können, das seinerseits gegebenenfalls substituiert sein kann.
- R⁶⁰: ein Wasserstoffatom oder eine C₁-C₁₂-Alkylgruppe, bevorzugt ein Wasserstoffatom,
- J: ein Halogenatom, insbesondere Chlor ist, eine C₁-C₁₈-Alkylgruppe, C₆-C₁₅₋Arylgruppe insbesondere Methyl, Ethyl, tert.-Butyl, oder ein substituiertes oder unsubstituiertes Phenolat ist,
- Q, Y, D: ein Element der 13., 14., 15. oder 16. Gruppe des Periodensystems der Elemente ist, insbesondere Bor, Kohlenstoff, Silicium, Stickstoff, Sauerstoff und Schwefel ist,
- X: gleich und verschieden sein können und ein Element der 13., 14., 15. oder 16. Gruppe des Periodensystems der Elemente ist, insbesondere Bor, Kohlenstoff, Silicium, Stickstoff, Sauerstoff und Schwefel ist, wobei sie untereinander cyclische Systeme wie Aromaten oder Aliphaten, bei denen ein oder mehrere C-Atome durch N, O, S, B ersetzt sein können, bilden, insbesondere Phenyl, Naphtyl, Adamanthyl, Fluorenyl, Cyclohexyl, Boratabenzol, die ihrerseits mit R¹ substituiert sein können,
- I, i: gleich oder verschieden eine ganze Zahl zwischen Null und 4, bevorzugt 1 oder 2, besonders bevorzugt gleich 1 sind,
- B: M³R¹³R¹⁴ ist, worin M³ Silizium oder Kohlenstoff ist und R¹³ und R¹⁴ gleich oder verschieden sind und C₁-C₁₀-Alkyl, C₆-C₁₄-Aryl oder Trimethylsilyl bedeuten,
- R⁶⁰: ein Wasserstoffatom ist.

Der Indenylring ist bevorzugt mit R³ substituiert, insbesondere in 2-, 4-, 2,4,5-, 2,4,6-, 2,4,7 oder 2,4,5,6-Stellung, mit C₁-C₂₀-kohlenstoffhaltigen Gruppen, wie C₁-C₁₈-Alkyl oder C₆-C₁₈-Aryl, wobei auch zwei oder mehrere Substituenten des Indenylrings zusammen ein Ringsystem bilden können.
Bevorzugt ist B gleich CH₂, CH₂CH₂, CH(CH₃)CH₂, CH(C₄H₉)C(CH₃)₂, C(CH₃)₂, (CH₃)₂Si, (CH₃)₃Si-Si(CH₃).

Ganz besonders bevorzugt sind verbrückte metallorganische Verbindungen der Formel (II),
worin
- M¹: gleich Zirkonium ist,
- R⁷: ein Wasserstoffatom oder lineare oder verzweigte C₁-C₁₂-Alkylgruppe, bevorzugt eine Alkylgruppe wie Methyl, Ethyl, n-Butyl, n-Hexyl, Isoproppyl, Isobutyl, Isopentyl, Cyclohexyl, Cyclopentyl oder Octyl sind, besonders bevorzugt Methyl Ethyl, Isopropyl oder Cyclohexyl ist,
- R⁵: ein Wasserstoffatom, Halogenatom oder eine C₁-C₂₀ - kohlenstoffhaltige Gruppe bedeuten, bevorzugt eine lineare oder verzweigte C₁-C₈-Alkylgruppe, wie Methyl, Ethyl, tert.-Butyl, Cyclohexyl oder Octyl, C₂-C₆-Alkenyl, C₃-C₆₋Alkylalkenyl, eine C₆-C₁₈-Arylgruppe, die gegebenenfalls substituiert sein kann, insbesondere Phenyl, Tolyl, Xylyl, tert.-Butylphenyl, Ethylphenyl, Naphthyl, Acenaphthyl, Phenanthrenyl oder Anthracenyl, C₅-C₁₈-Heteroaryl, C₇-C₁₂-Arylalkyl, C₇-C₁₂-Alkylaryl, fluorhaltiges C₁-C₈-Alkyl, fluorhaltiges C₆₋C₁₈-Aryl, fluorhaltiges C₇-C₁₂-Arylalkyl oder fluorhaltiges C₇-C₁₂-Alkylaryl ist,
- R⁶: gleich oder verschieden sind und ein Wasserstoffatom oder eine C₁-C₁₂₋Alkylgruppe, bevorzugt eine Alkylgruppe wie Methyl, Ethyl, n-Butyl, n-Hexyl oder Octyl sind, besonders bevorzugt Methyl oder Ethyl ist,
- R³: ein Wasserstoffatom, Halogenatom oder eine C₁-C₂₀ - kohlenstoffhaltige Gruppe bedeuten, bevorzugt eine lineare oder verzweigte C₁-C₈-Alkylgruppe, wie Methyl, Ethyl, tert.-Butyl, Cyclohexyl oder Octyl, C₂-C₆-Alkenyl, C₃-C₆₋Alkylalkenyl, eine C₆-C₁₈-Arylgruppe, insbesondere Phenyl, Tolyl, Xylyl, tert.-Butylphenyl, Ethylphenyl, Naphthyl, Acenaphthyl, Phenanthrenyl oder Anthracenyl, vorzugsweise solche C₆-C₁₈-Arylgruppen die substituiert sind, C₅-C₁₈-Heteroaryl, C₇-C₁₂-Arylalkyl, C₇-C₁₂-Alkylaryl, fluorhaltiges C₁-C₈₋Alkyl, fluorhaltiges C₆-C₁₈-Aryl, fluorhaltiges C₇-C₁₂-Arylalkyl oder fluorhaltiges C₇-C₁₂-Alkylaryl ist,
- J: Chlor oder Methyl ist,
- Q, Y, D: unabhängig voneinander ein Element der 14., 15. oder 16. Gruppe des Periodensystems der Elemente ist, insbesondere Kohlenstoff, Stickstoff, Schwefel und Sauerstoff ist,
- X: gleich und verschieden sein können und ein Element der 14., 15. oder 16. Gruppe des Periodensystems der Elemente ist, insbesondere Kohlenstoff, Stickstoff, Sauerstoff und Schwefel ist, insbesondere Phenyl, Naphtyl, Cyclohexyl, die ihrerseits mit R¹ substituiert sein können,
- I, i: gleich oder verschieden eine ganze Zahl zwischen Null und 4, bevorzugt 1 oder 2, besonders bevorzugt gleich 1 ist,
- B: ein verbrückendes Strukturelement bezeichnet und für bivalente Reste Si(Me)₂, Si(Ph)₂, Si(Et)₂, Si(MePh), CH₂, CH₂CH₂, (CH₃)₃Si-Si(CH₃) steht. Bei den vorstehenden Resten steht Ph für Phenyl, Et für Ethyl und Me für Methyl.

Weiterer Gegenstand der Erfindung sind Ligandensysteme der Formel (IIa), in der die Reste die gleiche Bedeutung wie unter Formel (II) haben.

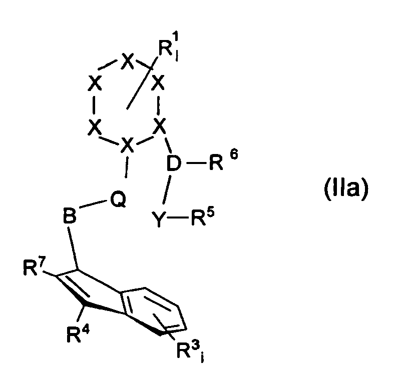

Erläuternde, jedoch nicht einschränkende Beispiele für die erfindungsgemäßen Verbindungen der Formel (II) sind:
Dimethylsilanyloxy(L)(indenyl)zirconiumdichlorid
Dimethylsilanyloxy(L) (4-naphthyl-indenyl)zirkoniumdichlorid
Dimethylsilanyloxy(L)(2-methyl-benzo-indenyl)zirkoniumdichlorid
Dimethylsilanyloxy(L)(2-methyl-indenyl)zirkoniumdichlorid
Dimethylsilanyloxy(L)(2-methyl-4-(1-naphthyl)-indenyl)zirkoniumdichlorid
Dimethylsilanyloxy(L)(2-methyl-4-(2-naphthyl)-indenyl)zirkoniumdichlorid
Dimethylsilanyloxy(L)(2, 7-methyl-4-(1-naphthyl)-indenyl)zirkoniumdichlorid
Dimethylsilanyloxy(L)(2, 7-methyl-4-(2-naphthyl)-indenyl)zirkoniumdichlorid
Dimethylsilanyloxy(L)(2-methyl-4-phenyl-indenyl)zirkoniumdichlorid
Dimethylsilanyloxy(L)(2, 7-methyl-4-phenyl-indenyl)zirkoniumdichlorid
Dimethylsilanyloxy(L)(2-methyl-4-(4'-tert.butyl-phenyl-indenyl)zirkoniumdichlorid
Dimethylsilanyloxy(L)(2-methyl-4-t-butyl-indenyl)zirkoniumdichlorid
Dimethylsilanyloxy(L)(2-methyl-4-isopropyl-indenyl)zirkoniumdichlorid
Dimethylsilanyloxy(L)(2-methyl-4-ethyl-indenyl)zirkoniumdichlorid
Dimethylsilanyloxy(L)(2-methyl-4-acenaphth-indenyl)zirkoniumdichlorid
Dimethylsilanyloxy(L)(2,4-dimethyl-indenyl)zirkoniumdichlorid
Dimethylsilanyloxy(L)(2-ethyl-indenyl)zirkoniumdichlorid
Dimethylsilanyloxy(L)(2-ethyl-4-ethyl-indenyl)zirkoniumdichlorid
Dimethylsilanyloxy(L)(2-ethyl-4-phenyl-indenyl)zirkoniumdichlorid
Dimethylsilandiy(L)(2-methyl-4,5-benzo-indenyl)zirkoniumdichlorid
Dimethylsitanyloxy(L)(2-methyl-4,6 diisopropyl-indenyl)zirkoniumdichlorid
Dimethylsilanyloxy(L)(2-methyl-4,5 diisopropyl-indenyl)zirkoniumdichlorid
Dimethylsilanyloxy(L)(2,4,6-trimethyl-indenyl)zirkoniumdichlorid
Dimethylsilanyloxy(L)(2,5,6-trimethyl-indenyl)zirkoniumdichiorid
Dimethylsilanyloxy(L)(2,4,7-trimethyl-indenyl)zirkoniumdichlorid
Dimethylsilanyloxy(L)(2-methyl-5-isobutyl-indenyl)zirkoniumdichlorid
Dimethylsilanyloxy(L)(2-methyl-5-t-butyl-indenyl)zirkoniumdichlorid
Methyl(phenyl)silanyloxy(L)(2-methyl-4-phenyl-indenyl)zirkoniumdichlorid
Methyl(phenyl)silanyloxy(L)(2-methyl-4,6 diisopropyl-indenyl)zirkoniumdichlorid
Methyl(phenyl)silanyloxy(L)(2-methyl-4-isopropyl-indenyl)zirkoniumdichlorid
Methyl(phenyl)silanyloxy(L)(2-methyl-4,5-benzo-indenyl)zirkoniumdichlorid
Methyl(phenyl)silanyloxy(L)(2-methyl-4,5-(methylbenzo)-indenyl)zirkoniumdi-chlorid
Methyl(phenyl)silanyloxy(L)(2-methyl-4,5-(tetramethylbenzo)-indenyl) zirkoniumdichlorid
Methyl(phenyl)silanyloxy(L)(2-methyl-4-acenaphth-indenyl)zirkoniumdichlorid
Methyl(phenyl)silanyloxy(L)(2-methyl-indenyl)zirkoniumdichlorid
Methyl(phenyl)silanyloxy(L)(2-methyl-5-isobutyl-indenyl)zirkoniumdichlorid
1,2-Ethandiyloxy(L)(2-methyl-4-phenyl-indenyl)zirkoniumdichlorid
1,4-Butandiyloxy(L)(2-methyl-4-phenyl-indenyl)zirkoniumdichlorid
1,2-Ethandiyloxy(L)(2-methyl-4,6 diisopropyl-indenyl)zirkoniumdichlorid
1,4-Butandiyloxy(L)(2-methyl-4-isopropyl-indenyl)zirkoniumdichlorid
1,4-Butandiyloxy(L)(2-methyl-4,5-benzo-indenyl)zirkoniumdichlorid
1,2-Ethandiyloxy(L)(2-methyl-4,5-benzo-indenyl)zirkoniumdichlorid
1,2-Ethandiyloxy(L)(2,4,7-trimethyl-indenyl)zirkoniumdichlorid
1,2-Ethandiyloxy(L)(2-methyl-indenyl)zirkoniumdichlorid
1,4-Butandiyloxy(L)(2-methyl-indenyl)zirkoniumdichlorid
(L)-(cyclopentadienyl)-zirkoniumdichlorid
(L)-(n-butylcyclopentadienyl)-zirkoniumdichlorid
(L)-(1,3-dimethylcyclopentadienyl)-zirkoniumdichlorid
Tetrachloro-[1-[(L)(η⁵-1H-inden-1-yliden)methylsilyl]-3-η⁵-cyclopenta-2,4-dien-1-yliden)-3-η⁵-9H-fluoren-9-yliden)butan]di-zirkonium
Tetrachloro-[2-[(L)(η⁵-2-methyl-1H-inden-1-yliden)methoxysilyl]-5-(η⁵-2,3,4,5-tetramethylcyclopenta-2,4-dien-1-yliden)-5-(η⁵-9H-fluoren-9-yliden)hexan]dizirkonium
Tetrachloro-[1-[(L)(η⁵-1H-inden-1-yliden)methylsilyl]-6-(η⁵-cyclopenta-2,4-dien-1-yliden)-6-(η⁵-9H-fluoren-9-yliden)-3-oxaheptan]di-zirkonium
Dimethylsilanyloxy(L)(2-methyl-4-(tert-butyl-phenyl-indenyl)-zirkoniumdichlorid
Dimethylsilanyloxy(L)(2-methyl-4-(4-methyl-phenyl-indenyl)zirkoniumdichlorid
Dimethylsilanyloxy(L)(2-methyl-4-(4-ethyl-phenyl-indenyl)zirkoniumdichlorid
Dimethylsilanyloxy(L)(2-methyl-4-(4-trifluormethyl-phenyl-indenyl)zirkoniumdichlorid
Dimethylsilanyloxy(L)(2-methyl-4-(4-methoxy-phenyl-indenyl)zirkoniumdichlorid
Dimethylsilanyloxy(L)(2-ethyl-4-(4-tert-butyl-phenyl-indenyl)zirkoniumdichlorid
Dimethylsilanyloxy(L)(2-ethyl-4-(4-methyl-phenyl-indenyl)zirkoniumdichlorid
Dimethylsilanyloxy(L)(2-ethyl-4-(4-ethyl-phenyl-indenyl)zirkoniumdichlorid
Dimethylsilanyloxy(L)(2-ethyl-4-(4-trifluormethyl-phenyl-indenyl)zirkoniumdichlorid
Dimethylsilanyloxy(L)(2-ethyl-4-(4-methoxy-phenyl-indenyl)zirkoniumdichlorid
Dimethylsilanyloxy(L)(2-methyl-4-(4-tert-butyl-phenyl-indenyl)zirkoniumdimethyl
Dimethylsilanyloxy(L)(2-methyl-4-(4-methyl-phenyl-indenyl)zirkoniumdimethyl
Dimethylsilanyloxy(L)(2-methyl-4-(4-ethyl-phenyl-indenyl)zirkoniumdimethyl
Dimethylsilanyloxy(L)(2-methyl-4-(4-trifluormethyl-phenyl-indenyl)zirkoniumdimethyl
Dimethylsilanyloxy(L)(2-methyl-4-(4-methoxy-phenyl-indenyl)zirkoniumdimethyl
Dimethylsilanyloxy(L)(2-ethyl-4-(4-tert-butyl-phenyl-indenyl)zirkoniumdimethyl
Dimethylsilanyloxy(L)(2-ethyl-4-(4-methyl-phenyl-indenyl)zirkoniumdimethyl
Dimethylsilanyloxy(L)(2-ethyl-4-(4-ethyl-phenyl-indenyl)zirkoniumdiethyl
Dimethylsilanyloxy(L)(2-ethyl-4-(4-trifluormethyl-phenyl-indenyl)zirkoniumdimethyl
Dimethylsilanyloxy(L)(2-ethyl-4-(4-methoxy-phenyl-indenyl)zirkoniumdimethyl
Dimethylsilanyloxy(L)(2-methyl-4-(4'-tert.-butyl-phenyl)-indenyl)zirkoniumdichlorid
Dimethylsilanyloxy(L)(2-isopropyl- 7- methyl-4-(4'-tert.-butyl-phenyl)-indenyl)zirkoniumdichlorid
Dimethylsilanyloxy(L)(2, 7-methyl-4-(4'-tert.-butyl-phenyl)-indenyl)zirkoniumdichlorid
Dimethylsilanyloxy(L)(2-methyl-4-(4'-tert.-butyl-phenyl)-indenyl)hafnuimdichlorid
Dimethylsilanyloxy(L)(2-methyl-4-(4'-tert.-butyl-phenyl)-indenyl)titandichlorid
Dimethylsilanyloxy(L)(2-ethyl- 7- methyl-4-(4'-tert.-butyl-phenyl)-indenyl)zirkoniumdichlorid
Dimethylsilanyloxy(L)(2-methyl-4-(4'-methyl-phenyl)-indenyl)zirkoniumdichlorid
Dimethylsilanyloxy(L)(2-methyl-4-(4'-n-propyl-phenyl)-indenyl)zirkoniumdichlorid
Dimethylsilanyloxy(L)(2-methyl-4-(4'-n-butyl-phenyl)-indenyl)zirkoniumdichlorid
Dimethylsilanyloxy(L)(2-methyl-4-(4'-hexyl-phenyl)-indenyl)zirkoniumdichlorid
Dimethylsilanyloxy(L)(2-methyl-4-(4'-sec-butyl-phenyl)-indenyl)zirkoniumdichlorid
Dimethylsilanyloxy(L)(2-ethyl-4-phenyl)-indenyl)zirkoniumdichlorid
Dimethylsilanyloxy(L)(2-ethyl-4-(4'-methyl-phenyl)-indenyl)zirkoniumdichlorid
Dimethylsilanyloxy(L)(2-ethyl-4-(4'-ethyl-phenyl)-indenyl)zirkoniumdichlorid
Dimethylsilanyloxy(L)(2-ethyl-4-(4'-n-propyl-phenyl)-indenyl)zirkoniumdichlorid
Dimethylsilanyloxy(L)(2-ethyl-4-(4'-n-butyl-phenyl)-indenyl)zirkoniumdichlorid
Dimethylsilanyloxy(L)(2-ethyl-4-(4'-hexyl-phenyl)-indenyl)zirkoniumdichlorid
Dimethylsilanyloxy(L)(2-ethyl-4-(4'-pentyl-phenyl)-indenyl)zirkoniumdichlorid
Dimethylsilanyloxy(L)(2-ethyl-4-(4'-cyclohexyl-phenyl)-indenyl)zirkoniumdichlorid
Dimethylsilanyloxy(L)(2-ethyl-4-(4'-sec-butyl-phenyl)-indenyl)zirkoniumdichlorid
Dimethylsilanyloxy(L)(2-ethyl-4-(4'-tert.-butyl-phenyl)-indenyl)zirkoniumdichlorid
Dimethylsilanyloxy(L)(2-n-propyl-4-phenyl)-indenyl)zirkoniumdichlorid
Dimethylsilanyloxy(L)(2-n-propyl-4-(4'-methyl-phenyl)-indenyl)zirkoniumdichlorid
Dimethylsilanyloxy(L)(2-n-propyl-4-(4'-ethyl-phenyl)-indenyl)zirkoniumdichlorid
Dimethylsilanyloxy(L)(2-n-propyl-4-(4'-iso-propyl-phenyl)-indenyl)zirkoniumdichlorid
Dimethylsilanyloxy(L)(2-n-propyl-4-(4'-n-butyl-phenyl)-indenyl)zirkoniumdichlorid
Dimethylsilanyloxy(L)(2-n-propyl-4-(4'-hexyl-phenyl)-indenyl)zirkoniumdichlorid
Dimethylsilanyloxy(L)(2-n-propyl-4-(4'-cyclohexyl-phenyl)-indenyl)zirkoniumdichlorid
Dimethylsilanyloxy(L)(2-n-propyl-4-(4'-sec-butyl-phenyl)-indenyl)zirkoniumdichlorid
Dimethylsilanyloxy(L)(2-n-propyl-4-(4'-tert.-butyl-phenyl)-indenyl)zirkoniumdichlorid
Dimethylsilanyloxy(L)(2-n-butyl-4-phenyl)-indenyl)zirkoniumdichlorid
Dimethylsilanyloxy(L)(2-n-butyl-4-(4'-methyl-phenyl)-indenyl)zirkoniumdichlorid
Dimethylsilanyloxy(L)(2-n-butyl-4-(4'-ethyl-phenyl)-indenyl)zirkoniumdichlorid
Dimethylsilanyloxy(L)(2-n-butyl-4-(4'-n-propyl-phenyl)-indenyl)zirkoniumdichlorid
Dimethylsilanyloxy(L)(2-n-butyl-4-(4'-iso-propyl-phenyl)-indenyl)zirkoniumdichlorid
Dimethylsilanyloxy(L)(2-n-butyl-4-(4'-n-butyl-phenyl)-indenyl)zirkoniumdichlorid
Dimethylsilanyloxy(L)(2-n-butyl-4-(4'-hexyl-phenyl)-indenyl)zirkoniumdichlorid
Dimethylsilanyloxy(L)(2-n-butyl-4-(4'-cyclohexyl-phenyl)-indenyl)zirkoniumdichlorid
Dimethylsilanyloxy(L)(2-n-butyl-4-(4'-sec-butyl-phenyl)-indenyl)zirkoniumdichlorid
Dimethylsilanyloxy(L)(2-n-butyl-4-(4'-tert.-butyl-phenyl)-indenyl)zirkoniumdichlorid
Dimethylsilanyloxy(L)(2-hexyl-4-phenyl)-indenyl)zirkoniumdichlorid
Dimethylsilanyloxy(L)(2-hexyl-4-(4'-methyl-phenyl)-indenyl)zirkoniumdichlorid
Dimethylsilanyloxy(L)(2-hexyl-4-(4'-ethyl-phenyl)-indenyl)zirkoniumdichlorid
Dimethylsilanyloxy(L)(2-hexyl-4-(4'-n-propyl-phenyl)-indenyl)zirkoniumdichlorid
Dimethylsilanyloxy(L)(2-hexyl-4-(4'-iso-propyl-phenyl)-indenyl)zirkoniumdichlorid
Dimethylsilanyloxy(L)(2-hexyl-4-(4'-n-butyl-phenyl)-indenyl)zirkoniumdichlorid
Dimethylsilanyloxy(L)(2-hexyl-4-(4'-hexyl-phenyl)-indenyl)zirkoniumdichlorid
Dimethylsilanyloxy(L)(2-hexyl-4-(4'-cyclohexyl-phenyl)-indenyl)zirkoniumdichlorid
Dimethylsilanyloxy(L)(2-hexyl-4-(4'-sec-butyl-phenyl)-indenyl)zirkoniumdichlorid
Dimethylsilanyloxy(L)(2-hexyl-4-(4'-tert.-butyl-phenyl)-indenyl)zirkoniumdichlorid
Dimethylsilanyloxy(L)(2-methyl-4-(4'-tert.-butyl-phenyl)-indenyl)zirkonium(L)(dimethylamid)
Dimethylsilanyloxy(L)(2-ethyl-4-(4'-tert.-butyl-phenyl)-indenyl)zirkoniumdibenzyl
Dimethylsilanyloxy(L)(2-methyl-4-(4'-tert.-butyl-phenyl)-indenyl)zirkoniumdimethyl
Dimethylgermanyloxy(L)(2-ethyl-4-(4'-tert.-butyl-phenyl)-indenyl)zirkoniumdichlorid
Dimethylgermanyloxy(L)(2-ethyl-4-(4'-tert.-butyl-phenyl)-indenyl)hafniumdichlorid
Dimethylgermanyloxy(L)(2-propyl-4-(4'-tert.-butyl-phenyl)-indenyl)titandichlorid
Dimethylgermanylloxy(L)(2-methyl-4-(4'-tert.-butyl-phenyl)-indenyl)zirkoniumdichlorid
Ethylidenoxy(L)(2-ethyl-4-phenyl)-indenyl)zirkoniumdichlorid
Ethylidenoxy(L)(2-ethyl-4-(4'-tert.-butyl-phenyl)-indenyl)zirkoniumdichlorid
Ethylidenoxy(L)(2-n-propyl-4-(4'-tert.-butyl-phenyl)-indenyl)zirkoniumdichlorid
Ethylidenoxy(L)(2-n-butyl-4-(4'-tert.-butyl-phenyl)-indenyl)titandichlorid
Ethylidenoxy(L)(2-hexyl-4-(4'-tert.-butyl-phenyl)-indenyl)zirkoniumdibenzyl
Ethylidenoxy(L)(2-ethyl-4-(4'-tert.-butyl-phenyl)-indenyl)hafniumdibenzyl
Ethylidenoxy(L)(2-methyl-4-(4'-tert.-butyl-phenyl)-indenyl)titandibenzyl
Ethylidenoxy(L)(2-methyl-4-(4'-tert.-butyl-phenyl)-indenyl)zirkoniumdichlorid
Ethylidenoxy(L)(2-ethyl-4-(4'-tert.-butyl-phenyl)-indenyl)hafniumdimethyl
Ethylidenoxy(L)(2-n-propyl-4--phenyl)-indenyl)titandimethyl
Ethylidenoxy(L)(2-ethyl-4-(4'-tert.-butyl-phenyl)-indenyl)zirkonium(dimethylamid)
Ethylidenoxy(L)(2-ethyl-4-(4'-tert.-butyl-phenyl)-indenyl)hafnium(dimethylamid)
Ethylidenoxy(L)(2-ethyl-4-(4'-tert.-butyl-phenyl)-indenyl)titan(dimethylamid)
MethylEthylidenoxy(L)(2-ethyl-4-(4'-tert.-butyl-phenyl)-indenyl)zirkoniumdichlorid
MethylEthylidenoxy(L)(2-ethyl-4-(4'-tert.-butyl-phenyl)-indenyl)hafniumdichlorid
Phenylphosphandiyloxy(L)(2-ethyl-4-(4'-tert.-butyl-phenyl)-indenyl)zirkoniumdichlorid
Phenylphosphandiyloxy(L)(2-methyl-4-(4'-tert.-butyl-phenyl)-indenyl) zirkoniumdichlorid
Phenylphosphandiyloxy(L)(2-ethyl-4-(4'-tert.-butyl-phenyl)-indenyl) zirkoniumdichlorid
Dimethylsilanyloxy(L)(2-methyl-4-azapentalen)zirkoniumdichlorid
Dimethylsilanyloxy(L)(2-methyl-5-azapentalen) zirkoniumdichlorid
Dimethylsilanyloxy(L)(2-methyl-6-azapentalen) zirkoniumdichlorid
Dimethylsilanyloxy(L)(2-methyl-N-phenyl-4-azapentalen) zirkoniumdichlorid
Dimethylsilanyloxy(L)(2-methyl-N-phenyl-5-azapentalen) zirkoniumdichlorid
Dimethylsilanyloxy(L)(2-methyl-N-phenyl-6-azapentalen) zirkoniumdichlorid
Dimethylsilanyloxy(L)(2,5-dimethyl-4-azapentalen) zirkoniumdichlorid
Dimethylsilanyloxy(L)(2,5-dimethyl-6-azapentalen) zirkoniumdichlorid
Dimethylsilanyloxy(L)(2,5-dimethyl-N-phenyl-4-azapentalen) zirkoniumdichlorid
Dimethylsilanyloxy(L)(2,5-dimethyl-N-phenyl-6-azapentalen) zirkoniumdichlorid
Dimethylsilanyloxy(L)(2-methyl-4-thiapentalen)zirkoniumdichlorid
Dimethylsilanyloxy(L)(2-methyl-5-thiapentalen)zirkoniumdichlorid
Dimethylsilanyloxy(L)(2-methyl-6-thiapentalen)zirkoniumdichlorid
Dimethylsilanyloxy(L)(2,5-dimethyl-4-thiapentalen) zirkoniumdichlorid
Dimethylsilanyloxy(L)(2,5-dimethyl-6-thiapentalen) zirkoniumdichlorid
Dimethylsilanyloxy(L)(2-methyl-4-oxapentalen)zirkoniumdichlorid
Dimethylsilanyloxy(L)(2-methyl-5-oxapentalen)zirkoniumdichlorid
Dimethylsilanyloxy(L)(2-methyl-6-oxapentalen)zirkoniumdichlorid
Dimethylsilanyloxy(L)(2,5-dimethyl-4-oxapentalen)zirkoniumdichlorid
Dimethylsilanyloxy(L)(2,5-dimethyl-6-oxapentalen)zirkoniumdichlorid

Erläuternde, jedoch nicht einschränkende Beispiele für L sind:
(butylbenzyliden)-N-Phenyl-aminato, (butylbenzyliden)-(N-2,6 disopropylphenyl)-aminato, (butylbenzyliden-N-Cyclohexyl)-aminato, (butylbenzyliden)-N-Tolyl-aminato, (butylbenzyliden)-N-Isopropyl-aminato, (butylbenzyliden)-N-tert.-butyl-aminato, (butylbenzyliden)-N-Cyclopentyl-aminato, (butylbenzyliden)-N-Methyl-aminato, (butylbenzyliden)-N-ethyl-aminato, (butylbenzyliden)-N-(2, 4, 6 Trimethyl-phenyl)-aminato, (butylbenzyliden)-N-(4 tert.butyl-phenyl)-aminato, (buthylbenzyliden)-N-(2, 4, 6 Triphenyl-phenyl)-aminato, (butylbenzyliden)-N-(4 isopropyl-phenyl)-aminato, (butylbenzyliden)-N-(2, 6 Diimethyl-phenyl)-aminato, (butylbenzyliden)-N-(4- butylphenyl)-aminato, (butylbenzyliden)-N-(2, 6 Diphenyl-phenyl)-aminato, (butylbenzyliden)-N-(2, 4, 6 Tripropyl-phenyl)-aminato, (butylbenzyliden)-N-(2, 4, 6 Trifluoro-phenyl)-aminato, (butylbenzyliden)-N-(2, 3, 4, 5, 6 Pentafluoro-phenyl)-aminato, (butylbenzyliden)-N-(2, 3, 4, 5, 6 Pentachloro-phenyl)-aminato, (butylbenzyliden)-N-(2, 3, 4, 5, 6 Pentabromophenyl)-aminato, (butylbenzyliden)-N-(2, 4, 6 Trimethoxy-phenyl)-aminato, (butylbenzyliden)-N-(2, 5, 6 Trimethoxy-phenyl)-aminato, (butylbenzyliden)-N-(2, 6 Dimethoxy-phenyl)-aminato, (butylbenzyliden)-N-(2, 4, 6 Trichloro-phenyl)-aminato, (butylbenzyliden)-N-(2, 4, 6 Trimethsilyl-phenyl)-aminato, (butylbenzyliden)-N-(2, 4, 6 Trihydroxy-phenyl)-aminato, (butylbenzyliden)-N-(2, 4, 6 Trinitroso-phenyl)-aminato, (butylbenzyliden)-N-(2, 4, 6 Triisopropylphenyl)-aminato, (butylbenzyliden)-N-(2, 6 Diisopropyl-phenyl)-aminato, (butylbenzyliden)-N-(3,5 Diisopropyl-phenyl)-aminato, (butylbenzyliden)-N-(2, 6 Dicyanato-phenyl)-aminato,
(3, 5-Di-tert.butyl-butylbenzyliden)-N-Phenyl-aminato, (3, 5-Di-tert.butylbutylbenzyliden)-(N-2,6 disopropylphenyl)-aminato, (3, 5-Di-tert.butylbutylbenzyliden-N-Cyclohexyl)-aminato, (3, 5-Di-tert.butyl-butylbenzyliden)-N-Tolylaminato, (3, 5-Di-tert.butyl-butylbenzyliden)-N-lsopropyl-aminato, (3, 5-Di-tert.butylbutylbenzyliden)-N-tert.-butyl-aminato, (3, 5-Di-tert.butyl-butylbenzyliden)-N-Cyclopentyl-aminato, (3, 5-Di-tert.butyl-butylbenzyliden)-N-Methyl-aminato, (3, 5-Di-tert.butyl-butylbenzyliden)-N-ethyl-aminato, (3, 5-Di-tert.butyl-butylbenzyliden)-N-(2, 4, 6 Trimethyl-phenyl)-aminato, (3, 5-Di-tert.butyl-butylbenzyliden)-N-(4 tert.butylphenyl)-aminato, (3, 5-Di-tert.butyl-butylbenzyliden)-N-(2, 4, 6 Triphenyl-phenyl)-aminato, (3, 5-Di-tert.butyl-butylbenzyliden)-N-(4 isopropyl-phenyl)-aminato, (3, 5-Di-tert.butyl-butylbenzyliden)-N-(2, 6 Diimethyl-phenyl)-aminato, (3, 5-Di-tert.butyl-butylbenzyliden)-N-(4- butyl-phenyl)-aminato, (3, 5-Di-tert.butyl-butylbenzyliden)-N-(2, 6 Diphenyl-phenyl)-aminato, (3, 5-Di-tert.butyl-butylbenzyliden)-N-(2, 4, 6 Tripropyl-phenyl)-aminato, (3, 5-Di-tert.butyl-butylbenzyliden)-N-(2, 4, 6 Trifluorophenyl)-aminato, (3, 5-Di-tert.butyl-butylbenzyliden)-N-(2, 3, 4, 5, 6 Pentafluorophenyl)-aminato, (3, 5-Di-tert.butyl-butylbenzyliden)-N-(2, 3, 4, 5, 6 Pentachlorophenyl)-aminato, (3, 5-Di-tert.butyl-butylbenzyliden)-N-(2, 3, 4, 5, 6 Pentabromophenyl)-aminato, (3, 5-Di-tert.butyl-butylbenzyliden)-N-(2, 4, 6 Trimethoxy-phenyl)-aminato, (3, 5-Di-tert.butyl-butylbenzyliden)-N-(2, 5, 6 Trimethoxy-phenyl)-aminato, (3, 5-Di-tert.butyl-butylbenzyliden)-N-(2, 6 Dimethoxyphenyl)-aminato, (3, 5-Di-tert.butyl-butylbenzyliden)-N-(2, 4, 6 Trichloro-phenyl)-aminato, (3, 5-Di-tert.butyl-butylbenzyliden)-N-(2, 4, 6 Trimethsilyl-phenyl)-aminato, (3, 5-Di-tert.butyl-butylbenzyliden)-N-(2, 4, 6 Trihydroxy-phenyl)-aminato, (3, 5-Di-tert.butyl-butylbenzyliden)-N-(2, 4, 6 Trinitroso-phenyl)-aminato, (3, 5-Di-tert.butylbutylbenzyliden)-N-(2, 4, 6 Triisopropyl-phenyl)-aminato, (3, 5-Di-tert.butylbutylbenzyliden)-N-(2, 6 Diisopropyl-phenyl)-aminato, (3, 5-Di-tert.butylbutylbenzyliden)-N-(3,5 Diisopropyl-phenyl)-aminato, (3, 5-Di-tert.butylbutylbenzyliden)-N-(2, 6 Dicyanato-phenyl)-aminato,
(3, 5-Diisopropyl-butylbenzyliden)-N-Phenyl-aminato, (3, 5-Diisopropylbutylbenzyliden)-(N-2,6 disopropylphenyl)-aminato, (3, 5-Diisopropyl-butylbenzyliden-N-Cyclohexyl)-aminato, (3, 5-Diisopropyl-butylbenzyliden)-N-Tolyl-aminato, (3, 5-Diisopropyl-butylbenzyliden)-N-Isopropyl-aminato, (3, 5-Diisopropyl-butylbenzyliden)-N-tert.-butyl-aminato, (3, 5-Diisopropyl-butylbenzyliden)-N-Cyclopentyl-aminato, (3, 5-Diisopropyl-butylbenzyliden)-N-Methyl-aminato, (3, 5-Diisopropyl-butylbenzyliden)-N-ethyl-aminato, (3, 5-Diisopropyl-butylbenzyliden)-N-(2, 4, 6 Trimethyl-phenyl)-aminato, (3, 5-Diisopropyl-butylbenzyliden)-N-(4 tert.butyl-phenyl)-aminato, (3, 5-Diisopropyl-butylbenzyliden)-N-(2, 4, 6 Triphenyl-phenyl)-aminato, (3, 5-Diisopropylbutylbenzyliden)-N-(4 isopropyl-phenyl)-aminato, (3, 5-Diisopropyl-butylbenzyliden)-N-(2, 6 Diimethyl-phenyl)-aminato, (3, 5-Diisopropyl-butylbenzyliden)-N-(4- butylphenyl)-aminato, (3, 5-Diisopropyl-butylbenzyliden)-N-(2, 6 Diphenyl-phenyl)-aminato, (3, 5-Diisopropyl-butylbenzyliden)-N-(2, 4, 6 Tripropyl-phenyl)-aminato, (3, 5-Diisopropyl-butylbenzyliden)-N-(2, 4, 6 Trifluoro-phenyl)-aminato, (3, 5-Diisopropylbutylbenzyliden)-N-(2, 3, 4, 5, 6 Pentafluoro-phenyl)-aminato, (3, 5-Diisopropylbutylbenzyliden)-N-(2, 3, 4, 5, 6 Pentachloro-phenyl)-aminato, (3, 5-Diisopropylbutylbenzyliden)-N-(2, 3, 4, 5, 6 Pentabromophenyl)-aminato, (3, 5-Diisopropylbutylbenzyliden)-N-(2, 4, 6 Trimethoxy-phenyl)-aminato, (3, 5-Diisopropylbutylbenzyliden)-N-(2, 5, 6 Trimethoxy-phenyl)-aminato, (3, 5-Diisopropylbutylbenzyliden)-N-(2, 6 Dimethoxy-phenyl)-aminato, (3, 5-Diisopropylbutylbenzyliden)-N-(2, 4, 6 Trichloro-phenyl)-aminato, (3, 5-Diisopropylbutylbenzyliden)-N-(2, 4, 6 Trimethsilyl-phenyl)-aminato, (3, 5-Diisopropylbutylbenzyliden)-N-(2, 4, 6 Trihydroxy-phenyl)-aminato, (3, 5-Diisopropylbutylbenzyliden)-N-(2, 4, 6 Trinitroso-phenyl)-aminato, (3, 5-Diisopropylbutylbenzyliden)-N-(2, 4, 6 Triisopropyl-phenyl)-aminato, (3, 5-Diisopropylbutylbenzyliden)-N-(2, 6 Diisopropyl-phenyl)-aminato, (3, 5-Diisopropylbutylbenzyliden)-N-(3,5 Diisopropyl-phenyl)-aminato, (3, 5-Diisopropylbutylbenzyliden)-N-(2, 6 Dicyanato-phenyl)-aminato,
(3, 5-Dimethyl-butylbenzyliden)-N-Phenyl-aminato, (3, 5-Dimethyl-butylbenzyliden)-(N-2,6 disopropylphenyl)-aminato, (3, 5-Dimethyl-butylbenzyliden-N-Cyclohexyl)-aminato, (3, 5-Dimethyl-butylbenzyliden)-N-Tolyl-aminato, (3, 5-Dimethylbutylbenzyliden)-N-Isopropyl-aminato, (3, 5-Dimethyl-butylbenzyliden)-N-tert.-butylaminato, (3, 5-Dimethyl-butylbenzyliden)-N-Cyclopentyl-aminato, (3, 5-Dimethylbutylbenzyliden)-N-Methyl-aminato, (3, 5-Dimethyl-butylbenzyliden)-N-ethyl-aminato, (3, 5-Dimethyl-butylbenzyliden)-N-(2, 4, 6 Trimethyl-phenyl)-aminato, (3, 5-Dimethylbutylbenzyliden)-N-(4 tert.butyl-phenyl)-aminato, (3, 5-Dimethyl-butylbenzyliden)-N-(2, 4, 6 Triphenyl-phenyl)-aminato, (3, 5-Dimethyl-butylbenzyliden)-N-(4 isopropylphenyl)-aminato, (3, 5-Dimethyl-butylbenzyliden)-N-(2, 6 Diimethyl-phenyl)-aminato, (3, 5-Dimethyl-butylbenzyliden)-N-(4- butyl-phenyl)-aminato, (3, 5-Dimethylbutylbenzyliden)-N-(2, 6 Diphenyl-phenyl)-aminato, (3, 5-Dimethyl-butylbenzyliden)-N-(2, 4, 6 Tripropyl-phenyl)-aminato, (3, 5-Dimethyl-butylbenzyliden)-N-(2, 4, 6 Trifluoro-phenyl)-aminato, (3, 5-Dimethyl-butylbenzyliden)-N-(2, 3, 4, 5, 6 Pentafluoro-phenyl)-aminato, (3, 5-Dimethyl-butylbenzyliden)-N-(2, 3, 4, 5, 6 Pentachloro-phenyl)-aminato, (3, 5-Dimethyl-butylbenzyliden)-N-(2, 3, 4, 5, 6 Pentabromophenyl)-aminato, (3, 5-Dimethyl-butylbenzyliden)-N-(2, 4, 6 Trimethoxyphenyl)-aminato, (3, 5-Dimethyl-butylbenzyliden)-N-(2, 5, 6 Trimethoxy-phenyl)-aminato, (3, 5-Dimethyl-butylbenzyliden)-N-(2, 6 Dimethoxy-phenyl)-aminato, (3, 5-Dimethyl-butylbenzyliden)-N-(2, 4, 6 Trichloro-phenyl)-aminato, (3, 5-Dimethylbutylbenzyliden)-N-(2, 4, 6 Trimethsilyl-phenyl)-aminato, (3, 5-Dimethylbutylbenzyliden)-N-(2, 4, 6 Trihydroxy-phenyl)-aminato, (3, 5-Dimethylbutylbenzyliden)-N-(2, 4, 6 Trinitroso-phenyl)-aminato, (3, 5-Dimethylbutylbenzyliden)-N-(2, 4, 6 Triisopropyl-phenyl)-aminato, (3, 5-Dimethylbutylbenzyliden)-N-(2, 6 Dimethy-phenyl)-aminato, (3, 5-Dimethyl-butylbenzyliden)-N-(3,5 Dimethy-phenyl)-aminato, (3, 5-Dimethyl-butylbenzyliden)-N-(2, 6 Dicyanatophenyl)-aminato, (4, 5-Diisopropyl-butylbenzyliden)-N-Phenyl-aminato, (4, 5-Diisopropylbutylbenzyliden)-(N-2,6 disopropylphenyl)-aminato, (4, 5-Diisopropyl-butylbenzyliden-N-Cyclohexyl)-aminato, (3, 5-Diisopropyl-butylbenzyliden)-N-Tolyl-aminato, (4, 5-Diisopropyl-butylbenzyliden)-N-Isopropyl-aminato, (4, 5-Diisopropyl-butylbenzyliden)-N-tert.-butyl-aminato, (4, 5-Diisopropyl-butylbenzyliden)-N-Cyclopentyl-aminato, (4, 5-Diisopropyl-butylbenzyliden)-N-Methyl-aminato, (4, 5-Diisopropyl-butylbenzyliden)-N-ethyl-aminato, (4, 5-Diisopropyl-butylbenzyliden)-N-(2, 4, 6 Trimethyl-phenyl)-aminato, (4, 5-Diisopropyl-butylbenzyliden)-N-(4 tert.butyl-phenyl)-aminato, (4, 5-Diisopropyl-butylbenzyliden)-N-(2, 4, 6 Triphenyl-phenyl)-aminato, (4, 5-Diisopropylbutylbenzyliden)-N-(4 isopropyl-phenyl)-aminato, (4, 5-Diisopropyl-butylbenzyliden)-N-(2, 6 Diimethyl-phenyl)-aminato, (4, 5-Diisopropyl-butylbenzyliden)-N-(4- butylphenyl)-aminato, (4, 5-Diisopropyl-butylbenzyliden)-N-(2, 6 Diphenyl-phenyl)-aminato, (4, 5-Diisopropyl-butylbenzyliden)-N-(2, 4, 6 Tripropyl-phenyl)-aminato, (4, 5-Diisopropyl-butylbenzyliden)-N-(2, 4, 6 Trifluoro-phenyl)-aminato, (4, 5-Diisopropylbutylbenzyliden)-N-(2, 3, 4, 5, 6 Pentafluoro-phenyl)-aminato, (4, 5-Diisopropylbutylbenzyliden)-N-(2, 3, 4, 5, 6 Pentachloro-phenyl)-aminato, (4, 5-Diisopropylbutylbenzyliden)-N-(2, 3, 4, 5, 6 Pentabromophenyl)-aminato, (4, 5-Diisopropylbutylbenzyliden)-N-(2, 4, 6 Trimethoxy-phenyl)-aminato, (4, 5-Diisopropylbutylbenzyliden)-N-(2, 5, 6 Trimethoxy-phenyl)-aminato, (4, 5-Diisopropylbutylbenzyliden)-N-(2, 6 Dimethoxy-phenyl)-aminato, (4, 5-Diisopropylbutylbenzyliden)-N-(2, 4, 6 Trichloro-phenyl)-aminato, (4, 5-Diisopropylbutylbenzyliden)-N-(2, 4, 6 Trimethsilyl-phenyl)-aminato, (4, 5-Diisopropylbutylbenzyliden)-N-(2, 4, 6 Trihydroxy-phenyl)-aminato, (4, 5-Diisopropylbutylbenzyliden)-N-(2, 4, 6 Trinitroso-phenyl)-aminato, (4, 5-Diisopropylbutylbenzyliden)-N-(2, 4, 6 Triisopropyl-phenyl)-aminato, (4, 5-Diisopropylbutylbenzyliden)-N-(2, 6 Diisopropyl-phenyl)-aminato, (4, 5-Diisopropylbutylbenzyliden)-N-(3,5 Diisopropyl-phenyl)-aminato, (4, 5-Diisopropylbutylbenzyliden)-N-(2, 6 Dicyanato-phenyl)-aminato,
(4, 5- Di-tert.butyl -butylbenzyliden)-N-Phenyl-aminato, (4, 5- Di-tert.butylbutylbenzyliden)-(N-2,6 disopropylphenyl)-aminato, (4, 5- Di-tert.butyl - butylbenzyliden-N-Cyclohexyl)-aminato, (3, 5- Di-tert.butyl -butylbenzyliden)-N-Tolylaminato, (4, 5- Di-tert.butyl -butylbenzyliden)-N-Isopropyl-aminato, (4, 5- Di-tert.butyl -butylbenzyliden)-N-tert.-butyl-aminato, (4, 5- Di-tert.butyl -butylbenzyliden)-N-Cyclopentyl-aminato, (4, 5- Di-tert.butyl -butylbenzyliden)-N-Methyl-aminato, (4, 5-Di-tert.butyl -butylbenzyliden)-N-ethyl-aminato, (4, 5- Di-tert.butyl -butylbenzyliden)-N-(2, 4, 6 Trimethyl-phenyl)-aminato, (4, 5- Di-tert.butyl -butylbenzyliden)-N-(4 tert.butyl-phenyl)-aminato, (4, 5- Di-tert.butyl -butylbenzyliden)-N-(2, 4, 6 Triphenylphenyl)-aminato, (4, 5- Di-tert.butyl-butylbenzyliden)-N-(4 isopropyl-phenyl)-aminato, (4, 5- Di-tert.butyl -butylbenzyliden)-N-(2, 6 Diimethyl-phenyl)-aminato, (4, 5- Di-tert.butyl -butylbenzyliden)-N-(4- butyl-phenyl)-aminato, (4, 5- Di-tert.butyl - butylbenzyliden)-N-(2, 6 Diphenyl-phenyl)-aminato, (4, 5- Di-tert.butyl - butylbenzyliden)-N-(2, 4, 6 Tripropyl-phenyl)-aminato, (4, 5- Di-tert.butyl - butylbenzyliden)-N-(2, 4, 6 Trifluoro-phenyl)-aminato, (4, 5- Di-tert.butyl - butylbenzyliden)-N-(2, 3, 4, 5, 6 Pentafluoro-phenyl)-aminato, (4, 5- Di-tert.butyl - butylbenzyliden)-N-(2, 3, 4, 5, 6 Pentachloro-phenyl)-aminato, (4, 5- Di-tert.butyl - butylbenzyliden)-N-(2, 3, 4, 5, 6 Pentabromophenyl)-aminato, (4, 5- Di-tert.butyl - butylbenzyliden)-N-(2, 4, 6 Trimethoxy-phenyl)-aminato, (4, 5- Di-tert.butyl - butylbenzyliden)-N-(2, 5, 6 Trimethoxy-phenyl)-aminato, (4, 5- Di-tert.butyl - butylbenzyliden)-N-(2, 6 Dimethoxy-phenyl)-aminato, (4, 5- Di-tert.butyl - butylbenzyliden)-N-(2, 4, 6 Trichloro-phenyl)-aminato, (4, 5- Di-tert.butyl - butylbenzyliden)-N-(2, 4, 6 Trimethsilyl-phenyl)-aminato, (4, 5- Di-tert.butyl - butylbenzyliden)-N-(2, 4, 6 Trihydroxy-phenyl)-aminato, (4, 5- Di-tert.butyl - butylbenzyliden)-N-(2, 4, 6 Trinitroso-phenyl)-aminato, (4, 5- Di-tert.butyl - butylbenzyliden)-N-(2, 4, 6 Triisopropyl-phenyl)-aminato, (4, 5- Di-tert.butyl - butylbenzyliden)-N-(2, 6 Diisopropyl-phenyl)-aminato, (4, 5- Di-tert.butyl - butylbenzyliden)-N-(3,5 Diisopropyl-phenyl)-aminato, (4, 5- Di-tert.butyl - butylbenzyliden)-N-(2, 6 Dicyanato-phenyl)-aminato,

Des weiteren sind die Metallorganischeverbindungene, bei denen das Zirkoniumfragment "-zirkonium-dichlorid" die Bedeutungen
Zirkonium-monochloro-mono-(2,4-di-tert.-butyl-phenolat)
Zirkonium-monochloro-mono-(2,6-di-tert.-butyl-phenolat)
Zirkonium-monochloro-mono-(3,5-di-tert.-butyl-phenolat)
Zirkonium-monochloro-mono-(2,6-di-sec.-butyl-phenolat)
Zirkonium-monochloro-mono-(2,4-di-methylphenolat)
Zirkonium-monochloro-mono-(2,3-di-methylphenolat)
Zirkonium-monochloro-mono-(2,5-di-methylphenolat)
Zirkonium-monochloro-mono-(2,6-di-methylphenolat)
Zirkonium-monochloro-mono-(3,4-di-methylphenolat)
Zirkonium-monochloro-mono-(3,5-di-methylphenolat)
Zirkonium-monochloro-monophenolat
Zirkonium-monochloro-mono-(2-methylphenolat)
Zirkonium-monochloro-mono-(3-methylphenolat)
Zirkonium-monochloro-mono-(4-methylphenolat)
Zirkonium-monochloro-mono-(2-ethylphenolat)
Zirkonium-monochloro-mono-(3-ethylphenolat)
Zirkonium-monochloro-mono-(4-ethylphenolat)
Zirkonium-monochloro-mono-(2-sec.-butylphenolat)
Zirkonium-monochloro-mono-(2-tert.-butylphenolat)
Zirkonium-monochloro-mono-(3-tert.-butylphenolat)
Zirkonium-monochloro-mono-(4-sec.-butylphenolat)
Zirkonium-monochloro-mono-(4-tert.-butylphenolat)
Zirkonium-monochloro-mono-(2-isopropyl-5-methylphenolat)
Zirkonium-monochloro-mono-(4-isopropyl-3-methylphenolat)
Zirkonium-monochloro-mono-(5-isopropyl-2-methylphenolat)
Zirkonium-monochloro-mono-(5-isopropyl-3-methylphenolat)
Zirkonium-monochloro-mono-(2,4-bis-(2-methyl-2-butyl)-phenolat)
Zirkonium-monochloro-mono-(2,6-di-tert.-butyl-4-methyl-phenolat)
Zirkonium-monochloro-mono-(4-nonylphenolat)
Zirkonium-monochloro-mono-(1-naphtholat)
Zirkonium-monochloro-mono-(2-naphtholat)
Zirkonium-monochloro-mono-(2-phenylphenolat)
Zirkonium-monochloro-mono-(tert. butoxid)
Zirkonium-monochloro-mono-(N-methylanilid)
Zirkonium-monochloro-mono-(2-tert.-butylanilid)
Zirkonium-monochloro-mono-(tert.-butylamid)
Zirkonium-monochloro-mono-(di-iso.-propylamid)
Zirkonium-monochloro-mono-methyl
Zirkonium-monochloro-mono-benzyl

Die vorliegende Erfindung betrifft außerdem ein Verfahren zur Herstellung der erfindungsgemäßen chemische Verbindung der Formel VII.

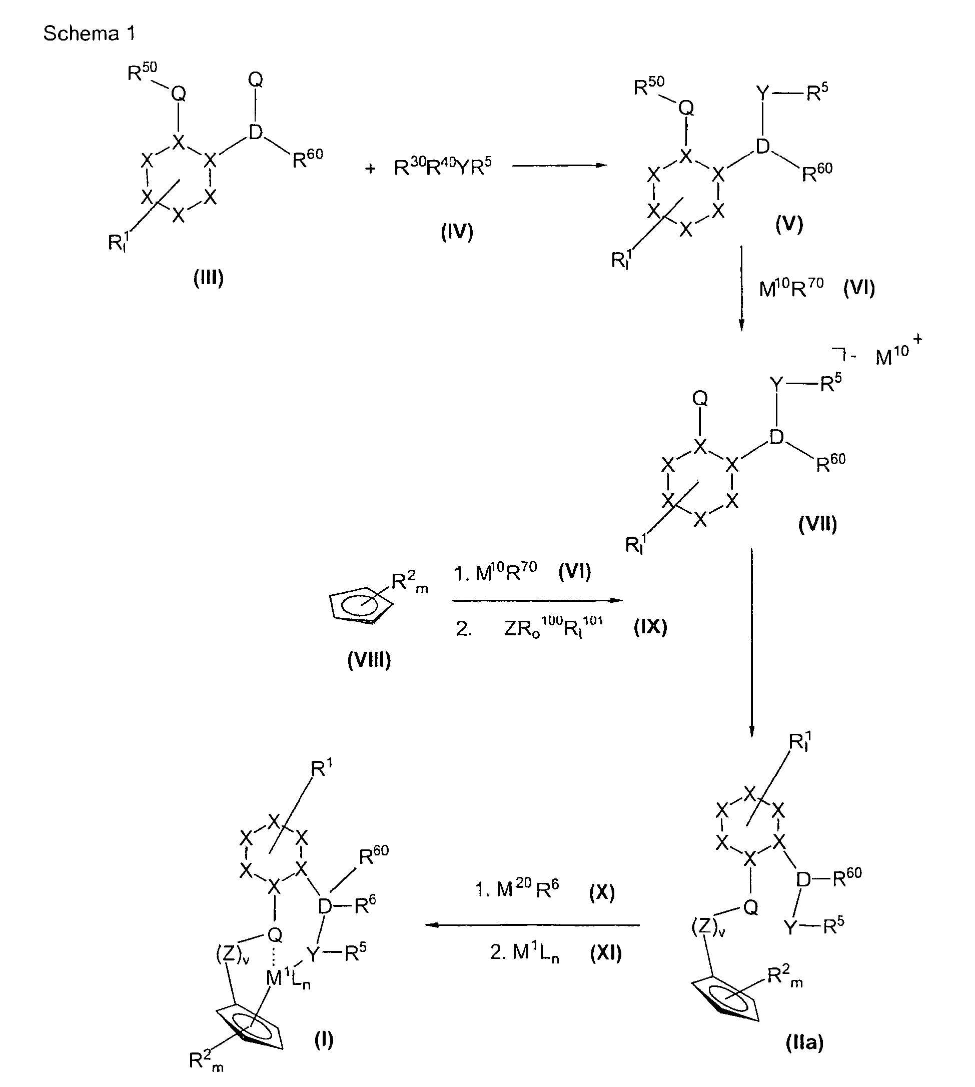

Hierin haben M¹, R², R³, R⁵, R⁶, R⁶⁰, Z, L, m, n, v, X, D, Y die oben stehende Bedeutung. Außerdem bedeuten:
- R³⁰, R⁴⁰, R⁵⁰,: gleich oder verschieden sind und ein Wasserstoffatom oder eine C₁₋C₁₂-Alkylgruppe, bevorzugt ein Wasserstoffatom,
- M¹⁰, M²⁰: ein Element der I. und II. Hauptgruppe des Periodensystems der Elemente, bevorzugt Lithium, Natrium, Kalium und Magnesium, ganz besonders bevorzugt Lithium und Natrium
- R⁷⁰: ein Wasserstoffatom, eine C₁-C₂₀ - kohlenstoffhaltige Gruppe, bevorzugt ein Wasserstoffatom, C₁-C₁₈-Alkyl, wie Methyl, Ethyl, n-Butyl, n-Hexyl, tert.-Butyl, sec.-Butyl, besonders bevorzugt Methyl, n-Butyl, sec.-Butyl,
- t, o: eine ganze Zahl von 1 bis 4, bevorzugt 2 ist,
- R¹⁰⁰, R¹⁰¹: ein Halogenatom, insbesondere Chlor ist, Alkylgruppen C₁-C₁₈₋Alkylgruppe, insbesondere Methyl, Ethyl, tert.-Butyl ist.

Hierzu wird eine oder mehrere Verbindungen der Formel (III) die in einem Lösemittel gelöst oder suspendiert sein aber auch in Substanz vorliegen, kann mit einer oder mehren Verbindungen der Formel (IV), die ebenfalls in einem Lösemittel gelöst oder suspendiert sein aber auch in Substanz vorliegen können, umgesetzt. Als Lösemittel dienen aliphatische oder aromatische Kohlenwasserstoffe wie n-Pentan, Isopentan, n-Hexan, n-Heptan, Cyclohexan, Isododekan, n-Octan, n-Nonan, n-Decan, Petrolether, Toluol, Benzol, o-Xylol, m-Xylol, p-Xylol, 1,2,3-Trimethylbenzol, 1,2,4-Trimethylbenzol, 1,2,5-Trimethylbenzol, 1,3,5-Trimethylbenzol, Ethylbenzol, Propylbenzol etc. sowie Ether, wie Diethylether, Methyl-tert-butylether, Dimethoxyethan, Diisopropylether, Di-n-butylether, Anisol, Methanol, Ethanol, Isopropanol und Butanol oder Mischungen von diesen. Die Zugabe kann über einen Zeitraum von 1 Minute bis zu 96 Stunden erfolgen. Bevorzugt ist eine Zugabe innerhalb von 100 Minuten bis zu 36 Stunden. Die Temperatur der Vorlage liegt bei der Zugabe zwischen -100°C und 200°C. Bevorzugt sind Temperaturen zwischen -80°C und 150°C. Besonders bevorzugt sind Temperaturen zwischen 20°C und 150°C. Die Temperatur wird so gewählt, daß zumindest ein Reaktionspartner in flüssiger Phase vorliegen. Die anschließende Reaktionstemperatur liegt in einem bevorzugten Temperaturbereich zwischen 20 °C und 150°C. Desweiteren kann die Umsetzung bei Normaldruck durchgeführt, sie kann jedoch auch bei erhöhtem Druck durchgeführt werden, was jedoch entsprechende Reaktoren voraussetzt. Das stöchiometrische Verhältnis in dem Verbindungen der Formel (III) und (IV) zusammengegeben werden, liegt zwischen 1 : 1000 und 1 : 0.01, bezogen auf eingesetzte Menge der Verbindungen der Formel (III). Bevorzugt ist ein stöchiometrisches Verhältnis zwischen Verbindungen der Formel (III) und (IV) zu eingesetzter Menge gemäß Formel (III), zwischen 1 :100 und 1 : 0.1. Besonders bevorzugt ist eine stöchiometrische Umsetzung bezogen auf die Verbindungen der Formel (III) und (IV).

Erläuternde, jedoch nicht einschränkende Beispiele für die erfindungsgemäßen Verbindungen der Formel (III) sind:
3,5 Ditert-butyl 2-hydroxybenzaldehyd, 1-{3, 5-Di(tert-butyl)-2-hydroxyphenyl} ethan1-on, 2 Hydroxybenzophenon, 2-hydroxybenzaldehyd, 1-{-2-Hydroxyphenyl} ethan1-on, 3,5 Diisopropyl- 2-hydroxybenzaldehyd, 3,5 Ditrimethylsilyl-2-hydroxybenzaldehyd, 3,5 Dimethyl 2-hydroxybenzaldehyd, 3,5 Diethyl 2-hydroxybenzaldehyd, 3,5 Di n-propyl 2-hydroxybenzaldehyd, 3,5 Di-n-butyl 2-hydroxybenzaldehyd, 3,5 Di-phenyl 2-hydroxybenzaldehyd, 3,5 Ditolyl 2-hydroxybenzaldehyd, 3,5 Di-naphtyl 2-hydroxybenzaldehyd, 3,5 Diadamanthyl- 2-hydroxybenzaldehyd, 3,5 Dinorbornyl 2-hydroxybenzaldehyd, 3,5 Di-fluoro 2-hydroxybenzaldehyd, 3,5 Di-Chloro 2-hydroxybenzaldehyd,
4,6 Diisopropyl- 2-hydroxybenzaldehyd, 4,6 Ditrimethylsilyl-2-hydroxybenzaldehyd, 4,6 Dimethyl 2-hydroxybenzaldehyd, 4,6 Diethyl 2-hydroxybenzaldehyd, 4,6 Di n-propyl 2-hydroxybenzaldehyd, 4,6 Di-n-butyl 2-hydroxybenzaldehyd, 4,6 Di-phenyl 2-hydroxybenzaldehyd, 4,6 Ditolyl 2-hydroxybenzaldehyd, 4,6 Di-naphtyl 2-hydroxybenzaldehyd, 4,6 Diadamanthyl- 2-hydroxybenzaldehyd, 4,6 Dinorbornyl 2-hydroxybenzaldehyd, 4,6 Di-fluoro 2-hydroxybenzaldehyd, 4,6 Di-Chloro 2-hydroxybenzaldehyd,
3,6 Diisopropyl- 2-hydroxybenzaldehyd, 3,6 Ditrimethylsilyl-2-hydroxybenzaldehyd, 3,6 Dimethyl 2-hydroxybenzaldehyd, 3,6 Diethyl 2-hydroxybenzaldehyd, 3,6 Di n-propyl 2-hydroxybenzaldehyd, 3,6 Di-n-butyl 2-hydroxybenzaldehyd, 3,6 Di-phenyl 2-hydroxybenzaldehyd, 3,6 Ditolyl 2-hydroxybenzaldehyd, 3,6 Di-naphtyl 2-hydroxybenzaldehyd, 3,6 Diadamanthyl- 2-hydroxybenzaldehyd, 3,6 Dinorbornyl 2-hydroxybenzaldehyd, 3,6 Di-fluoro 2-hydroxybenzaldehyd, 3,6 Di-Chloro 2-hydroxybenzaldehyd, 4-isopropyl- 2-hydroxybenzaldehyd, 4-trimethylsilyl-2-hydroxybenzaldehyd, 4-methyl 2-hydroxybenzaldehyd, 4-ethyl 2-hydroxybenzaldehyd, 4- n-propyl 2-hydroxybenzaldehyd, 4 -n-butyl 2-hydroxybenzaldehyd, 4 -phenyl 2-hydroxybenzaldehyd, 4-tolyl 2-hydroxybenzaldehyd, 4-naphtyl 2-hydroxybenzaldehyd, 4-adamanthyl- 2-hydroxybenzaldehyd, 4-norbornyl 2-hydroxybenzaldehyd, 4- fluoro 2-hydroxybenzaldehyd, 4-Chloro 2-hydroxybenzaldehyd, 4-isopropyl- 2-hydroxybenzaldehyd, 3-trimethylsilyl-2-hydroxybenzaldehyd, 3-methyl 2-hydroxybenzaldehyd, 3-ethyl 2-hydroxybenzaldehyd, 3- n-propyl 2-hydroxybenzaldehyd, 3 -n-butyl 2-hydroxybenzaldehyd, 3 -phenyl 2-hydroxybenzaldehyd, 3-tolyl 2-hydroxybenzaldehyd, 3-naphtyl 2-hydroxybenzaldehyd, 3-adamanthyl- 2-hydroxybenzaldehyd, 3-norbornyl 2-hydroxybenzaldehyd, 3- fluoro 2-hydroxybenzaldehyd, 3-Chloro 2-hydroxybenzaldehyd, 5-isopropyl- 2-hydroxybenzaldehyd, 5-trimethylsilyl-2-hydroxybenzaldehyd, 5-methyl 2-hydroxybenzaldehyd, 5-ethyl 2-hydroxybenzaldehyd, 5- n-propyl 2-hydroxybenzaldehyd, 5 -n-butyl 2-hydroxybenzaldehyd, 5 -phenyl 2-hydroxybenzaldehyd, 5-tolyl 2-hydroxybenzaldehyd, 5-naphtyl 2-hydroxybenzaldehyd, 5-adamanthyl- 2-hydroxybenzaldehyd, 5-norbornyl 2-hydroxybenzaldehyd, 5- fluoro 2-hydroxybenzaldehyd,5-Chloro 2-hydroxybenzaldehyd, 4-isopropyl- 2-hydroxybenzaldehyd, 6-trimethylsilyl-2-hydroxybenzaldehyd, 6-methyl 2-hydroxybenzaldehyd, 6-ethyl 2-hydroxybenzaldehyd, 6- n-propyl 2-hydroxybenzaldehyd, 6 -n-butyl 2-hydroxybenzaldehyd, 6 -phenyl 2-hydroxybenzaldehyd, 6-tolyl 2-hydroxybenzaldehyd, 6-naphtyl 2-hydroxybenzaldehyd, 6-adamanthyl- 2-hydroxybenzaldehyd, 6-norbornyl 2-hydroxybenzaldehyd, 6- fluoro 2-hydroxybenzaldehyd, 6-Chloro 2-hydroxybenzaldehyd, 3, 4, 5, 6- tetrafluoro 2-hydroxybenzaldehyd, 3, 4, 5, 6-tetrachloro- 2-hydroxybenzaldehyd, 3, 5, 6- trifluoro 2-hydroxybenzaldehyd, 3, 5, 6-trichloro 2-hydroxybenzaldehyd, 1-{3, 5-Di(tert-butyl)-2-Hydoxyphenyl} propan1-on, 1-{3, 5-Di(tert-butyl)-2-Hydoxyphenyl} pentan1-on, 1-{3, 5-Di(tert-butyl)-2-Hydoxyphenyl} hexan1-on, 1-(2-Hydoxyphenyl)- propan1-on, 1-(2-Hydoxyphenyl) pentan1-on, 1-(-2-Hydoxyphenyl) hexan1-on, 1-{3, 5-Di(tert-butyl)-2-Hydoxyphenyl} pyridino-1-on,

Erläuternde, jedoch nicht einschränkende Beispiele für die erfindungsgemäßen Verbindungen der Formel (IV) sind:
Cyclohexylamin, Isopropylamin, Benzylamin, p-Toluidinamin, Methylamin, Propylamin, Cyclopentylamin, Cycloheptenylamin, Cyclooctanylamin, Nonanoylamin, Ethylamin, Butylamin, tert.-Butylamin, Phenylamin, Isobutylamin, Pentylamin, Hexylamin, Octylamin, Heptylamin, Xylylamin, Naphtylamin, sek.-Butylamin, Adamanthylamin, Norbonylamin, Pentafluorohenylamin, Pentachloroamin, Pyridinamin, Pryrolidinamin,

Im nächsten Schritt können eine oder mehrere Verbindung der Formel (V) in einem Reaktionsgefäß vorgelegt werden. Die Verbindungen können entweder in einem Lösemittel gelöst oder suspendiert sein, oder aber auch in Substanz vorliegen. Als Lösemittel dienen aliphatische oder aromatische Kohlenwasserstoffe wie n-Pentan, Isopentan, n-Hexan, n-Heptan, Cyclohexan, Isododekan, n-Octan, n-Nonan, n-Decan, Petrolether, Toluol, Benzol, o-Xylol, m-Xylol, p-Xylol, 1,2,3-Trimethylbenzol, 1,2,4-Trimethylbenzol, 1,2,5-Trimethylbenzol, 1,3,5-Trimethylbenzol, Ethylbenzol, Propylbenzol etc. sowie Ether, wie Diethylether, Methyl-tert-butylether, Dimethoxyethan, Diisopropylether, Di-n-butylether, Anisol , Methanol, Ethanol, Isopropanol und Butanol oder Mischungen von diesen. Die Vorlage erfolgt bei Temperaturen zwischen -100°C und 300°C, bevorzugt zwischen -80°C und 200°C, insbesondere bevorzugt bei Temperaturen zwischen 20°C und 150°C. Die Verbindung der Formel (V) sollte vorteilhafterweise in flüssiger Phase vorliegen.

Anschließend kann die Zugabe einer oder mehrerer Verbindungen der Formel (VI) erfolgen. Diese können ebenfalls in einem Lösemittel gelöst oder suspendiert sein aber auch in Substanz vorliegen. Als Lösemittel dienen die bereits oben beschriebenen, vorzugsweise wird das gleiche Lösemittel verwendet. Die Zugabe kann über einen Zeitraum von 1 Minute bis zu 96 Stunden erfolgen. Bevorzugt ist eine Zugabe innerhalb von 10 Minuten bis zu 16 Stunden. Die Temperatur der Vorlage liegt bei der Zugabe zwischen -100°C und 200°C. Bevorzugt sind Temperaturen zwischen -80°C und 150°C. Besonders bevorzugt sind Temperaturen zwischen 20°C und 150°C. Die Temperatur wird so gewählt, daß zumindest ein Reaktionspartner in flüssiger Phase vorliegen. Die anschließende Reaktionstemperatur liegt in einem bevorzugten Temperaturbereich zwischen 20 °C und 150°C. Desweiteren kann die Umsetzung bei Normaldruck durchgeführt, sie kann jedoch auch bei erhöhtem Druck durchgeführt werden, was jedoch entsprechende Reaktoren voraussetzt. Das stöchiometrische Verhältnis in dem Verbindungen der Formel (V) und (VI) zusammengegeben werden, bezogen auf eingesetzter Menge M¹⁰ der Verbindungen der Formel (VI), liegt zwischen 1 : 1000 und 1 : 0.01. Bevorzugt ist ein stöchiometrisches Verhältnis zwischen Verbindungen der Formel (V) und (VI) zu eingesetzter Menge M¹⁰, gemäß Formel (VI), zwischen 1 :100 und 1 : 0.1. Besonders bevorzugt ist eine stöchiometrische Umsetzung bezogen auf die Verbindungen der Formel (V) und (VI). Es resultiert eine Verbindung der Formel (VII).

Erläuternde, jedoch nicht einschränkende Beispiele für die erfindungsgemäßen Verbindungen der Formel VI sind:
Lithiumdiisopropylamid, Lithiumdimethylamid, Lithiumdiethylamid, Lithiumdiphenylamid, Lithiumdicyclohexylamid, Lithiumdibenzylamid, Lithiumisopropylmethylamid, Lithiumdibutylamid, Lithiumditert.butylamid, Lithiumditolylamid, Lithiumdicyclopentylamid, Lithiumdibutylamid, Lithiummethylethylamid, Lithiumethylbutylamid, Natriumdiisopropylamid, Natriumdimethylamid, Natriumdiethylamid, Natriumdiphenylamid, Natriumdicyclohexylamid, Natriumdibenzylamid, Natriumisopropylmethylamid, Natriumdibutylamid, Natriumditert.butylamid, Natriumditolylamid, Natriumdicyclopentylamid, Natriumdibutylamid, Natriummethylethylamid, Natriumethylbutylamid, Kaliumdiisopropylamid, Kaliumdimethylamid, Kaliumdiethylamid, Kaliumdiphenylamid, Kaliumdicyclohexylamid, Kaliumdibenzylamid, Kaliumisopropylmethylamid, Kaliumdibutylamid, Kaliumditert.-butylamid, Kaliumditolylamid, Kaliumdicyclopentylamid, Kaliumdibutylamid, Kaliummethylethylamid und/oder Kaliummethylbutylamid. Butyllithium, Natriumhydrid, Butylnatrium, Dibutylmagnesium, sek.-Butyllithium

Im nächsten Schritt können eine oder mehrere Verbindung der Formel (VIII) in einem Reaktionsgefäß vorgelegt werden. Die Verbindungen können entweder in einem Lösemittel gelöst oder suspendiert sein oder aber auch in Substanz vorliegen. Als Lösemittel dienen aliphatische oder aromatische Kohlenwasserstoffe wie n-Pentan, Isopentan, n-Hexan, n-Heptan, Cyclohexan, Isododekan, n-Octan, n-Nonan, n-Decan, Petrolether, Toluol, Benzol, o-Xylol, m-Xylol, p-Xylol, 1,2,3-Trimethylbenzol, 1,2,4-Trimethylbenzol, 1,2,5-Trimethylbenzol, 1,3,5-Trimethylbenzol, Ethylbenzol, Propylbenzol etc. sowie Ether, wie Diethylether, Methyl-tert-butylether, Dimethoxyethan, Diisopropylether, Di-n-butylether, Anisol , Methanol, Ethanol, Isopropanol und Butanoloder Mischungen von diesen. Die Vorlage erfolgt bei Temperaturen zwischen -100°C und 300°C, bevorzugt zwischen -80°C und 200°C, insbesondere bevorzugt bei Temperaturen zwischen 20°C und 150°C. Die Verbindung der Formel (VIII) sollte vorteilhafterweise in flüssiger Phase vorliegen.

Anschließend kann die Zugabe einer oder mehrerer Verbindungen der Formel (VI) erfolgen. Diese können ebenfalls in einem Lösemittel gelöst oder suspendiert sein aber auch in Substanz vorliegen. Als Lösemittel dienen die bereits oben beschriebenen, vorzugsweise wird das gleiche Lösemittel verwendet. Die Zugabe kann über einen Zeitraum von 1 Minute bis zu 96 Stunden erfolgen. Bevorzugt ist eine Zugabe innerhalb von 10 Minuten bis zu 16 Stunden. Die Temperatur der Vorlage liegt bei der Zugabe zwischen -100°C und 200°C. Bevorzugt sind Temperaturen zwischen -80°C und 150°C. Besonders bevorzugt sind Temperaturen zwischen 20°C und 150°C. Die Temperatur wird so gewählt, daß zumindest ein Reaktionspartner in flüssiger Phase vorliegen. Die anschließende Reaktionstemperatur liegt in einem bevorzugten Temperaturbereich zwischen 20 °C und 150°C. Desweiteren kann die Umsetzung bei Normaldruck durchgeführt, sie kann jedoch auch bei erhöhtem Druck durchgeführt werden, was jedoch entsprechende Reaktoren voraussetzt. Das stöchiometrische Verhältnis in dem Verbindungen der Formel (VIII) und (VI) zusammengegeben werden, bezogen auf eingesetzter Menge M¹⁰ der Verbindungen der Formel (VI), liegt zwischen 1 : 1000 und 1 : 0.01. Bevorzugt ist ein stöchiometrisches Verhältnis zwischen Verbindungen der Formel (VIII) und (VI) zu eingesetzter Menge M¹⁰, gemäß Formel (VI), zwischen 1 :100 und 1 : 0.1. Besonders bevorzugt ist eine stöchiometrische Umsetzung bezogen auf die Verbindungen der Formel (VIII) und (VI). Die resultierende Verbindung wird anschließend mit einer Verbindung der Formel (IX) umgesetzte. Die Reaktionsführung sowie die verwendeten Lösungsmittel entsprechen den oben beschriebenen.

Die so erhaltene Verbindung kann isoliert oder in situ mit der Verbindung der Formel (VII) umgesetzt werden wobei die Reaktionsführung, Stöchiometrienen und Reihenfolgen der Zugabe der einzelnen Komponeneten sowie die verwendeten Lösungsmittel entsprechen den oben beschriebenen.

Aus dieser Reaktion entsteht das erfindungsgemäße Ligandsystem Formel (IIa). In einem letzten Schritt können eine oder mehrere Verbindung der Formel (IIa) in einem Reaktionsgefäß vorgelegt werden. Die Verbindungen können entweder in einem Lösemittel gelöst oder suspendiert sein, oder aber auch in Substanz vorliegen. Als Lösemittel dienen aliphatische oder aromatische Kohlenwasserstoffe wie n-Pentan, Isopentan, n-Hexan, n-Heptan, Cyclohexan, Isododekan, n-Octan, n-Nonan, n-Decan, Petrolether, Toluol, Benzol, o-Xylol, m-Xylol, p-Xylol, 1,2,3-Trimethylbenzol, 1,2,4-Trimethylbenzol, 1,2,5-Trimethylbenzol, 1,3,5-Trimethylbenzol, Ethylbenzol, Propylbenzol etc. sowie Ether, wie Diethylether, Methyl-tert-butylether, Dimethoxyethan, Diisopropylether, Di-n-butylether,oder Mischungen von diesen. Die Vorlage erfolgt bei Temperaturen zwischen -100°C und 300°C, bevorzugt zwischen -80°C und 200°C, insbesondere bevorzugt bei Temperaturen zwischen 20°C und 150°C. Die Verbindung der Formel (IIa) sollte vorteilhafterweise in flüssiger Phase vorliegen.

Anschließend kann die Zugabe einer oder mehrerer Verbindungen der Formel (X) erfolgen. Diese können ebenfalls in einem Lösemittel gelöst oder suspendiert sein aber auch in Substanz vorliegen. Als Lösemittel dienen die bereits oben beschriebenen, vorzugsweise wird das gleiche Lösemittel verwendet. Die Zugabe kann über einen Zeitraum von 1 Minute bis zu 96 Stunden erfolgen. Bevorzugt ist eine Zugabe innerhalb von 10 Minuten bis zu 16 Stunden. Die Temperatur der Vorlage liegt bei der Zugabe zwischen -100°C und 200°C. Bevorzugt sind Temperaturen zwischen -80°C und 150°C. Besonders bevorzugt sind Temperaturen zwischen 20°C und 150°C. Die Temperatur wird so gewählt, daß zumindest ein Reaktionspartner in flüssiger Phase vorliegen. Die anschließende Reaktionstemperatur liegt in einem bevorzugten Temperaturbereich zwischen 20 °C und 150°C. Desweiteren kann die Umsetzung bei Normaldruck durchgeführt, sie kann jedoch auch bei erhöhtem Druck durchgeführt werden, was jedoch entsprechende Reaktoren voraussetzt. Das stöchiometrische Verhältnis in dem Verbindungen der Formel (Ila) und (X) zusammengegeben werden, bezogen auf eingesetzter Menge M²⁰ der Verbindungen der Formel (X), liegt zwischen 1 : 1000 und 1 : 0.01. Bevorzugt ist ein stöchiometrisches Verhältnis zwischen Verbindungen der Formel (IIa) und (X) zu eingesetzter Menge M²⁰, gemäß Formel (X), zwischen 1 :100 und 1 : 0.1. Besonders bevorzugt ist eine stöchiometrische Umsetzung bezogen auf die Verbindungen der Formel (IIa) und (X). Das resultierende Produkt kann isoliert werden oder ohne Isolierung zur weiteren Umsetzung mit der Verbindung der Formel (XI) eingesetzt werden. Dabei kann eine oder mehrere Verbindung der Formel (IIa) in einem Reaktionsgefäß vorgelegt werden. Die Verbindungen können entweder in einem Lösemittel gelöst oder suspendiert sein, oder aber auch in Substanz vorliegen. Als Lösemittel dienen die oben beschriebenen.

Erläuternde, jedoch nicht einschränkende Beispiele für die erfindungsgemäßen Verbindungen der Formel (X) sind:
Lithiumdiisopropylamid, Lithiumdimethylamid, Lithiumdiethylamid, Lithiumdiphenylamid, Lithiumdicyclohexylamid, Lithiumdibenzylamid, Lithiumisopropylmethylamid, Lithiumdibutylamid, Lithiumditert.-butylamid, Lithiumditolylamid, Lithiumdicyclopentylamid, Lithiumdibutylamid, Lithiummethylethylamid, Lithiumethylbutylamid, Natriumdiisopropylamid, Natriumdimethylamid, Natriumdiethylamid, Natriumdiphenylamid, Natriumdicyclohexylamid, Natriumdibenzylamid, Natriumisopropylmethylamid, Natriumdibutylamid, Natriumditert.-butylamid, Natriumditolylamid, Natriumdicyclopentylamid, Natriumdibutylamid, Natriummethylethylamid, Natriumethylbutylamid, Kaliumdiisopropylamid, Kaliumdimethylamid, Kaliumdiethylamid, Kaliumdiphenylamid, Kaliumdicyclohexylamid, Kaliumdibenzylamid, Kaliumisopropylmethylamid, Kaliumdibutylamid, Kaliumditert.butylamid, Kaliumditolylamid, Kaliumdicyclopentylamid, Kaliumdibutylamid, Kaliummethylethylamid und/oder Kaliummethylbutylamid. Butyllithium, Natriumhydrid, Butylnatrium, Dibutylmagnesium, sek.-Butyllithium

Die Verbindung der Formel (XI) wird anschließend zu einer oder mehrerer Verbindungen der Formel (IIa) zugegeben Die Verbindungen können entweder in einem Lösemittel gelöst oder suspendiert sein, oder aber auch in Substanz vorliegen. Die Reaktionsführung sowie die verwendeten Lösungsmittel entsprechen den oben beschriebenen. Man isoliert eine Verbindung der Formel (I).

Alternativ zu dieser in Schema 1 beschriebenen Route können alternative Routen verwendet werden. Diese sind in Schema 2, 3 und 4 aufgezeigt. Die verwendeten Verbindungen entsprechen den oben beschriebenen.

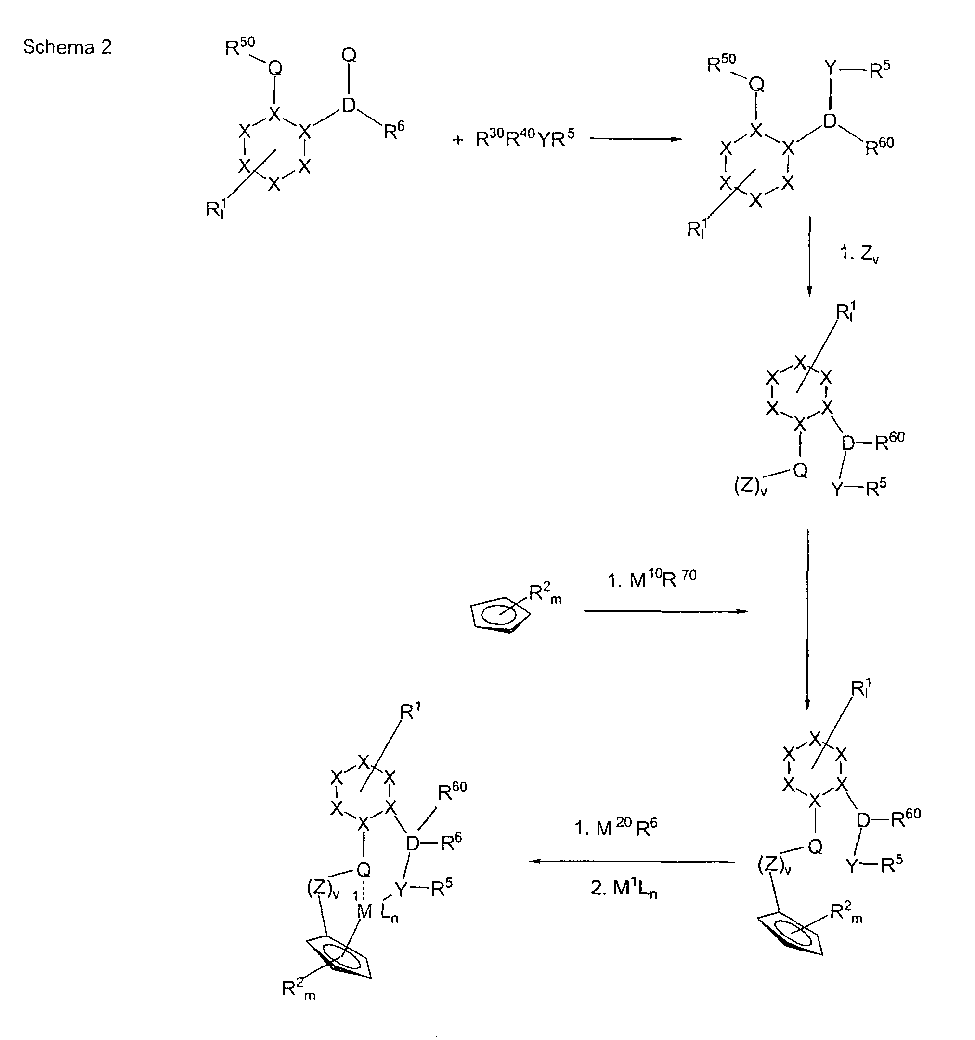

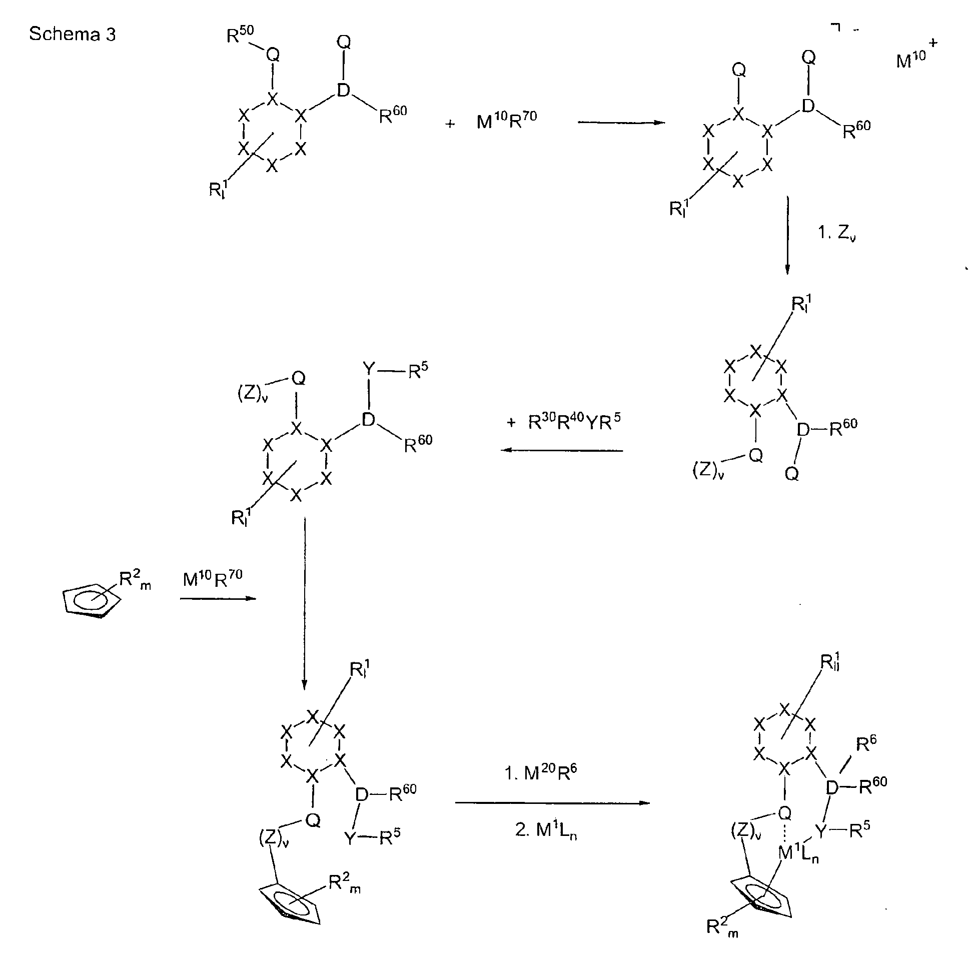

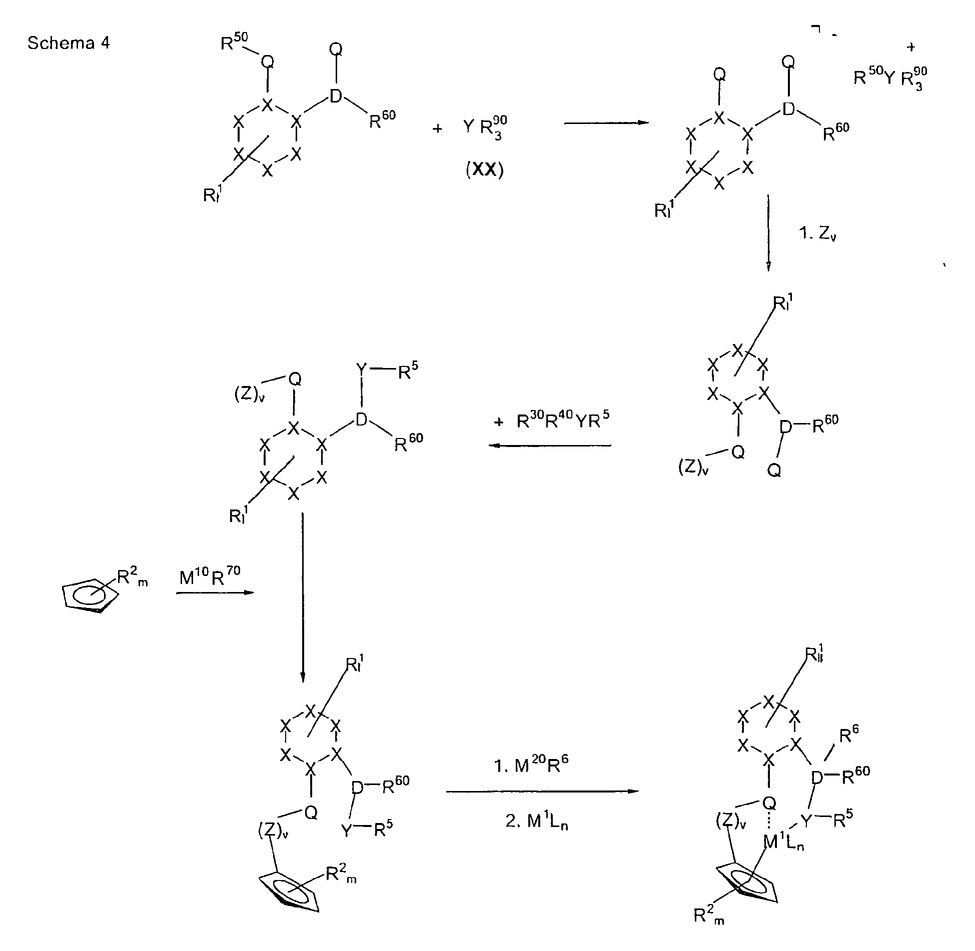

Hierin haben M¹, R², R³, R⁵, R⁶, R⁶⁰, Z, L, m, n, v, X, D, Y die oben stehende Bedeutung. Außerdem bedeuten:
R⁹⁰ gleich oder verschieden sind und ein Wasserstoffatom, eine C₁-C₄₀₋kohlenstoffhaltige Gruppe wie C₁-C₂₀-Alkyl, C₂-C₁₀-Alkenyl, C₇-C₄₀-Arylalkyl, C₇-C₄₀₋Alkylaryl oder C₈-C₄₀-Arylalkenyl sind,
oder R⁹⁰ gleich oder verschieden sind und eine C₁-C₃₀ - kohlenstoffhaltige Gruppe wie C₁-C₂₅-Alkyl, z. B. Methyl, Ethyl, tert.-Butyl, n-Hexyl, Isopropyl, Cyclohexyl oder Octyl, C₂-C₂₅-Alkenyl, C₃-C₁₅-Alkylalkenyl, C₆-C₂₄-Aryl, C₅-C₂₄-Heteroaryl, C₇-C₃₀₋Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl

Erläuternde, jedoch nicht einschränkende Beispiele für die erfindungsgemäßen Verbindungen der Formel (XX) sind:
Tricyclohexylamin, Triisopropylamin, Tribenzylamin, Tri-p-Toluidinamin, Trimethylamin, Tripropylamin, Tricyclopentylamin, Tricycloheptenylamin, Tricyclooctanylamin, Trinonanoylamin, Triethylamin, Tributylamin, Tri-tert.-Butylamin, Triphenylamin, Triisobutylamin,Tripentylamin, Trihexylamin, Trioctylamin, Triheptylamin, Trixylylamin, Trinaphtylamin, Tri-sek.-Butylamin, Triadamanthylamin, Trinorbonylamin, Tripentafluorohenylamin, Tripentachloroamin, Tripyridinamin, Tripryrolidinamin,

Die vorliegende Erfindung betrifft außerdem ein Katalysatorsystem welches die erfindungsgemäße chemische Verbindung der Formel (I) enthält.

Die erfindungsgemäßen Metallkomplexe der Formeln (I) eignen sich insbesondere als Bestandteil von Katalysatorsystemen zur Herstellung von Polyolefinen durch Polymerisation von mindestens einem Olefin in Gegenwart eines Katalysators, der mindestens einen Cokatalysator und mindestens ein Metallkomplex enthält.

Der Cokatalysator, der zusammen mit einem erfindungsgemäßen Übergangsmetallkomplex der Formeln II das Katalysatorsystem bildet, enthält mindestens eine Verbindung vom Typ eines Aluminoxans oder einer Lewis-Säure oder einer ionischen Verbindung, die durch Reaktion mit einer Metallorganischeverbindung dieses in eine kationische Verbindung überführt.

Als Aluminoxan wird bevorzugt eine Verbindung der allgemeinen Formel (XII)

(R AlO)ₙ (XII)

verwendet.

Weitere geeignete Aluminoxane können z.B. cyclisch wie in Formel (XIII) 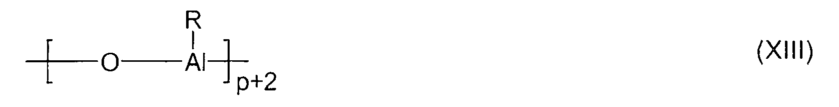 oder linear wie in Formel (XIV) 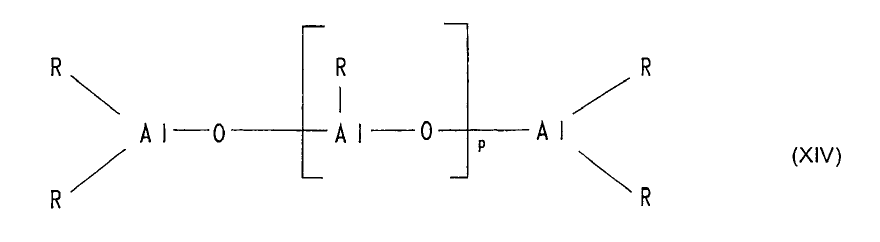 oder vom Cluster-Typ wie in Formel (XV) 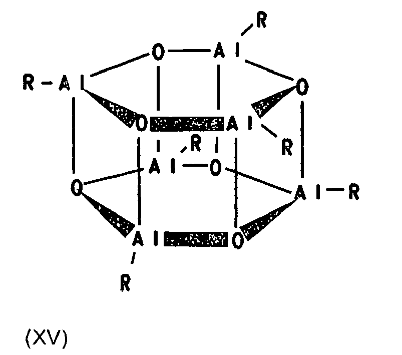 sein. Derartige Aluminoxane werden beispielsweise in JACS 117 (1995), 6465-74, Organometallics 13 (1994), 2957-2969, beschrieben.

Die Reste R in den Formeln (XII), (XIII), (XIV) und (XV) können gleich oder verschieden sein und eine C₁-C₂₀-Kohlenwasserstoffgruppe wie eine C₁-C₆₋Alkylgruppe, eine C₆-C₁₈-Arylgruppe, Benzyl oder Wasserstoff bedeuten, und p eine ganze Zahl von 2 bis 50, bevorzugt 10 bis 35 bedeuten.
Bevorzugt sind die Reste R gleich und bedeuten Methyl, Isobutyl, n-Butyl, Phenyl oder Benzyl, besonders bevorzugt Methyl.

Sind die Reste R unterschiedlich, so sind sie bevorzugt Methyl und Wasserstoff, Methyl und Isobutyl oder Methyl und n-Butyl, wobei Wasserstoff bzw. Isobutyl oder n-Butyl bevorzugt zu 0,01 - 40 % (Zahl der Reste R) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z. B. Toluol) umgesetzt wird.
Zur Herstellung eines Aluminoxans mit verschiedenen Alkylgruppen R werden entsprechend der gewünschten Zusammensetzung und Reaktivität zwei verschiedene Aluminiumtrialkyle (AlR₃ + AlR'₃) mit Wasser umgesetzt (vgl. S. Pasynkiewicz, Polyhedron 9 (1990) 429 und EP-A-0,302,424).

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Als Lewis-Säure werden bevorzugt mindestens eine bor- oder aluminiumorganische Verbindung eingesetzt, die C₁-C₂₀-kohlenstoffhaltige Gruppen enthalten, wie verzweigte oder unverzweigte Alkyl- oder Halogenalkyl, wie z.B. Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorophenyl, 3,5-Difluorophenyl, Pentachlorophenyl, Pentafluorophenyl, 3,4,5 Trifluorophenyl und 3,5 Di(trifluoromethyl)phenyl.

Beispiele für Lewis-Säuren sind Trimethylaluminium, Triethylaluminium, Triisobutylaluminium, Tributylaluminium, Trifluoroboran, Triphenylboran, Tris(4-fluorophenyl)boran, Tris(3,5-difluorophenyl)boran, Tris(4-fluoromethylphenyl)boran, Tris(pentafluorophenyl)boran, Tris(tolyl)boran, Tris(3,5-dimethylphenyl)boran, Tris(3,5-difluorophenyl)boran und/oder Tris(3,4,5-trifluorophenyl)boran. Insbesondere bevorzugt ist Tris(pentafluorophenyl)boran.

Als ionische Cokatalysatoren werden bevorzugt Verbindungen eingesetzt, die ein nicht koordinierendes Anion enthalten, wie beispielsweise Tetrakis(pentafluorophenyl)borate, Tetraphenylborate, SbF₆-, CF₃SO₃- oder ClO₄-. Als kationische Gegenionen werden protonierte Lewis-Basen wie z.B. Methylamin, Anilin, N, N-Dimethylbenzylamin sowie Derivate, N, N-Dimethylcyclohexylamin sowie Derivate, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin, p-Nitro-N,N-dimethylanilin, Triethylphosphin, Triphenylphosphin, Diphenylphosphin, Tetrahydrothiophen oder Triphenylcarbenium eingesetzt.

Beispiele für solche ionischen Verbindungen sind
Triethylammoniumtetra(phenyl)borat,
Tributylammoniumtetra(phenyl)borat,
Trimethylammoniumtetra(tolyl)borat,
Tributylammoniumtetra(tolyl)borat,
Tributylammoniumtetra(pentafluorophenyl)borat,
Tributylammoniumtetra(pentafluorophenyl)aluminat,
Tripropylammoniumtetra(dimethylphenyl)borat,
Tributylammoniumtetra(trifluoromethylphenyl)borat,
Tributylammoniumtetra(4-fluorophenyl)borat,
N,N-Dimethylaniliniumtetra(phenyl)borat,
N,N-Diethylaniliniumtetra(phenyl)borat,
N,N-Dimethylaniliniumtetrakis(pentafluorophenyl)borate,
N,N-Dimethylaniliniumtetrakis(pentafluorophenyl)aluminat,
Di(propyl)ammoniumtetrakis(pentafluorophenyl)borat,
Di(cyclohexyl)ammoniumtetrakis(pentafluorophenyl)borat,
Triphenylphosphoniumtetrakis(phenyl)borat,
Triethylphosphoniumtetrakis(phenyl)borat,
Diphenylphosphoniumtetrakis(phenyl)borat,
Tri(methylphenyl)phosphoniumtetrakis(phenyl)borat,
Tri(dimethylphenyl)phosphoniumtetrakis(phenyl)borat,
Triphenylcarbeniumtetrakis(pentafluorophenyl)borat,
Triphenylcarbeniumtetrakis(pentafluorophenyl)aluminat,
Triphenylcarbeniumtetrakis(phenyl)aluminat,
Ferroceniumtetrakis(pentafluorophenyl)borat und/oder
Ferroceniumtetrakis(pentafluorophenyl)aluminat.
Bevorzugt sind Triphenylcarbeniumtetrakis(pentafluorophenyl)borat und/oder
N,N-Dimethylaniliniumtetrakis(pentafluorophenyl)borat.
Es können auch Gemische mindestens einer Lewis-Säure und mindestens einer ionischen Verbindung eingesetzt werden.

Als Cokatalysatorkomponenten sind ebenfalls Boran- oder Carboran-Verbindungen wie z.B.
7,8-Dicarbaundecaboran(13),
Undecahydrid-7,8-dimethyl-7,8-dicarbaundecaboran,
Dodecahydrid-1-phenyl-1,3-dicarbanonaboran,
Tri(butyl)ammoniumundecahydrid-8-ethyl-7,9-dicarbaundecaborat,
4-Carbanonaboran(14)Bis(tri(butyl)ammonium)nonaborat,
Bis(tri(butyl)ammonium)undecaborat,
Bis(tri(butyl)ammonium)dodecaborat,
Bis(tri(butyl)ammonium)decachlorodecaborat,
Tri(butyl)ammonium-1-carbadecaborate,
Tri(butyl)ammonium-1-carbadodecaborate,
Tri(butyl)ammonium-1-trimethylsilyl-1-carbadecaborate,
Tri(butyl)ammoniumbis(nonahydrid-1,3-dicarbonnonaborat)cobaltate(III),
Tri(butyl)ammoniumbis(undecahydrid-7,8-dicarbaundecaborat)ferrat(III) von Bedeutung.

Als Cokatalysatorsysteme sind ebenfalls Kombinationen aus mindestens einem der oben genannten Amine und einem Träger mit elementorganischen Verbindungen wie sie im Patent WO 99/40129 beschrieben sind, von Bedeutung.

Bevorzugter Bestandteil dieser Cokatalysatorsysteme sind die Verbindungen der Formeln (A) und (B), 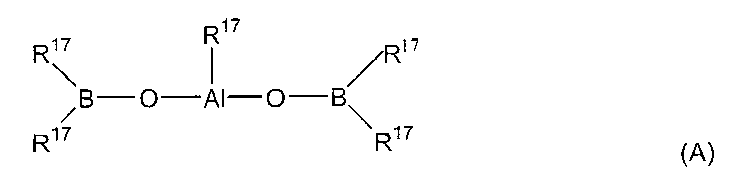 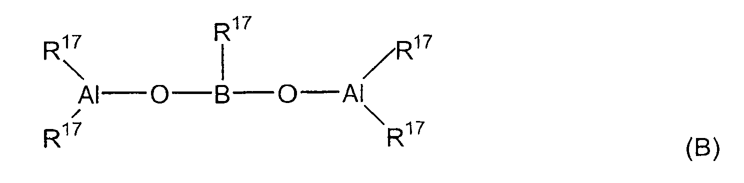 worin
- R¹⁷: ein Wasserstoffatom, ein Halogenatom, eine C₁-C₄₀-kohlenstoffhaltige Gruppe, insbesondere C₁-C₂₀-Alkyl, C₁-C₂₀-Halogenalkyl, C₁-C₁₀-Alkoxy, C₆₋C₂₀-Aryl, C₆-C₂₀-Halogenaryl, C₆-C₂₀-Aryloxy, C₇-C₄₀-Arylalkyl, C₇-C₄₀₋Halogenarylalkyl, C₇-C₄₀-Alkylaryl oder C₇-C₄₀-Halogenalkylaryl. R¹⁷ kann auch eine -OsiR¹⁸₃-Gruppe sein, worin R¹⁸ gleich oder verschieden sind und die gleiche Bedeutung wie R¹⁷ haben.

Als weiterer bevorzugter Cokatalysator sind darüber hinaus allgemein Verbindungen anzusehen, die durch die Umsetzung mindestens einer Verbindung der Formel (C) und/oder (D) und/oder (E) mit mindestens einer Verbindung der Formel (F) entstehen.

R¹⁷ᵥB-(DR⁸⁰)ₛ (C)

R¹⁷₂B-X¹-BR¹⁷₂ (D)

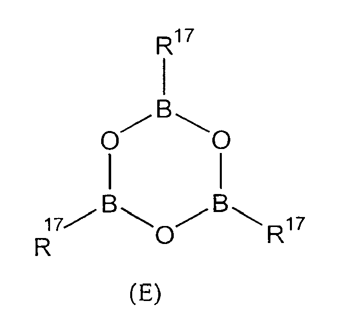

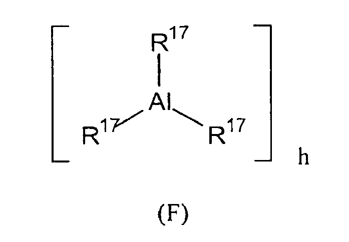

worin
- R⁸⁰: ein Wasserstoffatom oder eine borfreie C₁-C₄₀-kohlenstoffhaltige Gruppe wie C₁-C₂₀-Alkyl, C₆-C₂₀-Aryl, C₇-C₄₀-Arylalky, C₇-C₄₀-Alkylaryl sein kann und worin
- R¹⁷: die gleiche Bedeutung wie vorstehend genannte hat,
- X¹: ist gleich ein Element der VI. Hauptgruppe des Periodensystems der Elemente oder eine NR-Gruppe, worin R ein Wasserstoffatom oder eine C₁-C₂₀₋Kohlenwasserstoffrest wie C₁-C₂₀-Alkyl oder C₁-C₂₀-Aryl ist,
- D: ist gleich ein Element der VI. Hauptgruppe des Periodensystems der Elemente oder eine NR-Gruppe, worin R ein Wasserstoffatom oder eine C₁-C₂₀₋Kohlenwasserstoffrest wie C₁-C₂₀-Alkyl oder C₁-C₂₀-Aryl ist,
- v: eine ganze Zahl von 0 bis 3 ist
- s: eine ganze Zahl von 0 bis 3 ist,
- h: eine ganze Zahl von 1 bis 10 ist,
- B: Bor ist,
- Al: Aluminium ist.

Gegebenenfalls werden die elementorganischen Verbindungen mit einer Organometallverbindung der Formel XII bis XV und oder XVI [M⁴⁰R¹⁹_{b}]_{d} kombiniert,
worin M⁴⁰ ein Element der I., II. und III. Hauptgruppe des Periodensystems der Elemente ist, R¹⁹ gleich oder verschieden ist und ein Wasserstoffatom, ein Halogenatom, eine C₁-C₄₀-kohlenstoffhaltige Gruppe, insbesondere C₁-C₂₀- Alkyl-, C₆-C₄₀-Aryl-, C₇-C₄₀-Aryl-alkyl oder C₇-C₄₀-Alkyl-aryl-Gruppe bedeutet, b eine ganze Zahl von 1 bis 3 und d ist eine ganze Zahl von 1 bis 4 ist.

Beispiele für die cokatalytisch wirkenden Verbindungen der Formeln A und B sind

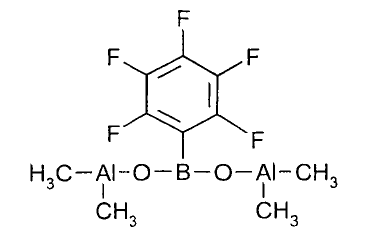

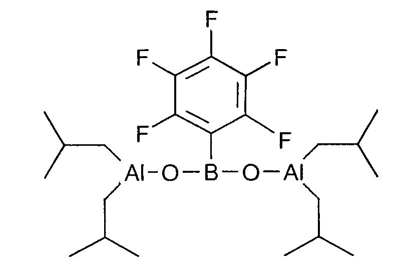

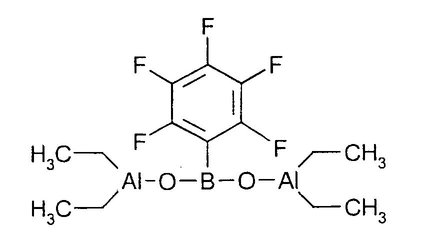

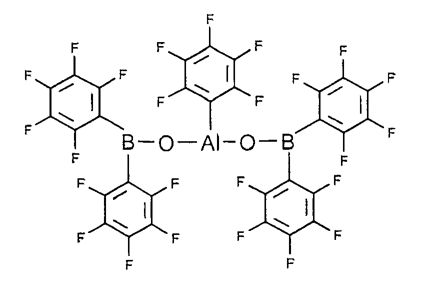

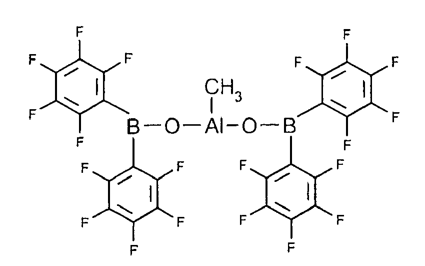

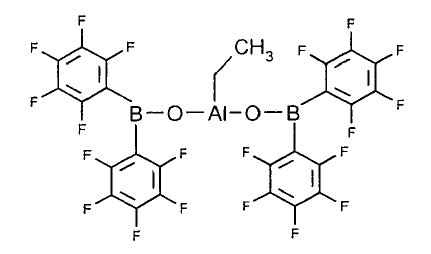

Bei den Organometallverbindungen der Formel XVI handelt es sich vorzugsweise um neutrale Lewissäuren worin M⁴⁰ für Lithium, Magnesium und/oder Aluminium, insbesondere Aluminium, steht. Beispiele für die bevorzugten OrganometallVerbindungen der Formel XII sind Trimethylaluminium, Triethylaluminium, Triisopropylaluminium, Trihexylaluminium, Trioctylaluminium, Tri-n-butylaluminium, Tri-n-propylaluminium, Triisoprenaluminium, Dimethylaluminiummonochlorid, Diethylaluminiummonochlorid, Diisobutylaluminiummonochlorid, Methylaluminiumsesquichlorid, Ethylaluminiumsesquichlorid, Dimethylaluminiumhydrid, Diethylaluminiumhydrid, Düsopropylaluminiumhydrid, Dimethylaluminium(trimethylsiloxid), Dimethyl-aluminium(triethylsiloxid), Phenylalan, Pentafluorphenylalan und o-Tolylalan.

Als weitere Cokatalysatoren, die ungeträgert oder geträgert vorliegen können, sind die in EP-A-924223, DE-A-19622207, EP-A-601830, EP-A-824112, EP-A-824113, EP-A-811627, WO97/11775 und DE-A-19606167 genannten Verbindungen zu verwenden.

Die Trägerkomponente des erfindungsgemäßen Katalysatorsystems kann ein beliebiger organischer oder anorganischer, inerter Feststoff sein, insbesondere ein poröser Träger wie Talk, anorganische Oxide und feinteilige Polymerpulver (z.B. hochporöse Polyolefine wie Polyethylen und Polypropylen, die in ihrer Partikelgröße und ihrem Porenvolumen ähnlich denen zum Silica sind).

Geeignete anorganische Oxide finden sich in der II-VI Hauptgruppe des Periodensystems und der III-IV Nebengruppe des Periodensystems der Elemente. Beispiele für als Träger bevorzugte Oxide umfassen Siliciumdioxid, Aluminiumoxid, sowie Mischoxide der Elemente Calcium, Aluminium, Silicium, Magnesium, Titan und entsprechende Oxid-Mischungen. Andere anorganische Oxide, die allein oder in Kombination mit den zuletzt genannten bevorzugten oxiden Trägern eingesetzt werden können, sind z.B. MgO, ZrO₂ , TiO₂ oder B₂O₃ ,um nur einige zu nennen.
Die verwendeten Trägermaterialien weisen eine spezifische Oberfläche im Bereich von 10 bis 1000 m²/g, ein Porenvolumen im Bereich von 0,1 bis 5 ml/g und eine mittlere Partikelgröße von 1 bis 500 µm auf. Bevorzugt sind Träger mit einer spezifischen Oberfläche im Bereich von 50 bis 500 µm , einem Porenvolumen im Bereich zwischen 0,5 und 3,5 ml/g und einer mittleren Partikelgröße im Bereich von 5 bis 350 µm. Besonders bevorzugt sind Träger mit einer spezifischen Oberfläche im Bereich von 200 bis 400 m²/g, einem Porenvolumen im Bereich zwischen 0,8 bis 3,0 ml/g und einer mittleren Partikelgröße von 10 bis 200 µm.
Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Die thermische Dehydratisierung oder Trocknung des Trägermaterials kann unter Vakuum und gleichzeitiger Inertgasüberlagerung (z.B. Stickstoff) erfolgen. Die Trocknungstemperatur liegt im Bereich zwischen 100 und 1000 °C, vorzugsweise zwischen 200 und 800 °C. Der Parameter Druck ist in diesem Fall nicht entscheidend. Die Dauer des Trocknungsprozesses kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.
Eine Dehydratisierung oder Trocknung des Trägermaterials ist auch auf chemischem Wege möglich, indem das adsorbierte Wasser und die Hydroxylgruppen auf der Oberfläche mit geeigneten Inertisierungsmitteln zur Reaktion gebracht werden. Durch die Umsetzung mit dem Inertisierungsreagenz können die Hydroxylgruppen vollständig oder auch teilweise in eine Form überführt werden, die zu keiner negativen Wechselwirkung mit den katalytisch aktiven Zentren führen. Geeignete Inertisierungsmittel sind beispielsweise Siliciumhalogenide und Silane, wie Siliciumtetrachlorid, Chlortrimethylsilan, Dimethylaminotrichlorsilan oder metallorganische Verbindungen von Aluminium- , Bor und Magnesium wie beispielsweise Trimethylaluminium, Triethylaluminium, Triisobutylaluminium, Triethylboran, Dibutylmagnesium. Die chemische Dehydratisierung oder Inertisierung des Trägermaterials erfolgt beispielsweise dadurch, daß man unter Luft- und Feuchtigkeitsausschluß eine Suspension des Trägermaterials in einem geeigneten Lösemittel mit dem Inertisierungsreagenz in reiner Form oder gelöst in einem geeigneten Lösemittel zur Reaktion bringt. Geeignete Lösemittel sind z.B. aliphatische oder aromatische Kohlenwasserstoffe wie Pentan, Hexan, Heptan, Toluol oder Xylol. Die Inertisierung erfolgt bei Temperaturen zwischen 25 °C und 120 °C, bevorzugt zwischen 50 und 70 °C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösemitteln wie sie bereits zuvor beschrieben worden sind gewaschen und anschließend im Inertgasstrom oder am Vakuum getrocknet.
Organische Trägermaterialien wie feinteilige Polyolefinpulver (z.B. Polyethylen, Polypropylen oder Polystyrol) können auch verwendet werden und sollten ebenfalls vor dem Einsatz von anhaftender Feuchtigkeit, Lösemittelresten oder anderen Verunreinigungen durch entsprechende Reinigungs- und Trocknungsoperationen befreit werden.
Zur Darstellung des geträgerten Katalysatorsystems wird mindestens eine der oben beschriebenen Übergangsmetallverbindung der Formel VII in einem geeigneten Lösemittel mit mindestens einer Cokatalysatorkomponente in Kontakt gebracht, wobei bevorzugt ein lösliches Reaktionsprodukt , ein Addukt oder ein Gemisch erhalten wird.
Die so erhaltene Zubereitung wird dann mit dem dehydratisierten oder inertisierten Trägermaterial vermischt, das Lösemittel entfernt und das resultierende geträgerte Übergangsmetallverbindung-Katalysatorsystem getrocknet, um sicherzustellen, daß das Lösemittel vollständig oder zum größten Teil aus den Poren des Trägermaterials entfernt wird. Der geträgerte Katalysator wird als frei fließendes Pulver erhalten.
Ein Verfahren zur Darstellung eines frei fließenden und gegebenenfalls vorpolymerisierten Übergangsmetallverbindung Katalysatorsystems umfaßt die folgenden Schritte:
a) Herstellung einer Übergangsmetallverbindung /Cokatalysator-Mischung in einem geeigneten Löse- oder Suspensionsmittel, wobei die Übergangsmetallverbindung -Komponente eine der zuvor beschriebenen Strukturen besitzt.
b) Aufbringen der Übergangsmetallverbindung /Cokatalysatormischung auf einen porösen, bevorzugt anorganischen dehydratisierten Träger
c) Entfernen des Hauptanteils an Lösemittel von der resultierenden Mischung
d) Isolierung des geträgerten Katalysatorsystems
e) Gegebenenfalls eine Vorpolymerisation des erhaltenen geträgerten Katalysatorsystems mit einem oder mehreren olefinischen Monomer(en), um ein vorpolymerisiertes geträgertes Katalysatorsystem zu erhalten.

Bevorzugte Lösemittel für die Herstellung der Übergangsmetallverbindung /Cokatalysator-Mischung sind Kohlenwasserstoffe und Kohlenwasserstoffgemische, die bei der gewählten Reaktionstemperatur flüssig sind und in denen sich die Einzelkomponenten bevorzugt lösen. Die Löslichkeit der Einzelkomponenten ist aber keine Voraussetzung, wenn sichergestellt ist, daß das Reaktionsprodukt aus Übergangsmetallverbindung - und Cokatalysatorkomponenten in dem gewählten Lösemittel löslich ist. Beispiele für geeignete Lösemittel umfassen Alkane wie Pentan, Isopentan, Hexan, Heptan, Octan, und Nonan; Cycloalkane wie Cyclopentan und Cyclohexan; und Aromaten wie Benzol, Toluol. Ethylbenzol und Diethylbenzol. Ganz besonders bevorzugt ist Toluol.
Die bei der Präparation des geträgerten Katalysatorsystems eingesetzten Mengen an Aluminoxan und Übergangsmetallverbindung können über einen weiten Bereich variiert werden. Bevorzugt wird ein molares Verhältnis von Aluminium zum Übergangsmetall in den Übergangsmetallverbindungen von 10 : 1 bis 1000 : 1 eingestellt, ganz besonders bevorzugt ein Verhältnis von 50 : 1 bis 500 : 1.

Im Fall von Methylaluminoxan werden bevorzugt 30 % ige toluolische Lösungen eingesetzt; die Verwendung von 10 %igen Lösungen ist aber auch möglich.
Zur Voraktivierung wird die Übergangsmetallverbindung in Form eines Feststoffes in einer Lösung des Aluminoxans in einem geeigneten Lösemittel aufgelöst. Es ist auch möglich, die Übergangsmetallverbindung getrennt in einem geeigneten Lösemittel aufzulösen und diese Lösung anschließend mit der Aluminoxan-Lösung zu vereinigen. Bevorzugt wird Toluol verwendet.
Die Voraktivierungszeit beträgt 1 Minute bis 200 Stunden.
Die Voraktivierung kann bei Raumtemperatur (25 °C) stattfinden. Die Anwendung höherer Temperaturen kann im Einzelfall die erforderliche Dauer der Voraktivierung verkürzen und eine zusätzliche Aktivitätssteigerung bewirken. Höhere Temperatur bedeutet in diesem Fall ein Bereich zwischen 50 und 100 °C.
Die voraktivierte Lösung bzw. das Übergangsmetallverbindung /CokatalysatorGemisch wird anschließend mit einem inerten Trägermaterial, üblicherweise Kieselgel, das in Form eines trockenen Pulvers oder als Suspension in einem der oben genannten Lösemittel vorliegt, vereinigt. Bevorzugt wird das Trägermaterial als Pulver eingesetzt. Die Reihenfolge der Zugabe ist dabei beliebig. Die voraktivierte Übergangsmetallverbindung -Cokatalysator-Lösung bzw. das Übergangsmetallverbindung -Cokatalysatorgemisch kann zum vorgelegten Trägermaterial dosiert, oder aber das Trägermaterial in die vorgelegte Lösung eingetragen werden.
Das Volumen der voraktivierten Lösung bzw. des Übergangsmetallverbindung - Cokatalysatorgemisches kann 100 % des Gesamtporenvolumens des eingesetzten Trägermaterials überschreiten oder aber bis zu 100 % des Gesamtporenvolumens betragen.
Die Temperatur, bei der die voraktivierte Lösung bzw. die Übergangsmetallverbindung-Cokatalysatorgemisch mit dem Trägermaterial in Kontakt gebracht wird, kann im Bereich zwischen 0 und 100 °C variieren. Niedrigere oder höhere Temperaturen sind aber auch möglich.
Anschließend wird das Lösemittel vollständig oder zum größten Teil vom geträgerten Katalysatorsystem entfernt, wobei die Mischung gerührt und gegebenenfalls auch erhitzt werden kann. Bevorzugt wird sowohl der sichtbare Anteil des Lösemittels als auch der Anteil in den Poren des Trägermaterials entfernt. Das Entfernen des Lösemittels kann in konventioneller Art und Weise unter Anwendung von Vakuum und/oder Spülen mit Inertgas erfolgen. Beim Trocknungsvorgang kann die Mischung erwärmt werden, bis das freie Lösemittel entfernt worden ist, was üblicherweise 1 bis 3 Stunden bei einer vorzugsweise gewählten Temperatur zwischen 30 und 60 °C erfordert. Das freie Lösemittel ist der sichtbare Anteil an Lösemittel in der Mischung. Unter Restlösemittel versteht man den Anteil, der in den Poren eingeschlossen ist. Alternativ zu einer vollständigen Entfernung des Lösemittels kann das geträgerte Katalysatorsystem auch nur bis zu einem gewissen Restlösemittelgehalt getrocknet werden, wobei das freie Lösemittel vollständig entfernt worden ist. Anschließend kann das geträgerte Katalysatorsystem mit einem niedrig siedenden Kohlenwasserstoff wie Pentan oder Hexan gewaschen und erneut getrocknet werden.
Das erfindungsgemäß dargestellte geträgerte Katalysatorsystem kann entweder direkt zur Polymerisation von Olefinen eingesetzt oder vor seiner Verwendung in einem Polymerisationsprozeß mit einem oder mehreren olefinischen Monomeren vorpolymerisiert werden. Die Ausführung der Vorpolymerisation von geträgerten Katalysatorsystemen ist beispielsweise in WO 94/28034 beschrieben.
Als Additiv kann während oder nach der Herstellung des geträgerten Katalysatorsystems eine geringe Menge eines Olefins bevorzugt eines α-Olefins (beispielsweise Vinylcyclohexan, Styrol oder Phenyldimethylvinylsilan) als modifizierende Komponente oder ein Antistatikum zugesetzt werden. Das molare Verhältnis von Additiv zu Metallorganischekomponente Verbindung I beträgt dabei bevorzugt zwischen 1 : 1000 bis 1000 : 1, ganz besonders bevorzugt 1 : 20 bis 20 : 1.

Die vorliegende Erfindung betrifft auch ein Verfahren zur Herstellung eines Polyolefins durch Polymerisation einer oder mehrerer Olefine in Gegenwart des erfindungsgemäßen Katalysatorsystems, enthaltend mindestens eine Übergangsmetallkomponente der Formel VII. Unter dem Begriff Polymerisaton wird eine Homopolymerisation wie auch eine Copolymerisation verstanden.

Bevorzugt werden Olefine der Formel Rₘ-CH=CH-Rₙ polymerisiert, worin Rₘ und Rₙ gleich oder verschieden sind und ein Wasserstoffatom oder einen kohlenstoffhaltigen Rest mit 1 bis 20 C-Atomen, insbesondere 1 bis 10 C-Atome, bedeuten, und Rₘ und Rₙ zusammen mit den sie verbindenden Atomen einen oder mehrere Ringe bilden können.
Beispiele für solche Olefine sind 1-Olefine mit 2 - 20, vorzugsweise 2 bis 10 C-Atomen, wie Ethen, Propen, 1-Buten, 1-Penten, 1-Hexen, 4-Methyl-1-penten oder 1-Octen, Styrol, Diene wie 1,3-Butadien, 1,4-Hexadien, Vinylnorbornen ,Norbornadien, Ethylnorbornadien und cyclische Olefine wie Norbornen, Tetracyclododecen oder Methylnorbornen. Bevorzugt werden in dem erfindungsgemäßen Verfahren Ethen oder Propen homopolymerisiert, oder Propen mit Ethen und/oder mit einem oder mehreren 1-Olefinen mit 4 bis 20 C-Atomen, wie Buten, Hexen, Styrol oder Vinylcyclohexan, und/oder einem oder mehreren Dienen mit 4 bis 20 C-Atomen, wie 1,4-Butadien, Norbornadien, Ethylidennorbonen oder Ethylnorbornadien, copolymerisiert. Beispiele solcher Copolymere sind Ethen/Propen-Copolymere, Ethen/Norbornen, Ethen/Styrol oder Ethen/Propen/1,4-Hexadien-Terpolymere.
Die Polymerisation wird bei einer Temperatur von 0 bis 300 °C , bevorzugt 50 bis 200 °C, ganz besonders bevorzugt 50 - 80 °C durchgeführt. Der Druck beträgt 0,5 bis 2000 bar, bevorzugt 5 bis 64 bar.
Die Polymerisation kann in Lösung, in Masse, in Suspension oder in der Gasphase, kontinuierlich oder diskontinuierlich, ein- oder mehrstufig durchgeführt werden.
Das erfindungsgemäß dargestellte Katalysatorsystem kann als einzige Katalysatorkomponente für die Polymerisation von Olefinen mit 2 bis 20 C-Atomen eingesetzt werden, oder bevorzugt in Kombination mit mindestens einer Alkylverbindung der Elemente aus der I. bis III. Hauptgruppe des Periodensystems, wie z.B. einem Aluminium-, Magnesium- oder Lithiumalkyl oder einem Aluminoxan eingesetzt werden. Die Alkylverbindung wird dem Monomeren oder Suspensionsmittel zugesetzt und dient zur Reinigung des Monomeren von Substanzen, die die Katalysatoraktivität beeinträchtigen können. Die Menge der zugesetzten Alkylverbindung hängt von der Qualität der eingesetzten Monomere ab. Als Molmassenregler und/oder zur Steigerung der Aktivität wird, falls erforderlich, Wasserstoff zugegeben.

Das Katalysatorsystem kann dem Polymerisationssystem pur zugeführt werden oder zur besseren Dosierbarkeit mit inerten Komponenten wie Paraffinen, Ölen oder Wachsen versetzt werden. Bei der Polymerisation kann außerdem ein Antistatikum zusammen mit oder getrennt von dem eingesetzten Katalysatorsystem in das Polymerisationssystem eindosiert werden. Die mit dem erfindungsgemäßen Katalysatorsystem dargestellten Polymere zeigen eine gleichmäßige Kornmorphologie und weisen keine Feinkornanteile auf. Bei der Polymerisation mit dem erfindungsgemäßen Katalysatorsyatem treten keine Beläge oder Verbackungen auf.
Die durch Einsatz des erfindungsgemäßen Katalysatorsystems erhaltenen Copolymere sind mit hoher Produktivität bei technisch relevanten Prozessparametern ohne Belagsbildung herstellbar. Sie ermöglichen so die Herstellung von Copolymeren mit hohem Comonomereneinbau und hoher Molmasse.
Die Erfindung wird durch folgende, die Erfindung jedoch nicht einschränkenden Beispiele erläutert.

Allgemeine Angaben: Die Herstellung und Handhabung der organometallischen Verbindungen erfolgte unter Ausschluß von Luft und Feuchtigkeit unter Argon-Schutzgas (Schlenk-Technik bzw. Glove-Box). Alle benötigten Lösemittel wurden vor Gebrauch mit Argon gespült und über Molsieb absolutiert.

Die Darstellung der Imin-Edukte verläuft nach denen in der Literatur beschriebenen Verfahren. Beispiele finden sich hier z.B. unter Chem. *Rev.* 1963, 63, 489-510. Zum teil handelt es sich um käuflich zu erwerbende Chemikalien.

### Darstellung der Natrium und Lithiumsalze

### Beispiel 1: Darstellung des N-Isopropylsalicylaldiminatolithiums

6 g (40.2 mmol) des Isopropylsalicylaldimins werden in 75 ml Toluol gelöst und bei 0°C mit 16.1 ml einer 2.5 Molaren Buthyllithium Lösung versetzt. Anschließend wird auf Raumtemperatur erwärmt und 3 Stunden bei dieser Temperatur gerührt. In dieser Zeit fällt ein weißer Niederschlag an der über eine G4-Fritte abgetrennt wird. Man wäscht den weißen Niederschlag einmal mit 5 ml Toluol und trochnet den Rückstand im Ölpumpenvakuum. Man isoliert 4.41 g (65%) des gewünschten Produktes.

### Beispiel 2: Darstellung des N-Cyclohexylsalicylaldiminatolithiums

8 g (39.4 mmol) des Cyclohexylsalicylaldimins werden in 100 ml Toluol gelöst und bei 0°C mit 24.6 ml einer 1.6 Molaren Buthyllithium in Hexan Lösung versetzt. Anschließend wird auf Raumtemperatur erwärmt und 3 Stunden bei dieser Temperatur gerührt. In dieser Zeit fällt ein weißer Niederschlag an. Man engt auf die Hälfte des Lösungsmittels ein und trennt den Niederschlag über eine G4-Fritte ab. Man wäscht den weißen Niederschlag einmal mit 5 ml Toluol und 5 ml Pentan und trochnet den Rückstand im Ölpumpenvakuum. Man isoliert 5.81 g (70%) des gewünschten Produktes.

### Beispiel 3: Darstellung des N-Cyclohexylsalicylaldiminatonatriums

8.1 g (39.8 mmol) des Cyclohexylsalicylaldimins werden in 60 ml Methanol gelöst und bei Raumtemperatur mit 7.2 g (39.8 mmol) Natriummethylatlösung versetzt. Anschließend wird bei Raumtemperatur über nacht gerührt. Anschießend wird das Lösungsmittel am Rotationsverdampfer entfernt und der Rückstand 50 mL Pentan verrührt bei dieser Temperatur gerührt. Der gelbe Rückstand wird auf einer G4-Fritte isoliert und mit 5 ml Pentan gewaschen. Danach wird der Rückstand im Ölpumpenvakuum. Man isoliert 6.04 g (68%) des gewünschten Produktes.

### Beispiel 4: Darstellung des N-Isopropylsalicylaldiminatonatriums

6.8 g (45.6 mmol) des N-Isopropylsalicylaldimins werden in 40 ml Methanol gelöst und bei Raumtemperatur mit 8.2 g (45.6 mmol) Natriummethylatlösung versetzt. Anschließend wird bei Raumtemperatur über nacht gerührt. Anschießend wird das Lösungsmittel am Rotationsverdampfer entfernt und der Rückstand 50 mL Pentan verrührt bei dieser Temperatur gerührt. Der gelbe Rückstand wird auf einer G4-Fritte isoliert und mit 5 ml Pentan gewaschen. Danach wird der Rückstand im Ölpumpenvakuum. Man isoliert 5.8 g (69%) des gewünschten Produktes.

### Beispiel 5: Darstellung des N-Phenylsalicylaldiminatonatriums

8 g (40.6 mmol) des N-Phenylsalicylaldimins werden in 85 ml Methanol gelöst und bei Raumtemperatur mit 7.3 g (40.6 mmol) Natriummethylatlösung versetzt. Anschließend wird bei Raumtemperatur über nacht gerührt. Anschießend wird das Lösungsmittel am Rotationsverdampfer entfernt und der Rückstand 30 mL Pentan verrührt bei dieser Temperatur gerührt. Der gelbe Rückstand wird auf einer G4-Fritte isoliert und mit 5 ml Pentan gewaschen. Danach wird der Rückstand im Ölpumpenvakuum. Man isoliert 8.5 g (96%) des gewünschten Produktes.

### Beispiel 6: Darstellung des N-2,6-Diisopropylphenylsalicylaldiminatonatriums

8 g (39.5 mmol) des N-2,6-Diisopropylphenylsalicylaldimins werden in 85 ml Methanol gelöst und bei Raumtemperatur mit 7.1 g (40.6 mmol) Natriummethylatlösung versetzt. Anschließend wird bei Raumtemperatur über nacht gerührt. Anschießend wird das Lösungsmittel am Rotationsverdampfer entfernt und der Rückstand 30 mL Pentan verrührt bei dieser Temperatur gerührt. Der gelbe Rückstand wird auf einer G4-Fritte isoliert und mit 5 ml Pentan gewaschen. Danach wird der Rückstand im Ölpumpenvakuum. Man isoliert 7.5 g (61%) des gewünschten Produktes.

### Beispiel 7: Darstellung des N-2,6-Diisopropyl-3, 5-Ditert-butylsalicylaldiminatonatriums

9 g (22.9 mmol) des N-2,6-Diisopropyl-3, 5-Ditert-butylsalicylaldimins werden in 100 ml Methanol gelöst und bei Raumtemperatur mit 4 g (22.9 mmol) Natriummethylatlösung versetzt. Anschließend wird bei Raumtemperatur über nacht gerührt. Anschießend wird das Lösungsmittel am Rotationsverdampfer entfernt und der Rückstand 30 mL Pentan verrührt bei dieser Temperatur gerührt. Der gelbe Rückstand wird auf einer G4-Fritte isoliert und mit 5 ml Pentan gewaschen. Danach wird der Rückstand im Ölpumpenvakuum. Man isoliert 8.8 g (92%) des gewünschten Produktes.

### Beispiel 8: Darstellung des N-Cyclohexyl-3, 5-Di-tert-butylsalicylaldiminato lithiums

10 g (29.7 mmol) des N-Cyclohexyl-3, 5-Di-tert-butylsalicylaldimins werden in 100 ml Toluol gelöst und bei 0°C mit 19.7 ml einer 1.6 Molaren Buthyllithium in Hexan Lösung versetzt. Anschließend wird auf Raumtemperatur erwärmt und 5 Stunden bei dieser Temperatur gerührt. In dieser Zeit fällt ein weißer Niederschlag an. Man engt auf die Hälfte des Lösungsmittels ein und trennt den Niederschlag über eine G4-Fritte ab. Man wäscht den weißen Niederschlag einmal mit 10 ml Toluol und 5 ml Pentan und trochnet den Rückstand im Ölpumpenvakuum. Man isoliert 7.7 g (77%) des gewünschten Produktes.

### Darstellung der Mono-Silylierten-Indene

### Beispiel 9: Darstellung von 2-Methyl-4- (4' tert.butyl-phenyl)1-dimethylchlorosilan-inden

20.0 g (76 mmol) 2-Methyl-4-(4'-tert.butyl-phenyl-inden werden in 160 ml Toluol und 5 ml DME vorgelegt. Zu dieser Lösung werden 28.4 ml (76mmol) einer Buthyllithium-Lösung getropft, nach beendeter Zugabe wird 1 Stunde bei 80 °C nachgerührt. Die so entstandene Reaktionslösung wird langsam zu einer auf -40 °C vorgekühlten Lösung aus 27.7 ml (229 mmol) Dimethyldichlorosilan in 260 ml THF getropft. Man läßt auf Raumtemperatur erwärmen und rührt die Reaktionsmischung über Nacht. Anschließend wird das Lösungsmittel im Ölpumpenvakuum entfernt und der verbleibende Rückstand in 100ml Toluol aufgenommen. Das unlösliche Lithiumchlorid wird über einer G4-Fritte abgetrennt und das Lösungsmittel des Filtrats im Ölpumpenvakuum entfernt. Man isoliert 24.8 g (98 %) des gewünschten Produktes.
¹H-NMR (400 MHz, CDCl₃): 7.3-7.0 (m, 7H, arom- H), 6.7 (s, 1H, Olefin-H-Inden), 3.5 (s, 1 H, H-Inden), 2.1 (s, 3H, CH₃), 1.3 (s, 9H, tert.Butyl), 0.3, 0.05 (je s, je 3H, CH₃-Si).

### Beispiel 10: Darstellung von 2-Ethyl-4- (4' tert.butyl-phenyl)1-dimethylchlorosilan-inden

20.0 g (72.4 mmol) 2-Ethyl-4-(4'-tert.butyl-phenyl)-inden werden in 153 ml Toluol und 4.8 ml DME vorgelegt. Zu dieser Lösung werden 27.0 ml (72.4 mmol) einer Buthyllithium-Lösung getropft, nach beendeter Zugabe wird 1 Stunde bei 80 °C nachgerührt. Die so entstandene Reaktionslösung wird langsam zu einer auf -40 °C vorgekühlten Lösung aus 26.3 ml (217 mmol) Dimethyldichlorosilan in 248 ml THF getropft. Man läßt auf Raumtemperatur erwärmen und rührt die Reaktionsmischung über Nacht. Anschließend wird das Lösungsmittel im Ölpumpenvakuum entfernt und der verbleibende Rückstand in 100ml Toluol aufgenommen. Das unlösliche Lithiumchlorid wird über einer G4-Fritte abgetrennt und das Lösungsmittel des Filtrats im Ölpumpenvakuum entfernt. Man isoliert 25.5 g (95 %) des gewünschten Produktes.
¹H-NMR (400 MHz, CDCl₃): 7.3-7.0 (m, 7H, arom- H), 6.7 (s, 1 H, Olefin-H-Inden), 3.6 (s, 1 H, H-Inden), 2.6, 2.4 (je m, 1 H, CH₂), 1.3 (s, 9H, tert.Butyl), 1.1 (t, 3H, CH₃), (0.3, 0.0 (je s, je 3H, CH₃-Si).

### Beispiel 11: Darstellung von 2-Methyl-(4-thiapentalen)1-dimethylchlorosilan

20.0 g (14.8 mmol) 2-Methyl-(2-hydrocyclopenta[2, 1-b]-thiophen) werden in 260 ml Toluol und 8 ml DME vorgelegt. Zu dieser Lösung werden 55.3 ml (148 mmol) einer Buthyllithium-Lösung getropft, nach beendeter Zugabe wird 1 Stunde bei 80 °C nachgerührt. Die so entstandene Reaktionslösung wird langsam zu einer auf -40 °C vorgekühlten Lösung aus 53.9 ml (446 mmol) Dimethyldichlorosilan in 460 ml THF getropft. Man läßt auf Raumtemperatur erwärmen und rührt die Reaktionsmischung über Nacht. Anschließend wird das Lösungsmittel im Ölpumpenvakuum entfernt und der verbleibende Rückstand in 100ml Toluol aufgenommen. Das unlösliche Lithiumchlorid wird über einer G4-Fritte abgetrennt und das Lösungsmittel des Filtrats im Ölpumpenvakuum entfernt. Man isoliert 29.1 g (86 %) des gewünschten Produktes.
¹H-NMR (400 MHz, CD₂Cl₂): 7.3-6.8 (m, 2H), 6.7-6.4 (m, 1 H), 4.0-3.4 (m, 2H), 2.6 (m, 3H, CH₃), 0.3, -0.05 (je s, je 3H,CH₃-Si).

### Beispiel 12: Darstellung von 2-Isopropyl-4- (1-naphtyl)1-dimethylchlorosilan-inden

18.5 g (65 mmol) 2-Isopropyl-4-(1-naphtyl)-inden werden in 150 ml Toluol und 4.8 ml DME vorgelegt. Zu dieser Lösung werden 24.2 ml (65mmol) einer Buthyllithium-Lösung getropft, nach beendeter Zugabe wird 1 Stunde bei 80 °C nachgerührt. Die so entstandene Reaktionslösung wird langsam zu einer auf -40 °C vorgekühlten Lösung aus 26.2 ml (216 mmol) Dimethyldichlorosilan in 250 ml THF getropft. Man läßt auf Raumtemperatur erwärmen und rührt die Reaktionsmischung über Nacht. Anschließend wird das Lösungsmittel im Ölpumpenvakuum entfernt und der verbleibende Rückstand in 100ml Toluol aufgenommen. Das unlösliche Lithiumchlorid wird über einer G4-Fritte abgetrennt und das Lösungsmittel des Filtrats im Ölpumpenvakuum entfernt. Man isoliert 23.4 g (95 %) des gewünschten Produktes.
¹H-NMR (400 MHz, CDCl₃): 7.45-7.32 (m, 7H, arom- H), 6.26 (s, 1H, Olefin-H-Inden), 3.69 (s, 1 H, H-Inden), 3.41 (m, 1 H, CH-Isopropyl), 2.15 (s, 3H, CH₃), 1.1, 0.9 (je d, je 3H, CH₃-lsopropyl), 0.46, 0.18 (je s, je 3H, CH₃-Si).

Andere Indenyl-Dimetylchlorosilan- und Heteropentalen-Dimethylchlorosilansysteme können analog zu den oben beschriebenen Beispielen synthetisiert werden.

### Darstellung der Ligandensysteme

### Beispiel 13: Darstellung von 2-Methyl-7-(4'-tert.-butyl-phenyl)-1-inden-dimethylsilanyloxy-benzyliden-2-{2,6 Diisopropylphenyl}aldimin (V-13)

5 g (17.8 mmol) N-2,6 Diisopropylphenylsalicylaldimin werden in 40 ml Methylenchlorid vorgelegt, mit N-Ethyldiisopropylamin versetzt und anschließend zwanzig Minuten bei Raumtemperatur gerührt. Anschießend werden 7.63 g (17.8 mmol) 2-Methyl-4-(4' tert.butyl-phenyl)1-dimethylchlorosilaninden, gelöst in 40 ml Methylenchlorid, zugegeben und die Reaktionslösung 2 Stunden bei dieser Temperartur gerührt. Das Lösungsmittel wird im Ölpumpenvakkum entfernt und der zurückbleibende ölige Rückstand mit 80 ml Pentan verrührt. Der nun entstandene pulvrige Rückstand wird über ein G4-Fritte abfiltriert und mit 2 mal 50 ml Pentan gewaschen. Nach Trocknung im Ölpumpenvakuum werden 4.7 g (47%) der gewünschten Verbindung isoliert. 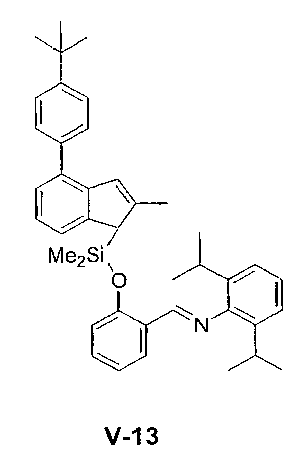 ¹H-NMR (400 MHz, CDCl₃): 8.39 (s, 1H, lmin-H), 7.45-6.76 (m, 14H, arom- H), 6.33 (s, 1 H, Olefin-H-Inden), 3.5 (s, 1 H, H-Inden), 3.12 (m, 2H, Isopropyl-H), 1.71 (s, 3H, CH₃), 1.34 (s, 9-H, Tert.Butyl-H), 1.27 (dd, 12H, Isopropyl-CH₃), 0.08 (s, 6H, CH₃-Si).

### Beispiel 14: Darstellung von 2-Methyl-7-(4'-tert.-butyl-phenyl)-1-inden-dimethylsilanyloxy-benzyliden-2-{Phenyl}aldimin (V-14)

6 g (16.8 mmol) 2-Methyl-4-(4' tert.butyl-phenyl)1-dimethylchlorosilaninden werden zu einer Suspension aus 4.2 g (19.2 mmol) N-Phenylsalicylaldiminatonatrium und 240 ml THF gegeben. Es wird über Nacht gerührt. Anschließend wird das anfallende Natriumchlorid über eine G3-Fritte abgetrennt und das Lösungsmittel des Filtrats im Ölpumpenvakuum entfernt. Man isoliert 6.0 g (69%) eines oranges. 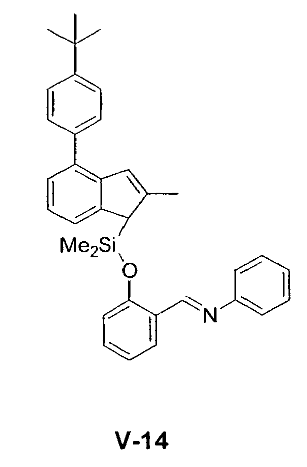 ¹H-NMR (400 MHz, CDCl₃): 8.37 (s, 1 H, Imin-H), 7.45-6.76 (m, 14H, arom- H), 6.30 (s, 1 H, Olefin-H-Inden), 3.47 (s, 1 H, H-Inden), 1.72 (s, 3H, CH₃), 1.34 (s, 9-H, Tert.Butyl-H), 0.09 (s, 6H, CH₃-Si).

### Beispiel 15: Darstellung von 2-Methyl-7-(phenyl)-1-inden-dimethyl-silanyloxybenzyliden-2-{phenyl}aldimin (V-15)

10 g (33.5 mmol) 2-Methyl-4-(phenyl)1-dimethylchlorosilaninden werden zu einer Suspension aus 7.3 g (19.2 mmol) N-Phenylsalicylaldiminatonatrium und 300 ml THF gegeben. Es wird über Nacht gerührt. Anschließend wird das anfallende Natriumchlorid über eine G3-Fritte abgetrennt und das Lösungsmittel des Filtrats im Ölpumpenvakuum entfernt. Man isoliert 8.0 g (52%) ein dunkel oranges Öl. 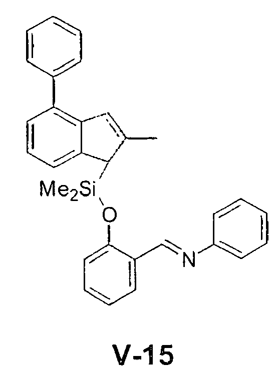 ¹H-NMR (400 MHz, CDCl₃): 8.35 (s, 1 H, Imin-H), 7.49-6.76 (m, 14H, arom- H), 6.32 (s, 1 H, Olefin-H-Inden), 3.51 (s, 1H, H-Inden), 1.72 (s, 3H, CH₃), 0.10 (s, 6H, CH₃-Si).

### Beispiel 16: Darstellung von 2-Methyl-7-(phenyl)-1-inden-dimethyl-silanyloxy-benzyliden-2-{isopropyl)aldimin (V-16)

10 g (33.5 mmol) 2-Methyl-4-(phenyl)1-dimethylchlorosilaninden, gelöst in 70 ml THF, werden zu einer auf -20 °C vorgekühlten Suspension aus 5.7 g (33.5 mmol) N-Isopropylsalicylaldiminatolithium und 60 ml Toluol getropft. Man läßt auf Raumtemperatur erwärmen und rührt das Reaktionsgemisch über Nacht. Man entfernt anschließend das Lösungsmittel im Ölpumpenvakuum und nimmt den Rückstand in 100ml Toluol wieder auf. Danach das anfallende Lithiumchlorid über eine G3-Fritte abgetrennt und das Lösungsmittel des Filtrats im Ölpumpenvakuum entfernt. Man isoliert 9.7 g (68%) ein dunkel oranges Öl. 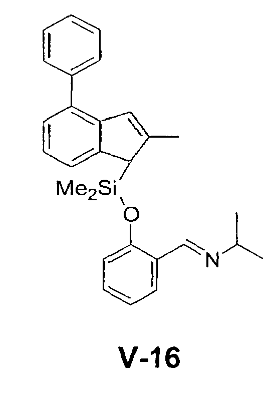 ¹H-NMR (400 MHz, CDCl₃): 8.18 (s, 1 H, Imin-H), 7.49-6.76 (m, 14H, arom- H), 6.35 (s, 1 H, Olefin-H-Inden), 3.51 (s, 1 H, H-Inden), 3.47 (m, 1-H, Isopropyl-H), 1.74 (s, 3H, CH₃), 1.23 (d, 6H, Isopropyl-CH₃), 0.08 (s, 6H, CH₃-Si).

### Beispiel 17: Darstellung von 2-Ethyl-7-(4'-tert.-butyl-phenyl)-1-inden-dimethylsilanyloxy-benzyliden-2-{cyclohexyl}aldimin (V-17)

7.5 g (20.3 mmol) 2-Ethyl-4-(4'-tert.-butyl-phenyl)1-dimethylchlorosilaninden, gelöst in 70 ml THF, werden zu einer auf -20 °C vorgekühlten Suspension aus 4.2 g (20.3 mmol) N-Cyclohexylsalicylaldiminatolithium und 40 ml Toluol getropft. Man läßt auf Raumtemperatur erwärmen und rührt das Reaktionsgemisch über Nacht. Man entfernt anschließend das Lösungsmittel im Ölpumpenvakuum und nimmt den Rückstand in 100ml Toluol wieder auf. Danach das anfallende Lithiumchlorid über eine G3-Fritte abgetrennt und das Lösungsmittel des Filtrats im Ölpumpenvakuum entfernt. Man isoliert 6.5 g (60%) ein dunkel oranges Öl. 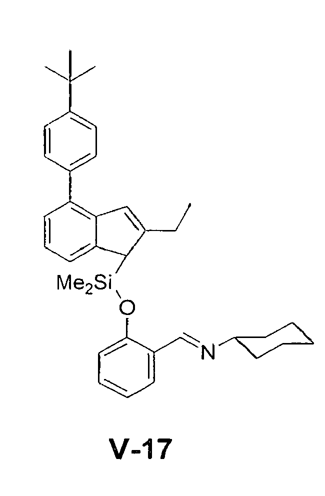 ¹H-NMR (400 MHz, CDCl₃): 8.20 (s, 1 H, Imin-H), 7.49-6.76 (m, 12H, arom- H), 6.35 (s, 1H, Olefin-H-Inden), 3.51 (s, 1H, H-Inden), 3.08 (m, 1 H, Cyclohexyl-CH), 2.8, 2.6 (je m, 1 H, CH₂), 1.69 (s, 3H, CH₃), 1.36 (s, 9-H, Tert.Butyl-H), 1.76, 1.44 (m, 10H, Cyclohexyl-CH₂), 0.08 (s, 6H, CH₃-Si).

### Beispiel 18: Darstellung von 2-Isopropyl-7-(naphtyl)-1-inden-dimethyl-silanyloxy-benzyliden-2-{cyclohexyl}aldimin (V-18)

9.5 g (25.2 mmol) 2-Isoproyl-4-(naphtyl)1-dimethylchlorosilaninden, gelöst in 70 ml THF, werden zu einer auf -20 °C vorgekühlten Suspension aus 5.2 g (20.3 mmol) N-Cyclohexylsalicylaldiminatolithium und 60 ml Toluol getropft. Man läßt auf Raumtemperatur erwärmen und rührt das Reaktionsgemisch über Nacht. Man entfernt anschließend das Lösungsmittel im Ölpumpenvakuum und nimmt den Rückstand in 100ml Toluol wieder auf. Danach das anfallende Lithiumchlorid über eine G3-Fritte abgetrennt und das Lösungsmittel des Filtrats im Ölpumpenvakuum entfernt. Man isoliert 8.5 g (62%) ein dunkel braunes Öl. 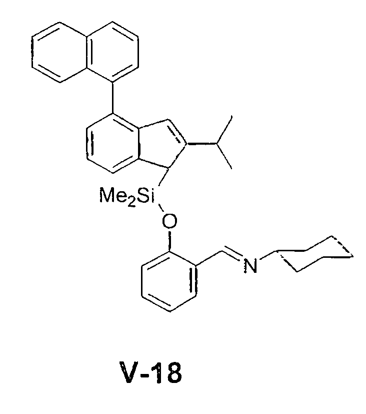 ¹H-NMR (400 MHz, CDCl₃): 8.20 (s, 1 H, lmin-H), 7.49-6.76 (m, 14H, arom- H), 6.35 (s, 1 H, Olefin-H-Inden), 3.51 (s, 1 H, H-Inden), 3.47 (m, 1-H, Isopropyl-H), 3.08 (m, 1 H, Cyclohexyl-CH), 1.1, 0.9 (je d, je 3H, CH₃-Isopropyl), 1.76, 1.44 (m, 10H, Cyclohexyl-CH₂), 0.08 (s, 6H, CH₃-Si).

### Beispiel 19: Darstellung von 2-Methyl-(4-thiapentalen)-dimethyl-silanyl-1-oxy-2, 4-Di-tert.butyl-benzyliden-{2, 6-Diisopropylphenyl}aldimin (V-19)

6 g (26.2 mmol) 2-Methyl-(4-thiapentalen)1-dimethylchlorosilan werden zu einer Suspension aus 10.9 g (26.2 mmol) N-2,6-Diisopropyl-3, 5-Di-tert-butylsalicylaldiminatonatriums und 300 ml THF gegeben. Es wird über Nacht gerührt. Anschließend wird das anfallende Natriumchlorid über eine G3-Fritte abgetrennt und das Lösungsmittel des Filtrats im Ölpumpenvakuum entfernt. Man isoliert 8.0 g (55%) eines oranges. 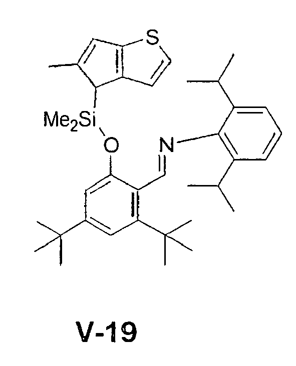 ¹H-NMR (400 MHz, CD₂Cl₂): 8.39 (s, 1H, Imin-H), 7.3-6.8 (m, 2H), 6.7-6.4 (m, 1H), 4.0-3.4 (m, 2H), 3.12 (m, 2H, Isopropyl-H), 1.9 (m, 3H, CH₃), 1.34 (s, 9-H, Tert.Butyl-H), 1.27 (dd, 12H, Isopropyl-CH₃), 0.3, -0.05 (je s, je 3H,CH₃₋Si).

### Darstellung der Komplexe

### Beispiel 20: Darstellung von Dimethylsilanyloxy(butylbenzyliden)-{(N-2,6 diisopropylphenyl)aminato}(2-Methyl-7-(4'-tert.-butyl-phenyl)-1-indenyl)-zirconiumdichlorid (V-20)

11.12 g (17.8 mmol) 2-Methyl-7-(4'-tert.-butyl-phenyl)-1-inden-dimethyl-silanyl-1-oxyphenyl-2-{2,6 Düsopropylphenyl}aldimin werden in 60 ml Diethylether vorgelegt und auf 0°C abgekühlt, anschießend werden 14.2 ml Buthyllithium (35.6 mmol) so zugetropft, daß die Temperatur nicht über 5 °C steigt. Danach läßt man auf Raumtemperatur erwärmen und rührt die Reaktionsmischung über Nacht. Anschließend wird die Reaktionslösung auf 0°C abgekühlt und 4.2 g (18 mmol) Zirconiumtetrachlorid portionsweise hinzugegeben. Man läßt auf Raumtemperatur erwärmen und rührt 2 Stunden nach. Danach wird Lösungsmittel im Ölpumpenvakuum entfernt und der zurückbleibende ölige Rückstand mit 80 ml Toulol wieder aufgenommen. Das unlöslich Lithiumchlorid wird über einer G4-Fritte abgetrennt. Vom Filtrat wird das Lösungsmittel entfernt, der Rückstand mit 50 ml Pentan verrührt. Der nun entstandene gelbe pulvrige Rückstand wird über ein G4-Fritte abfiltriert und mit 2 mal 50 ml Pentan gewaschen. Nach Trocknung im Ölpumpenvakuum werden 8.5 g (58%) der gewünschten Verbindung isoliert. 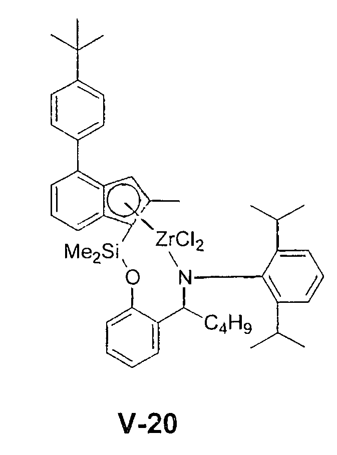 ¹H-NMR (400 MHz, CDCl₃): 7.40-6.76 (m, 14H, arom- H), 6.39 (s, 1H, Olefin-H-Inden), 3.9 (dd, 1 H, CH), 3.4 (m, 2H, Isopropyl-H), 1.75 (s, 3H, CH₃), 1.70, 1.33, 1.29, (je m, je 2H, CH₂),1.34 (s, 9-H, Tert.Butyl-H), 1.29 (dd, 12H, Isopropyl-CH₃), 1.08, 1.01 (je s, je 3H, CH₃-Si), 0.96 (m, 3H, CH₃).

### Beispiel 21: Darstellung von Dimethylsilanyloxy(butylbenzyliden) -{(N-phenyl)aminato} (2-Methyl-7-(4'-tert.-butyl-phenyl)-1-indenyl)zirconiumdichlorid (V-21)

6.45 g (12.6 mmol) 2-Methyl-7-(4'-tert.-butyl-phenyl)-1-inden-dimethyl-silanyl-1-oxy-phenyl-2-{N-phenyl}aldimin werden in 66 ml Diethylether vorgelegt und auf -78°C abgekühlt, anschießend werden 9.9 ml Buthyllithium (25.2 mmol) so zugetropft, daß die Temperatur nicht über -60 °C steigt. Danach läßt man auf Raumtemperatur erwärmen und rührt die Reaktionsmischung über Nacht. Anschließend wird die Reaktionslösung auf 0°C abgekühlt und 3.0 g (12.6 mmol) Zirconiumtetrachlorid portionsweise hinzugegeben. Man läßt auf Raumtemperatur erwärmen und rührt 2 Stunden nach. Danach wird Lösungsmittel im Ölpumpenvakuum entfernt und der zurückbleibende ölige Rückstand mit 60 ml Toulol wieder aufgenommen. Das unlöslich Lithiumchlorid wird über einer G4-Fritte abgetrennt. Vom Filtrat wird das Lösungsmittel entfernt, der Rückstand mit 40 ml Pentan verrührt. Der nun entstandene gelbe pulvrige Rückstand wird über ein G4-Fritte abfiltriert und mit 2 mal 50 ml Pentan gewaschen. Nach Trocknung im Ölpumpenvakuum werden 6.5 g (70%) der gewünschten Verbindung. 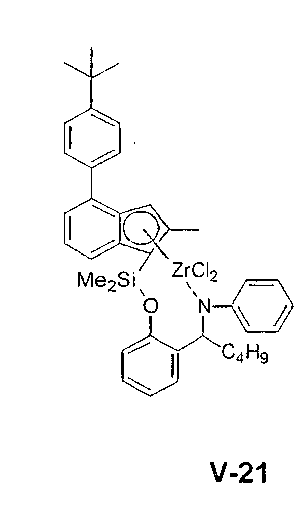 ¹H-NMR (400 MHz, CDCl₃): ¹H-NMR (400 MHz, CDCl₃): 7.45-6.76 (m, 14H, arom- H), 6.39 (s, 1 H, Olefin-H-Inden), 3.7 (dd, 1 H, CH), 1.75 (s, 3H, CH₃), 1.65, 1.29, 1.27, (je m, je 2H, CH₂),1.34 (s, 9-H, Tert.Butyl-H), 1.06, 1.04 (je s, je 3H, CH₃₋Si), 0.92 (m, 3H, CH₃).

### Beispiel 22: Darstellung von Dimethylsilanyloxy(butylbenzyliden) -{(N-phenyl)aminato} (2-methyl-7-(phenyl)-1-indenyl)titaniumdichlorid (V-22)

5 g (10.8 mmol) 2-Methyl-7-(phenyl)-1-inden-dimethyl-silanyl-1-oxy-phenyl-2-{N-phenyl}aldimin werden in 40 ml Diethylether vorgelegt und auf -78°C abgekühlt, anschießend werden 8.54 ml Buthyllithium (21.6 mmol) so zugetropft, daß die Temperatur nicht über -60 °C steigt. Danach läßt man auf Raumtemperatur erwärmen und rührt die Reaktionsmischung über Nacht. Anschließend wird die Reaktionslösung auf 0°C abgekühlt und 2.05 g (10.8 mmol) Titantetrachlorid portionsweise hinzugegeben. Man läßt auf Raumtemperatur erwärmen und rührt 2 Stunden nach. Das unlöslich Lithiumchlorid wird über einer G4-Fritte abgetrennt. Vom Filtrat wird das Lösungsmittel entfernt, der Rückstand mit 40 ml Pentan verrührt. Der nun entstandene dunkel orange pulvrige Rückstand wird über ein G4-Fritte abfiltriert und mit 2 mal 30 ml Pentan gewaschen. Nach Trocknung im Ölpumpenvakuum werden 4.3 g (59%) der gewünschten Verbindung. 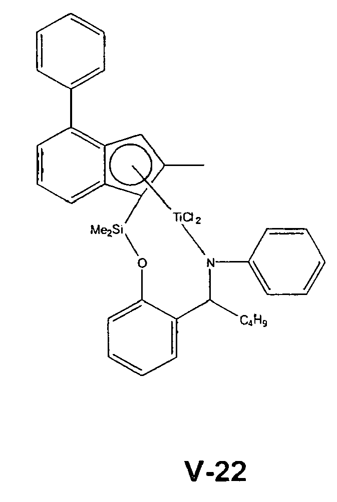 ¹H-NMR (400 MHz, CDCl₃): 7.50-6.70 (m, 17H, arom- H), 6.37 (s, 1 H, Olefin-H-Inden), 3.84 (dd, 1 H, CH), 1.72 (s, 3H, CH₃), 1.81, 1.33, 1.27, (je m, je 2H, CH₂), 1.11, 1.09 (je s, je 3H, CH₃-Si), 0.96 (m, 3H, CH₃).

### Beispiel 23: Darstellung von Dimethylsilanyloxy(butylbenzyliden) -{(N-isopropyl)aminato}(2-methyl-4-(phenyl)-1-indenyl)zirconiumdichlorid (V-23)

7 g (16.4 mmol) 2-Methyl-7-(phenyl)-1-inden-dimethyl-silanyl-1-oxy-phenyl-2-{n-isopropyl}aldimin werden in 40 ml THF vorgelegt und auf -78°C abgekühlt, anschießend werden 12.9 ml Buthyllithium (32.8 mmol) so zugetropft, daß die Temperatur nicht über -60 °C steigt. Danach läßt man auf Raumtemperatur erwärmen und rührt die Reaktionsmischung 5 Stunden nach. Anschließend wird die Reaktionslösung auf 0°C abgekühlt und 5.42 g (10.8 mmol) Zirconiumtetrachlorid portionsweise hinzugegeben. Man läßt auf Raumtemperatur erwärmen und rührt 2 Stunden nach. Das unlöslich Lithiumchlorid wird über einer G4-Fritte abgetrennt. Vom Filtrat wird das Lösungsmittel entfernt, der Rückstand mit 50 ml Heptan verrührt. Der nun entstandene dunkel gelbe pulvrige Rückstand wird über ein G4-Fritte abfiltriert und mit 2 mal 30 ml Heptan gewaschen. Nach Trocknung im Ölpumpenvakuum werden 5.2 g (49%) der gewünschten Verbindung. 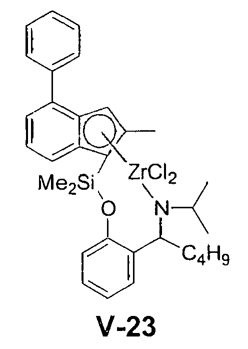 ¹H-NMR (400 MHz, CDCl₃): 7.49-6.70 (m, 12H, arom- H), 6.35 (s, 1 H, Olefin-H-Inden), 3.84 (dd, 1H, CH), 2.97 (m, 1-H, Isopropyl-H), 1.72 (s, 3H, CH₃), 1.81, 1.33, 1.27, (je m, je 2H, CH₂), 1.05 (d, 6H, Isopropyl-CH₃), 1.11, 1.09 (je s, je 3H, CH₃₋Si), 0.98 (m, 3H, CH₃).

### Beispiel 24: Darstellung von Dimethylsilanyloxy(butylbenzyliden)-{(N-cyclohexyl)aminato} (2-ethyl-4-(4'-tert.-butyl-phenyl)-1-indenyl)zirconiumdichlorid (V-24)

9 g (15.1 mmol) 2-Ethyl-4-(4'-tert.-butyl-phenyl)-1-inden-dimethyl-silanyl-1-oxy-phenyl-2-{Cyclohexyl}aldimin werden in einem Gemisch von 50 ml THF/Toluol (5:1) vorgelegt und auf -78°C abgekühlt, anschießend werden 11.8 ml Buthyllithium (30.2 mmol) so zugetropft, daß die Temperatur nicht über -40 °C steigt. Danach läßt man auf Raumtemperatur erwärmen und rührt die Reaktionsmischung 7 Stunden nach.

Anschließend wird die Reaktionslösung auf 0°C abgekühlt und 3.52 g (15.1 mmol) Zirconiumtetrachlorid portionsweise hinzugegeben. Man läßt auf Raumtemperatur erwärmen und rührt 4 Stunden nach. Das unlöslich Lithiumchlorid wird über einer G4-Fritte abgetrennt. Vom Filtrat wird das Lösungsmittel entfernt, der Rückstand mit 50 ml Heptan verrührt. Der nun entstandene orange gelbe pulvrige Rückstand wird über ein G4-Fritte abfiltriert und mit 2 mal 30 ml Heptan gewaschen. Nach Trocknung im Ölpumpenvakuum werden 5.2 g (49%) der gewünschten Verbindung. 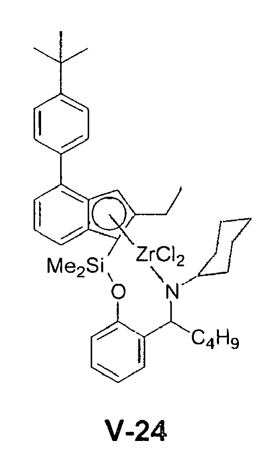 ¹H-NMR (400 MHz, CDCl₃): 7.51-6.78 (m, 12H, arom- H), 6.32 (s, 1 H, Olefin-H-Inden), 3.47 (m, 1-H, Isopropyl-H), 3.08 (m, 1 H, Cyclohexyl-CH), 2.5, 2.1 (je m, 1 H, CH₂), 1.69 (s, 3H, CH₃), 1.36 (s, 9-H, Tert.Butyl-H), 1.79, 1.76, 1.42, 1.33, 1.27, (je m, je 2H, CH₂ Zusammenfallen von Cyclohexyl - und Butyl-Resten eine eindeutige Zuordnung wurde nicht vorgenommen), 1.07, 1.02 (s, 6H, CH₃-Si).

### Beispiel 25: Darstellung von von Dimethylsilanyloxy(butylbenzyliden)-{(N-cyclohexyl)aminato} (2-isopropyl-4-(naphtyl)-1-indenyl)zirconiumdichlorid (V-25)

4 g (6.66 mmol) 2-Isopropyl-4-(naphtyl)-1-inden-dimethyl-silanyl-1-oxy-phenyl-2-{N-cyclohexyl}aldimin werden in einem Gemisch von 30 ml THF/Toluol (6:1) vorgelegt und auf -40°C abgekühlt, anschießend werden 5.2 ml Buthyllithium (13.3 mmol) so zugetropft, daß die Temperatur nicht über -20 °C steigt. Danach läßt man auf Raumtemperatur erwärmen und rührt die Reaktionsmischung 4 Stunden nach. Anschließend wird die Reaktionslösung auf 0°C abgekühlt und 1.55 g (15.1 mmol) Zirconiumtetrachlorid portionsweise hinzugegeben. Man läßt auf Raumtemperatur erwärmen und rührt 4 Stunden nach. Das unlöslich Lithiumchlorid wird über einer G4-Fritte abgetrennt. Vom Filtrat wird das Lösungsmittel entfernt, der Rückstand mit 50 ml Heptan verrührt. Der nun entstandene orange gelbe pulvrige Rückstand wird über ein G4-Fritte abfiltriert und mit 2 mal 30 ml Heptan gewaschen. Nach Trocknung im Ölpumpenvakuum werden 2.8 g (55%) der gewünschten Verbindung. 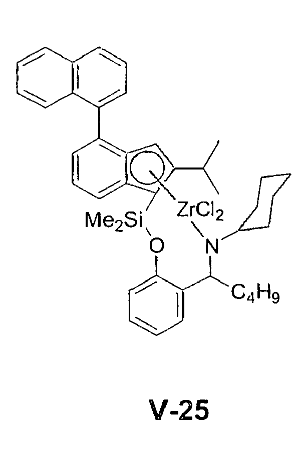 ¹H-NMR (400 MHz, CDCl₃): 7.41-6.72 (m, 12H, arom-H), 6.37 (s, 1 H, Olefin-H-Inden), 3.47 (m, 1-H, Isopropyl-H), 3.57 (m, 1-H, Isopropyl-H), 3.08 (m, 1H, Cyclohexyl-CH), 2.5, 2.1 (je m, 1H, CH₂), 1.69 (s, 3H, CH₃), 1.36 (s, 9-H, Tert.Butyl-H), 1.79, 1.76, 1.42, 1.33, 1.27, (je m, je 2H, CH₂ Zusammenfallen von Cyclohexyl - und Butyl-Resten eine eindeutige Zuordnung wurde nicht vorgenommen), 1.1, 0.9 (je d, je 3H, CH₃-Isopropyl), 1.11, 1.09 (s, 6H, CH₃-Si).

### Beispiel 26: Darstellung von von Dimethylsilanyloxy(3, 5-Di-tert.butyl-butylbenzyliden)-{(N-2, 6-diisopropylphenyl)aminato}(2-methyl-(4-thiapentalen)-zirconiumdichlorid (V-26)

8.5 g (16.0 mmol) 2-Methyl-(4-thiapentalen)-dimethyl-silanyl-1-oxy-3, 5-di-tert.butylphenyl-2-{N-2, 6-diisopropylphenyl}aldimin werden in 60 ml Diethylether vorgelegt und auf 0°C abgekühlt, anschießend werden 12.8 ml Buthyllithium (32.0 mmol) so zugetropft, daß die Temperatur nicht über 10 °C steigt. Danach läßt man auf Raumtemperatur erwärmen und rührt die Reaktionsmischung über Nacht. Anschließend wird die Reaktionslösung auf 0°C abgekühlt und 3.72 g (18 mmol) Zirconiumtetrachlorid portionsweise hinzugegeben. Man läßt auf Raumtemperatur erwärmen und rührt 2 Stunden nach. Danach wird Lösungsmittel im Ölpumpenvakuum entfernt und der zurückbleibende ölige Rückstand mit 80 ml Toulol wieder aufgenommen. Das unlöslich Lithiumchlorid wird über einer G4-Fritte abgetrennt. Vom Filtrat wird das Lösungsmittel entfernt, der Rückstand mit 40 ml Pentan verrührt. Der nun entstandene gelbe pulvrige Rückstand wird über ein G4-Fritte abfiltriert und mit 2 mal 40 ml Pentan gewaschen. Nach Trocknung im Ölpumpenvakuum werden 3.7 g (33%) der gewünschten Verbindung isoliert. 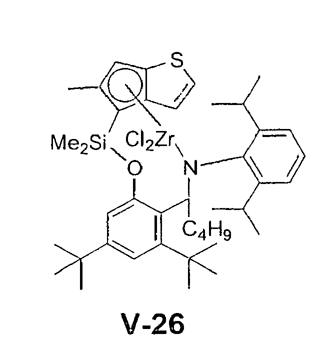 ¹H-NMR (400 MHz, CD₂Cl₂): 7.3-6.8 (m, 4H), 6.7-6.4 (m, 1 H), 4.0-3.4 (m, 2H), 3.12 (m, 2H, Isopropyl-H), 1.9 (m, 3H, CH₃), 1.34, 1.32 (je s, je 9-H, Tert.Butyl-H), 1.29 (dd, 12H, Isopropyl-CH₃), 1.03, 0.99 (je s, je 3H,CH₃-Si).

### Beispiel 27: Darstellung von Dimethylsilanyloxy(butylbenzyliden)-{(N-cyclohexyl)aminato}(2-Ethyl-7-(4'-tert.-butyl-phenyl)-1-indenyl)hafniumdichlorid (V-27)

10 g (16.8 mmol) 2-Ethyl-4-(4'-tert.-butyl-phenyl)-1-inden-dimethyl-silanyl-1-oxy-phenyl-2-{N-cyclohexyl}aldimin werden in einem Gemisch von 60 ml THF/Toluol (5:1) vorgelegt und auf -78°C abgekühlt, anschießend werden 13.1 ml Buthyllithium (30.2 mmol) so zugetropft, daß die Temperatur nicht über -40 °C steigt. Danach läßt man auf Raumtemperatur erwärmen und rührt die Reaktionsmischung 7 Stunden nach. Anschließend wird die Reaktionslösung auf 0°C abgekühlt und 5.38 g (16.8 mmol) Zirconiumtetrachlorid portionsweise hinzugegeben. Man läßt auf Raumtemperatur erwärmen und rührt 7 Stunden nach. Das unlöslich Lithiumchlorid wird über einer G4-Fritte abgetrennt. Vom Filtrat wird das Lösungsmittel entfernt, der Rückstand mit 50 ml Heptan verrührt. Der nun entstandene orange pulvrige Rückstand wird über ein G4-Fritte abfiltriert und mit 2 mal 40 ml Heptan gewaschen. Nach Trocknung im Ölpumpenvakuum werden 7.2 g (43%) der gewünschten Verbindung. 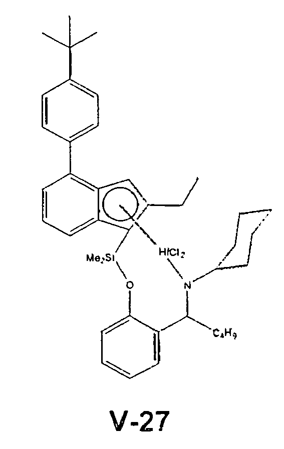 ¹H-NMR (400 MHz, CDCl₃): 7.61-6.78 (m, 12H, arom- H), 6.35 (s, 1 H, Olefin-H-Inden), 3.51 (m, 1-H, Isopropyl-H), 3.10 (m, 1 H, Cyclohexyl-CH), 2.7, 2.3 (je m, 1 H, CH₂), 1.71 (s, 3H, CH₃), 1.34 (s, 9-H, Tert.Butyl-H), 1.80, 1.77, 1.44, 1.35, 1.28, (je m, je 2H, CH₂ Zusammenfallen von Cyclohexyl - und Butyl-Resten eine eindeutige Zuordnung wurde nicht vorgenommen), 1.05, 1.01 (s, 6H, CH₃-Si).

### Beispiele zur Synthese nach Schema 4

### Beispiel 28: Darstellung von 2-Methyl-7-(4'-tert.-butyl-phenyl)-1-inden-dimethylsilanyloxy-benzaldehyd

1,78 ml (16.9 mmol) Salicylaldehyd werden in 60 ml Toluol vorgelegt, mit Triethylamin versetzt und anschließend dreißig Minuten bei Raumtemperatur gerührt. Anschießend werden 6 g (16.9 mmol) 2-Methyl-4-(4' tert.butyl-phenyl)1-dimethyl chlorosilaninden, gelöst in 60 ml Toluol, zugegeben und die Reaktionslösung 2 Stunden bei dieser Temperartur gerührt. Das Lösungsmittel wird im Ölpumpenvakuum entfernt und der zurückbleibende ölige Rückstand mit 2 mal 50 ml Pentan gewaschen. Nach Trocknung im Ölpumpenvakuum werden 6.9 g (93%) der gewünschten Verbindung isoliert.

### Beispiel 29: Darstellung von 2-Methyl-7-(4'-tert.-butyl-phenyl)-inden-dimethylsilanyloxy-benzyliden-2-{isopropyl}aldimin (V-29)

6.96 g (8.53 mmol) 2-Methyl-7-(4'-tert.-butyl-phenyl)-1-inden-dimethyl-silanyloxybenzaldehyd , gelöst in 17 ml Toluol, und 4.1 g Natriumsulfat werden als Suspension bei Raumtempertur vorgelegt. Anschließend werden 0.73 ml (29 mmol) N-Isopropylamin in 6.2 ml Toluol zugetropft. Man rührt bei Raumtemperatur über Nacht. Man entfernt das Natriumsulfat über eine G3-Fritte und entfernt das Lösungsmittel des Filtrats im Ölpumpenvakuum. Man isoliert 7.39 g (97%) ein dunkel oranges Öl. 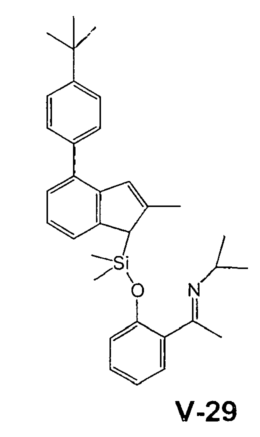 ¹H-NMR (400 MHz, CDCl₃): 8.18 (s, 1H, Imin-H), 7.49-6.76 (m, 14H, arom- H), 6.35 (s, 1 H, Olefin-H-Inden), 3.51 (s, 1 H, H-Inden), 3.47 (m, 1-H, Isopropyl-H), 1.74 (s, 3H, CH₃), 1.36 (s, 9H, tert.-butyl), 1.23 (d, 6H, Isopropyl-CH₃), 0.06 (s, 6H, CH₃-Si).

### Beispiel 30: Darstellung von Dimethylsilanyloxy(butylbenzyliden) -{(N-isopropyl) aminato} (2-methyl-4-(4'-tert.-butyl-phenyl)-1-indenyl)zirconiumdichlorid (V-30)

3.3g (6.85 mmol) 2-Methyl-7-(4'-tert.-butyl-phenyl)-inden-dimethyl-silanyloxy-benzyliden-2-{isopropyl}aldimin werden in 33 ml Diethylether vorgelegt und auf -78°C abgekühlt, anschießend werden 5.5 ml Buthyllithium (13.7 mmol) so zugetropft, daß die Temperatur nicht über -60 °C steigt. Danach läßt man auf Raumtemperatur erwärmen und rührt die Reaktionsmischung 2 Stunden nach. Anschließend wird die Reaktionslösung auf 0°C abgekühlt und 1.6 g (6.85 mmol) Zirconiumtetrachlorid portionsweise hinzugegeben. Man läßt auf Raumtemperatur erwärmen und rührt 2 Stunden nach. Das unlöslich Lithiumchlorid wird über einer G4-Fritte abgetrennt. Vom Filtrat wird das Lösungsmittel entfernt, der Rückstand mit 50 ml Heptan verrührt. Der nun entstandene dunkel gelbe pulvrige Rückstand wird über ein G4-Fritte abfiltriert und mit 2 mal 30 ml Heptan gewaschen. Nach Trocknung im Ölpumpenvakuum werden 1.5 g (31%) der gewünschten Verbindung. 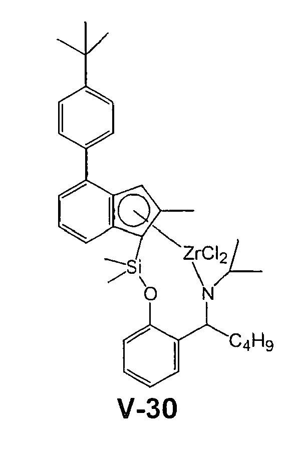 ¹H-NMR (400 MHz, CDCl₃): 7.49-6.70 (m, 12H, arom- H), 6.35 (s, 1 H, Olefin-H-Inden), 3.84 (dd, 1 H, CH), 2.97 (m, 1-H, Isopropyl-H), 1.72 (s, 3H, CH₃), 1.81, 1.33, 1.27, (je m, je 2H, CH₂), 1.38 (s, 9H, tert.-butyl), 1.05 (d, 6H, Isopropyl-CH₃), 1.11, 1.09 (je s, je 3H, CH₃-Si), 0.98 (m, 3H, CH₃).

### Polymerisationsergebnisse

### Allgemeine Herstellung des Katalysatorsystems

80 µmol der beschriebenen Komplexe werden bei Raumtemperatur in 4.3 cm³ (20 mmol Al) 30 %iger toluolischer Methylaluminoxan-Lösung gelöst. Die Lösung wird mit 3.7 cm³ Toluol verdünnt und 1 h bei Raumtemperatur gerührt. Anschließend wird diese Reaktionslösung portionsweise unter Rühren zu 4 g SiO₂ (MS 948, Fa. Grace, getrocknet bei 600°C im Argonstrom) gegeben und der Ansatz nach beendeter Zugabe 10 min nachgerührt. Danach wird das Lösungsmittel im Ölpumpenvakuum bis zur Gewichtskonstanz entfernt. Es resultieren hellrosa freifließenden Pulver.

### Allgemeine Beschreibung der Polymerisation

### Polymerisation

Zum Einschleusen in das Polymerisationssystem wird 1 g des geträgerten Katalysatorsystems in 20 cm³ Exxol resuspendiert.

Parallel dazu wird ein trockener 16-dm3-Reaktor zunächst mit Stickstoff und anschließend mit Propylen gespült und mit 10 dm3 flüssigem Propen befüllt. Als Scavenger werden 8 cm³ einer 20%igen Triethylaluminium-Lösung in Varsol zugesetzt und der Ansatz bei 30°C 15 Minuten gerührt. Anschließend wurde die Katalysatorsuspension in den Reaktor gegeben. Das Reaktionsgemisch wurde auf die Polymerisationstemperatur von 65 °C aufgeheizt (4°C/min) und das Polymerisationssystem 1 h durch Kühlung bei 65 °C gehalten. Gestoppt wurde die Polymerisation durch Abgasen des restlichen Propylens. Das Polymer wurde im Vakuumtrockenschrank getrocknet.

**Polymerisationsergebnisse**

| **Beispiel** | **V-20** | **V-21** | **V-22** | **V-23** | **V-24** | **V-25** | **V-26** | **V-27** | **V-30** |
|---|---|---|---|---|---|---|---|---|---|
| **Metallocen (mg)/g Kat.** | 9.0 | 9.5 | 9.5 | 9.8 | 10.3 | 11.0 | 9.9 | 10.2 | 10.1 |
| **PP (g)** | 770^{*} | 690^{*} | 585* | 560^{*} | 890^{*} | 540^{*} | 480^{*} | 990^{*} | 790^{*} |
| **Aktivität** ^{**1)**} | 86 | 73 | 62 | 57 | 86 | 49 | 49 | 97 | 78 |
| **M**_{**w**}**/M**_{**n**} | 2.2 | 2.3 | 2.2 | 2.4 | 2.4 | 2.5 | 2.2 | 2.3 | 2.3 |

| | | | | | | | | | |
|---|---|---|---|---|---|---|---|---|---|
| 1) Aktivität: kg (Polymer) / g Non-Metallocen·h·bar | | | | | | | | | |
| 2) ^{*} keine Belagsbildung im Kessel, freifließendes Polymerpulver | | | | | | | | | |

## Patentansprüche

1. Verbindungen der Formel (I) 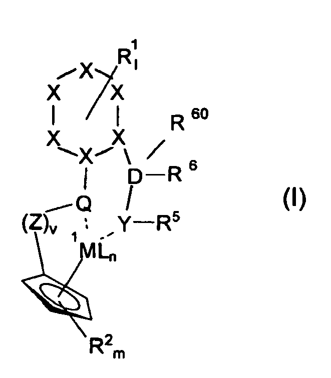 worin
M¹ Ti, Zr, Hf, Ni, Co, Fe, Pd, Sc, Cr oder Nb ist,
R¹ gleich oder verschieden sind und ein Wasserstoffatom oder Si(R¹²)₃ sind, worin R¹² gleich oder verschieden ein Wasserstoffatom oder eine C₁-C₄₀₋kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind,
oder R¹ gleich oder verschieden sind und eine C₁-C₃₀ - kohlenstoffhaltige Gruppe wie C₁-C₂₅-Alkyl, C₂-C₂₅-Alkenyl, C₃-C₁₅-Alkylalkenyl, C₆-C₂₄-Aryl, C₅₋C₂₄-Heteroaryl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀₋Alkylaryl oder C₁-C₁₂-Alkoxy ist,
oder zwei oder mehrere Reste R¹ können so miteinander verbunden sein, daß die Reste R¹ und die sie verbindenden Atome ein C₄-C₂₄-Ringsystem bilden, welches seinerseits substituiert sein kann,
R² gleich oder verschieden sind und ein Wasserstoffatom oder Si(R¹²)₃ sind, worin R¹² gleich oder verschieden ein Wasserstoffatom oder eine C₁-C₄₀₋kohlenstoffhaltige Gruppe wie C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind,
oder R² gleich oder verschieden sind und eine C₁-C₃₀ - kohlenstoffhaltige Gruppe wie C₁-C₂₅-Alkyl, C₂-C₂₅-Alkenyl, C₃-C₁₅-Alkylalkenyl, C₆-C₂₄-Aryl, C₅₋C₂₄-Heteroaryl die mit dem Cyclopentadienylring Azapentalene, Thiopentalen oder Phosphorpentalene bilden, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist,
oder zwei oder mehrere Reste R² können so miteinander verbunden sein, daß die Reste R² und die sie verbindenden Atome des Cyclopentadienylringes ein C₄-C₂₄-Ringsystem bilden, welches seinerseits substituiert sein kann,
R⁵, R⁶ gleich oder verschieden sind und ein Wasserstoffatom oder Si(R¹²)₃ sind,
worin R¹² gleich oder verschieden ein Wasserstoffatom oder eine C₁-C₄₀₋kohlenstoffhaltige Gruppe wie C₁-C₂₀-Alkyl, C₁-C₁₀-Fluoralkyl, C₁-C₁₀₋Alkoxy, C₆-C₂₀-Aryl, C₆-C₁₀-Fluoraryl, C₆-C₁₀-Aryloxy, C₂-C₁₀-Alkenyl, C₇₋C₄₀-Arylalkyl, C₇-C₄₀-Alkylaryl oder C₈-C₄₀-Arylalkenyl sind,
oder R⁵ oder R⁶ gleich oder verschieden sind und eine C₁-C₃₀₋kohlenstoffhaltige Gruppe wie C₁-C₂₅-Alkyl, C₂-C₂₅-Alkenyl, C₃-C₁₅₋Alkylalkenyl, C₆-C₂₄-Aryl, C₅-C₂₄-Heteroaryl, C₇-C₃₀-Arylalkyl, C₇-C₃₀₋Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist,
oder die Reste R⁵ und R⁶ können miteinander verbunden sein, daß die Reste R⁵ und R⁶ ein C₄-C₂₄-Ringsystem bilden, welches seinerseits substituiert sein kann,
R⁶⁰ ein Wasserstoffatom oder eine C₁-C₁₂-Alkylgruppe ist,
l gleich 4 ist,
m gleich 4 ist,
D, Q, Y ein Element der 13., 14., 15. oder 16. Gruppe des Periodensystems der Elemente ist,
X gleich und verschieden sein können und ein Element der 13., 14., 15. oder 16. Gruppe des Periodensystems der Elemente ist, wobei sie untereinander cyclische Systeme wie Aromaten oder Aliphaten bilden ,
L gleich oder verschieden sein können und ein Wasserstoffatom, eine C₁-C₁₀₋Kohlenwasserstoffgruppe wie C₁-C₁₀-Alkyl oder C₆-C₁₀-Aryl, ein Halogenatom, oder OR⁹, SR⁹, OSiR⁹₃, SiR⁹₃, PR⁹₂ oder NR⁹₂ bedeuten,
worin R⁹ ein Halogenatom, eine C₁-C₁₀ Alkylgruppe, eine halogenierte C₁-C₁₀ Alkylgruppe, eine C₆-C₂₀ Arylgruppe oder eine halogenierte C₆-C₂₀ Arylgruppe sind, oder L sind eine Toluolsulfonyl-, Trifluoracetyl-, Trifluoracetoxyl-, Trifluormethansulfonyl-, Nonafluorbutansulfonyl- oder 2,2,2-Trifluorethansulfonyl-Gruppe,
n eine ganze Zahl von 1 bis 4 ist,
Z gleich M²R¹⁰R¹¹ ist, worin M² Kohlenstoff, Silizium, Germanium, Bor oder Zinn ist und R¹⁰ und R¹¹ gleich oder verschieden sind und C₁-C₁₀-Alkyl, C₆-C₁₄-Aryl oder Trimethylsilyl bedeuten, und
v ist 1.

2. Verbindungen gemäß Anspruch 1, **dadurch gekennzeichnet, daß**
M¹ für Ti, Zr, Hf, Ni, Co, Fe, Pd, Sc, Cr und Nb steht,
R¹ gleich oder verschieden sind und ein Wasserstoffatom oder Si(R¹²)₃ sind, worin R¹² gleich oder verschieden ist und für Wasserstoffatom, C₁-C₂₀-Alkyl, C₁-C₁₀₋Fluoralkyl, C₁-C₁₀-Alkoxy, C₆-C₂₀-Aryl, C₆-C₁₀-Fluoraryl, C₆-C₁₀-Aryloxy, C₂-C₁₀₋Alkenyl, C₇-C₄₀-Arylalkyl, C₇-C₄₀-Alkylaryl oder C₈-C₄₀-Arylalkenyl steht,
oder R¹ gleich oder verschieden sind und für C₁-C₂₅-Alkyl, C₂-C₂₅-Alkenyl, C₃₋C₁₅-Alkylalkenyl, C₆-C₂₄-Aryl, C₅-C₂₄-Heteroaryl, C₇-C₃₀-Arylalkyl, C₇-C₃₀₋Alkylaryl, fluorhaltiges C₁-C₂₅-Alkyl, fluorhaltiges C₆-C₂₄-Aryl, fluorhaltiges C₇₋C₃₀-Arylalkyl, fluorhaltiges C₇-C₃₀-Alkylaryl oder C₁-C₁₂-Alkoxy steht,
oder zwei oder mehrere Reste R¹ können so miteinander verbunden sein, daß die Reste R¹ und die sie verbindenden Atome des Cyclopentadienylringes ein C₄-C₂₄-Ringsystem bilden, welches seinerseits substituiert sein kann,
R² gleich oder verschieden sind und ein Wasserstoffatom oder Si(R¹²)₃ sind, worin R¹² gleich oder verschieden und für ein Wasserstoffatom, C₁-C₂₀-Alkyl, C₁-C₁₀₋Fluoralkyl, C₁-C₁₀-Alkoxy, C₆-C₁₄-Aryl, C₆-C₁₀-Fluoraryl, C₆-C₁₀-Aryloxy, C₂-C₁₀₋Alkenyl, C₇-C₄₀-Arylalkyl, C₇-C₄₀-Alkylaryl oder C₈-C₄₀-Arylalkenyl steht,
oder R² gleich oder verschieden sind und C₁-C₂₅-Alkyl, C₂-C₂₅-Alkenyl, C₃-C₁₅₋Alkylalkenyl, C₆-C₂₄-Aryl, C₅-C₂₄-Heteroaryl die mit dem Cyclopentadienylring Azapentalene, Thiopentalen oder Phosphorpentalene bilden, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy bedeuten,
oder zwei oder mehrere Reste R² können so miteinander verbunden sein, daß die Reste R² und die sie verbindenden Atome des Cyclopentadienylringes ein C₄-C₂₄-Ringsystem bilden, welches seinerseits substituiert sein kann,
R⁵, R⁶ gleich oder verschieden sind und ein Wasserstoffatom oder Si(R¹²)₃ sind,
worin R¹² gleich oder verschieden ein Wasserstoffatom, C₁-C₂₀-Alkyl, C₁₋C₁₀-Fluoralkyl, C₁-C₁₀-Alkoxy, C₆-C₂₀-Aryl, C₆-C₁₀-Fluoraryl, C₆-C₁₀₋Aryloxy, C₂-C₁₀-Alkenyl, C₇-C₄₀-Arylalkyl, C₇-C₄₀-Alkylaryl oder C₈-C₄₀₋Arylalkenyl bedeutet,
oder R⁵ oder R⁶ gleich oder verschieden sind und C₁-C₂₅-Alkyl, C₂-C₂₅₋Alkenyl, C₃-C₁₅-Alkylalkenyl, C₆-C₂₄-Aryl, C₅-C₂₄-Heteroaryl, C₇-C₃₀₋Arylalkyl, C₇-C₃₀-Alkylaryl, fluorhaltiges C₁-C₂₅-Alkyl, fluorhaltiges C₆-C₂₄₋Aryl, fluorhaltiges C₇-C₃₀-Arylalkyl, fluorhaltiges C₇-C₃₀-Alkylaryl oder C₁₋C₁₂-Alkoxy bedeuten,
oder die Reste R⁵ und R⁶ können miteinander verbunden sein, daß die Reste R⁵ und R⁶ ein C₄-C₂₄-Ringsystem bilden, welches seinerseits substituiert sein kann,
R⁶⁰ für Wasserstoff steht,
L gleich oder verschieden sein können und ein Wasserstoffatom, C₁-C₁₀-Alkyl oder C₆-C₁₀-Aryl, ein Halogenatom, oder OR⁹, SR⁹, OSiR⁹₃, SiR⁹₃, PR⁹₂ oder NR⁹₂ bedeuten, worin R⁹ ein Halogenatom, eine C₁-C₁₀ Alkylgruppe, eine halogenierte C₁-C₁₀ Alkylgruppe, eine C₆-C₂₀ Arylgruppe oder eine halogenierte C₆-C₂₀ Arylgruppe sind, oder L sind eine Toluolsulfonyl-, Trifluoracetyl-, Trifluoracetoxyl-, Trifluor-methansulfonyl-, Nonafluorbutansulfonyl- oder 2,2,2-Trifluorethansulfonyl-Gruppe,
n gleich 2 ist.

3. Verbindungen gemäß Anspruch 1, **dadurch gekennzeichnet, daß** Z für CH₂, CH₂CH₂, CH(CH₃)CH₂, CH(C₄H₉)C(CH₃)₂, C(CH₃)₂, (CH₃)₂Si, (CH₃)₂Ge, (CH₃)₂Sn, (C₆H₅)₂Si, (C₆H₅)(CH₃)Si, (C₆H₅)₂Ge, (CH₃)₃Si-Si(CH₃)(C₆H₅)₂Sn, (CH₂)₄Si, CH₂Si(CH₃)₂, o-C₆H₄ oder 2,2'-(C₆H₄)₂, sowie 1,2-(1-Methyl-ethandiyl)-, 1,2-(1,1-Dimethyl-ethandiyl)- und 1,2(1,2-Dimethyl-ethandiyl)-Brücken steht.

4. Verbindungen gemäß Anspruch 1, **dadurch gekennzeichnet, daß** Formel (I) für verbrückte metallorganische Verbindungen steht bei denen v gleich 1 ist und der Cyclopentadienylring mit R² substituiert ist, so daß ein Indenylring resultiert.

5. Verbindungen der Formel (II), 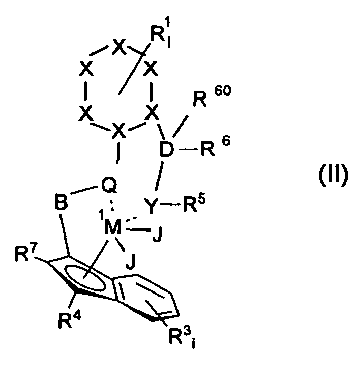 worin
M¹ gleich Ti, Zr oder Hf ist, besonders bevorzugt Zirkonium,
R¹ gleich oder verschieden sind und ein Wasserstoffatom, O-Si(R¹²)₃ oder Si(R¹²)₃ sind, worin R¹² gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁₋C₁₀-Alkoxy, C₆-C₂₀-Aryl, C₆-C₁₀-Fluoraryl, C₆-C₁₀-Aryloxy, C₂-C₁₀-Alkenyl, C₇₋C₄₀-Arylalkyl, C₇-C₄₀-Alkylaryl oder C₈-C₄₀-Arylalkenyl sind,
oder R¹ gleich oder verschieden sind und eine C₁-C₃₀ - kohlenstoffhaltige Gruppe wie C₁-C₂₅-Alkyl, C₂-C₂₅-Alkenyl, C₃-C₁₅-Alkylalkenyl, C₆-C₂₄-Aryl, C₅₋C₂₄-Heteroaryl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀₋Alkylaryl oder C₁-C₁₂-Alkoxy ist,
oder zwei oder mehrere Reste R¹ können so miteinander verbunden sein, daß die Reste R¹ und die sie verbindenden Atome ein C₄-C₂₄-Ringsystem bilden, welches seinerseits substituiert sein kann,
R⁴, R⁷ gleich ein Wasserstoffatom, ein C₁-C₂₀ - kohlenstoffhaltige Gruppe, bevorzugt C₁-C₁₈-Alkyl, wie Methyl, Ethyl, n-Butyl, n-Hexyl, Cyclohexyl oder Octyl, C₂-C₁₀-Alkenyl, C₃-C₁₅-Alkylalkenyl, C₆-C₁₈-Aryl, C₅-C₁₈-Heteroaryl, C₇₋C₂₀-Arylalkyl, C₇-C₂₀-Alkylaryl, fluorhaltiges C₁-C₁₂-Alkyl, fluorhaltiges C₆-C₁₈₋Aryl, fluorhaltiges C₇-C₂₀-Arylalkyl oder fluorhaltiges C₇-C₂₀-Alkylaryl ist,
R⁵, R⁶ gleich oder verschieden sind und ein Wasserstoffatom oder Si(R¹²)₃ sind, worin R¹² gleich oder verschieden ein Wasserstoffatom oder eine C₁-C₄₀₋kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀₋Arylalkyl, C₇-C₄₀-Alkylaryl oder C₈-C₄₀-Arylalkenyl sind,
oder R⁵ oder R⁶ gleich oder verschieden sind und eine C₁-C₃₀₋kohlenstoffhaltige Gruppe wie C₁-C₂₅-Alkyl, z. B. Methyl, Ethyl, tert.-Butyl, n-Hexyl, n-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist,
oder die Reste R⁵ und R⁶ können miteinander verbunden sein, daß die Reste R⁵ und R⁶ ein C₄-C₂₄-Ringsystem bilden, welches seinerseits substituiert sein kann,
R³ ein Wasserstoffatom, Halogenatom oder eine C₁-C₂₀ - kohlenstoffhaltige Gruppe bedeuteten, bevorzugt eine lineare oder verzweigte C₁-C₁₈₋Alkylgruppe, wie Methyl, Ethyl, tert.-Butyl, Cyclohexyl oder Octyl, C₂-C₁₀₋Alkenyl, C₃-C₁₅-Alkylalkenyl, eine C₆-C₁₈-Arylgruppe, die gegebenenfalls substituiert sein kann, insbesondere Phenyl, Tolyl, Xylyl, tert.-Butylphenyl, Ethylphenyl, Naphthyl, Acenaphthyl, Phenanthrenyl oder Anthracenyl, C₅₋C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl sind, und zwei oder mehr Reste R³ ein mono- oder polycyclisches Ringssystem bilden können, das seinerseits gegebenenfalls substituiert sein kann,
R⁶⁰ ein Wasserstoffatom oder eine C₁-C₁₂-Alkylgruppe, bevorzugt ein Wasserstoffatom,
J ein Halogenatom, insbesondere Chlor ist, eine C₁-C₁₈-Alkylgruppe, insbesondere Methyl, Ethyl, tert.-Butyl, oder ein substituiertes oder unsubstituiertes Phenolat ist,
Q, Y, D ein Element der 13., 14., 15. oder 16. Gruppe des Periodensystems der Elemente ist, insbesondere Bor, Kohlenstoff, Silicium, Stickstoff, Sauerstoff und Schwefel ist,
X gleich und verschieden sein können und ein Element der 13., 14., 15. oder 16. Gruppe des Periodensystems der Elemente ist, insbesondere Bor, Kohlenstoff, Silicium, Stickstoff, Sauerstoff und Schwefel ist, wobei sie untereinander cyclische Systeme wie Aromaten oder Aliphaten, bei denen ein oder mehrere C-Atome durch N, O, S, B ersetzt sein können, bilden, insbesondere Phenyl, Naphtyl, Adamanthyl, Fluorenyl, Cyclohexyl, Boratabenzol, die ihrerseits mit R¹ substituiert sein können,
l, i gleich oder verschieden eine ganze Zahl zwischen Null und 4, bevorzugt 1 oder 2, besonders bevorzugt gleich 1 sind,
B M³R¹³R¹⁴ ist, worin M³ Silicium oder Kohlenstoff ist und R¹³ und R¹⁴ gleich oder verschieden sind und C₁-C₁₀-Alkyl, C₆-C₁₄-Aryl oder Trimethylsilyl bedeuten, und
R⁶⁰ ein Wasserstoffatom ist.

6. Verbindung gemäß Anspruch 5, **dadurch gekennzeichnet, daß** der Indenylring in 2-, 4-, 2,4,5-, 2,4,6-, 2,4,7 oder 2,4,5,6-Stellung, mit einem oder mehreren Resten R³ substituiert ist und R³ eine C₁-C₂₀-kohlenstoffhaltigen Gruppen, wie C₁-C₁₈-Alkyl oder C₆-C₁₈-Aryl, wobei auch zwei oder mehrere Substituenten R³ zusammen ein Ringsystem bilden können.

7. Verbindung gemäß Anspruch 5, **dadurch gekennzeichnet, daß**
M¹ gleich Zirkonium ist,
R⁷ ein Wasserstoffatom oder lineare oder verzweigte C₁-C₁₂-Alkylgruppe ist,
R⁵ ein Wasserstoffatom, Halogenatom oder eine lineare oder verzweigte C₁-C₈₋Alkylgruppe, C₂-C₆-Alkenyl, C₃-C₆-Alkylalkenyl, eine C₆-C₁₈-Arylgruppe, die gegebenenfalls substituiert sein kann, C₅-C₁₈-Heteroaryl, C₇-C₁₂-Arylalkyl, C₇₋C₁₂-Alkylaryl, fluorhaltiges C₁-C₈-Alkyl, fluorhaltiges C₆-C₁₈-Aryl, fluorhaltiges C₇-C₁₂-Arylalkyl oder fluorhaltiges C₇-C₁₂-Alkylaryl ist,
R⁶ gleich oder verschieden sind und ein Wasserstoffatom oder eine C₁-C₁₂₋Alkylgruppe ist,
R³ ein Wasserstoffatom, Halogenatom oder eine lineare oder verzweigte C₁-C₈₋Alkylgruppe, C₂-C₆-Alkenyl, C₃-C₆-Alkylalkenyl, eine C₆-C₁₈-Arylgruppe, eine substituierte C₆-C₁₈-Arylgruppe, C₅-C₁₈-Heteroaryl, C₇-C₁₂-Arylalkyl, C₇-C₁₂₋Alkylaryl, fluorhaltiges C₁-C₈-Alkyl, fluorhaltiges C₆-C₁₈-Aryl, fluorhaltiges C₇₋C₁₂-Arylalkyl oder fluorhaltiges C₇-C₁₂-Alkylaryl ist,
J Chlor oder Methyl ist,
Q, Y, D unabhängig voneinander ein Element der 14., 15. oder 16. Gruppe des Periodensystems der Elemente ist,
X gleich und verschieden sein können und ein Element der 14., 15. oder 16. Gruppe des Periodensystems der Elemente ist,
I, i gleich oder verschieden eine ganze Zahl zwischen Null und 4 ist,
B ein verbrückendes Strukturelement bezeichnet und für bivalente Reste Si(Me)₂, Si(Ph)₂, Si(Et)₂, Si(MePh), CH₂, CH₂CH₂, (CH₃)₃Si-Si(CH₃) bei denen Me für Methyl, Et für Ethyl und Ph für Phenyl steht, bedeuten.

8. Verbindungen der Formel (IIa) 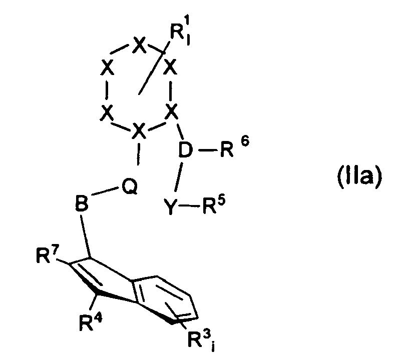 worin
R¹ gleich oder verschieden sind und ein Wasserstoffatom, O-Si(R¹²)₃ oder Si(R¹²)₃ sind, worin R¹² gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁₋C₁₀-Alkoxy, C₆-C₂₀-Aryl, C₆-C₁₀-Fluoraryl, C₆-C₁₀-Aryloxy, C₂-C₁₀-Alkenyl, C₇₋C₄₀-Arylalkyl, C₇-C₄₀-Alkylaryl oder C₈-C₄₀-Arylalkenyl sind,
oder R¹ gleich oder verschieden sind und eine C₁-C₃₀ - kohlenstoffhaltige Gruppe wie C₁-C₂₅-Alkyl, C₂-C₂₅-Alkenyl, C₃-C₁₅-Alkylalkenyl, C₆-C₂₄-Aryl, C₅₋C₂₄-Heteroaryl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇-C₃₀₋Alkylaryl oder C₁-C₁₂-Alkoxy ist,
oder zwei oder mehrere Reste R¹ können so miteinander verbunden sein, daß die Reste R¹ und die sie verbindenden Atome ein C₄-C₂₄-Ringsystem bilden, welches seinerseits substituiert sein kann,
R⁴, R⁷ gleich ein Wasserstoffatom, ein C₁-C₂₀ - kohlenstoffhaltige Gruppe, bevorzugt C₁-C₁₈-Alkyl, wie Methyl, Ethyl, n-Butyl, n-Hexyl, Cyclohexyl oder Octyl, C₂-C₁₀-Alkenyl, C₃-C₁₅-Alkylalkenyl, C₆-C₁₈-Aryl, C₅-C₁₈-Heteroaryl, C₇₋C₂₀-Arylalkyl, C₇-C₂₀-Alkylaryl, fluorhaltiges C₁-C₁₂-Alkyl, fluorhaltiges C₆-C₁₈₋Aryl, fluorhaltiges C₇-C₂₀-Arylalkyl oder fluorhaltiges C₇-C₂₀-Alkylaryl ist,
R⁵, R⁶ gleich oder verschieden sind und ein Wasserstoffatom oder Si(R¹²)₃ sind,
worin R¹² gleich oder verschieden ein Wasserstoffatom oder eine C₁-C₄₀₋kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀₋Arylalkyl, C₇-C₄₀-Alkylaryl oder C₈-C₄₀-Arylalkenyl sind,
oder R⁵ oder R⁶ gleich oder verschieden sind und eine C₁-C₃₀₋kohlenstoffhaltige Gruppe wie C₁-C₂₅-Alkyl, z. B. Methyl, Ethyl, tert.-Butyl, n-Hexyl, Cyclohexyl oder Octyl, C₂-C₂₅-Alkenyl, C₃-C₁₅-Alkylalkenyl, C₆-C₂₄₋Aryl, C₅-C₂₄-Heteroaryl, C₇-C₃₀-Arylalkyl, C₇-C₃₀-Alkylaryl, fluorhaltiges C₁₋C₂₅-Alkyl, fluorhaltiges C₆-C₂₄-Aryl, fluorhaltiges C₇-C₃₀-Arylalkyl, fluorhaltiges C₇-C₃₀-Alkylaryl oder C₁-C₁₂-Alkoxy ist,
oder die Reste R⁵ und R⁶ können miteinander verbunden sein, daß die Reste R⁵ und R⁶ ein C₄-C₂₄-Ringsystem bilden, welches seinerseits substituiert sein kann,
R³ ein Wasserstoffatom, Halogenatom oder eine C₁-C₂₀ - kohlenstoffhaltige Gruppe bedeuteten, bevorzugt eine lineare oder verzweigte C₁-C₁₈₋Alkylgruppe, wie Methyl, Ethyl, tert.-Butyl, Cyclohexyl oder Octyl, C₂-C₁₀₋Alkenyl, C₃-C₁₅-Alkylalkenyl, eine C₆-C₁₈-Arylgruppe, die gegebenenfalls substituiert sein kann, insbesondere Phenyl, Tolyl, Xylyl, tert.-Butylphenyl, Ethylphenyl, Naphthyl, Acenaphthyl, Phenanthrenyl oder Anthracenyl, C₅₋C₁₈-Heteroaryl, C₇-C₂₀-Arylalkyl, C₇-C₂₀-Alkylaryl, fluorhaltiges C₁-C₁₂-Alkyl, fluorhaltiges C₆-C₁₈-Aryl, fluorhaltiges C₇-C₂₀-Arylalkyl oder fluorhaltiges C₇-C₂₀-Alkylaryl sind, und zwei oder mehr Reste R³ ein mono- oder polycyclisches Ringssystem bilden können, das seinerseits gegebenenfalls substituiert sein kann,
Q, Y, D ein Element der 13., 14., 15. oder 16. Gruppe des Periodensystems der Elemente ist, insbesondere Bor, Kohlenstoff, Silicium, Stickstoff, Sauerstoff und Schwefel ist,
X gleich und verschieden sein können und ein Element der 13., 14., 15. oder 16. Gruppe des Periodensystems der Elemente ist, insbesondere Bor, Kohlenstoff, Silicium, Stickstoff, Sauerstoff und Schwefel ist, wobei sie untereinander cyclische Systeme wie Aromaten oder Aliphaten, bei denen ein oder mehrere C-Atome durch N, O, S, B ersetzt sein können, bilden, insbesondere Phenyl, Naphtyl, Adamanthyl, Fluorenyl, Cyclohexyl, Boratabenzol, die ihrerseits mit R¹ substituiert sein können,
l, i gleich oder verschieden eine ganze Zahl zwischen Null und 4 ist,
B M³R¹³R¹⁴ ist, worin M³ Silicium oder Kohlenstoff ist und R¹³ und R¹⁴ gleich oder verschieden sind und C₁-C₁₀-Alkyl, C₆-C₁₄-Aryl oder Trimethylsilyl bedeuten.

9. Katalysatorsystem enthaltend ein oder mehrere Verbindung gemäß einem der Ansprüche 1 bis 7 sowie ein oder mehrere Cokatalysatoren und/oder einen oder mehrere Träger.

10. Verwendung einer Verbindung gemäß Anspruch 8 zur Herstellung einer Verbindung gemäß Anspruch 5.

11. Verwendung einer oder mehrer Verbindungen gemäß einem der Ansprüche 1 bis 7 zur Herstellung eines Polyolefins.

12. Verwendung eines Katalysatorsystem gemäß Anspruch 9 zur Herstellung eines Polyolefins.

13. Verfahren zur Herstellung eines Polyolefins durch Polymerisation eines oder mehrer Olefine in Gegenwart einer oder mehrer Verbindungen gemäß den Ansprüchen 1 bis 7.

## Claims

1. A compound of the formula (I) 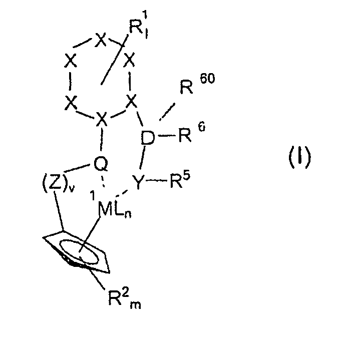 where
M¹ is Ti, Zr, Hf, Ni, Co, Fe, Pd, Sc, Cr or Nb,
R¹ are identical or different and are each a hydrogen atom or Si(R¹²)₃, where R¹² are identical or different and are each a hydrogen atom or a C₁-C₄₀ group such as C₁-C₂₀-alkyl, C₁₋C₁₀-fluoroalkyl, C₁-C₁₀-alkoxy, C₆-C₂₀-aryl, C₆₋C₁₀-fluoroaryl, C₆-C₁₀-aryloxy, C₂-C₁₀-alkenyl, C₇-C₄₀-arylalkyl, C₇-C₄₀-alkylaryl or C₈-C₄₀₋arylalkenyl,
or R¹ are identical or different and are each a C₁-C₃₀ group such as C₁-C₂₅-alkyl, C₂-C₂₅-alkenyl, C₃-C₁₅-alkylalkenyl, C₆-C₂₄-aryl, C₅-C₂₄₋heteroaryl, C₇-C₃₀-arylalkyl, C₇-C₃₀-alkylaryl, fluorinated C₁-C₂₅-alkyl, fluorinated C₆-C₂₄₋aryl, fluorinated C₇-C₃₀-arylalkyl, fluorinated C₇-C₃₀-alkylaryl or C₁-C₁₂-alkoxy,
or two or more radicals R¹ may be joined to one another so that the radicals R¹ and the atoms which connect them form a C₄-C₂₄ ring system which may in turn be substituted,
R² are identical or different and are each a hydrogen atom or Si(R¹²)₃, where R¹² are identical or different and are each a hydrogen atom or a C₁-C₄₀ group such as C₁-C₂₀-alkyl, C₁₋C₁₀-fluoroalkyl, C₁-C₁₀-alkoxy, C₆-C₁₄-aryl, C₆₋C₁₀-fluoroaryl, C₆-C₁₀-aryloxy, C₂-C₁₀-alkenyl, C₇-C₄₀-arylalkyl, C₇-C₄₀-alkylaryl or C₈-C₄₀₋arylalkenyl,
or R² are identical or different and are each a C₁-C₃₀ group such as C₁-C₂₅-alkyl, C₂-C₂₅-alkenyl, C₃-C₁₅-alkylalkenyl, C₆-C₂₄-aryl, C₅-C₂₄₋heteroaryl which together with the cyclopentadienyl ring form azapentalenes, thiapentalenes or phosphapentalenes, C₇-C₃₀₋arylalkyl, C₇-C₃₀-alkylaryl, fluorinated C₁-C₂₅₋alkyl, fluorinated C₆-C₂₄-aryl, fluorinated C₇₋C₃₀-arylalkyl, fluorinated C₇-C₃₀-alkylaryl or C₁-C₁₂-alkoxy,
or two or more radicals R² may be joined to one another so that the radicals R² and the atoms of the cyclopentadienyl ring which connect them form a C₄-C₂₄ ring system which may in turn be substituted,
R⁵, R⁶ are identical or different and are each a hydrogen atom or Si(R¹²)₃, where R¹² are identical or different and are each a hydrogen atom or a C₁-C₄₀ group such as C₁-C₂₀-alkyl, C₁₋C₁₀-fluoroalkyl, C₁-C₁₀-alkoxy, C₆-C₂₀-aryl, C₆₋C₁₀-fluoroaryl, C₆-C₁₀-aryloxy, C₂-C₁₀-alkenyl, C₇-C₄₀-arylalkyl, C₇-C₄₀-alkylaryl or C₈-C₄₀₋arylalkenyl,
or R⁵ and R⁶ are identical or different and are each a C₁-C₃₀ group such as C₁-C₂₅-alkyl, C₂-C₂₅₋alkenyl, C₃-C₁₅-alkylalkenyl, C₆-C₂₄-aryl, C₅-C₂₄₋heteroaryl, C₇-C₃₀-arylalkyl, C₇-C₃₀-alkylaryl, fluorinated C₁-C₂₅-alkyl, fluorinated C₆-C₂₄₋aryl, fluorinated C₇-C₃₀-arylalkyl, fluorinated C₇-C₃₀-alkylaryl or C₁-C₁₂-alkoxy,
or the radicals R⁵ and R⁶ may be joined to one another so that the radicals R⁵ and R⁶ form a C₂-C₂₄ ring system which may in turn be substituted,
R⁶⁰ is a hydrogen atom or a C₁-C₁₂-alkyl group,
l is 4,
m is 4,
D, Q, Y are each an element of group 13, 14, 15 or 16 of the Periodic Table of the Elements,
X may be identical or different and are each an element of group 13, 14, 15 or 16 of the Periodic Table of the Elements and may form cyclic systems such as aromatics or aliphatics with one another,
L may be identical or different and are each a hydrogen atom, a C₁-C₁₀-hydrocarbon group such as C₁-C₁₀-alkyl or C₆-C₁₀-aryl, a halogen atom or OR⁹, SR⁹, OSiR⁹₃, SiR⁹₃, PR⁹₂ or NR⁹₂, where R⁹ is a halogen atom, a C₁-C₁₀-alkyl group, a halogenated C₁-C₁₀-alkyl group, a C₆-C₂₀-aryl group or a halogenated C₆-C₂₀-aryl group, or L is a toluenesulfonyl, trifluoroacetyl, trifluoroacetoxyl, trifluoromethanesulfonyl, nonafluorobutanesulfonyl or 2,2,2-trifluoroethanesulfonyl group,
n is an integer from 1 to 4,
Z is M²R¹⁰R¹¹, where M² is carbon, silicon, germanium boron or tin and R¹⁰ and R¹¹ are identical or different and are each C₁-C₁₀₋alkyl, C₆-C₁₄-aryl or trimethylsilyl, and
v is 1.

2. The compound according to claim 1, wherein
M¹ is Ti, Zr, Hf, Ni, Co, Fe, Pd, Sc, Cr and Nb
R¹ are identical or different and are each a hydrogen atom or Si(R¹²)₃, where R¹² are identical or different and are each a hydrogen atom, C₁-C₂₀₋alkyl, C₁-C₁₀-fluoroalkyl, C₁-C₁₀-alkoxy, C₆-C₂₀₋aryl, C₆-C₁₀-fluoroaryl, C₆-C₁₀-aryloxy, C₂-C₁₀₋alkenyl, C₇-C₄₀-arylalkyl, C₇-C₄₀-alkylaryl or C₈₋C₄₀-arylalkenyl,
or R¹ are identical or different and are each C₁₋C₂₅-alkyl, C₂-C₂₅-alkenyl, C₃-C₁₅-alkylalkenyl, C₆₋C₂₄-aryl, C₅-C₂₄-heteroaryl, C₇-C₃₀-arylalkyl, C₇-C₃₀₋alkylaryl, fluorinated C₁-C₂₅-alkyl, fluorinated C₆₋C₂₄-aryl, fluorinated C₇-C₃₀-arylalkyl, fluorinated C₇-C₃₀-alkylaryl or C₁-C₁₂-alkoxy,
or two or more radicals R¹ may be joined to one another so that the radicals R¹ and the atoms of the cyclopentadienyl ring which connect them form a C₄-C₂₄ ring system which may in turn be substituted,
R² are identical or different and are each a hydrogen atom or Si(R¹²)₃, where R¹² are identical or different and are each a hydrogen atom, C₁-C₂₀₋alkyl, C₁-C₁₀-fluoroalkyl, C₁-C₁₀-alkoxy, C₆-C₁₄₋aryl, C₆-C₁₀-fluoroaryl, C₆-C₁₀-aryloxy, C₂-C₁₀₋alkenyl, C₇-C₄₀-arylalkyl, C₇-C₄₀-alkylaryl or C₈₋C₄₀-arylalkenyl,
or R² are identical or different and are each C₁₋C₂₅-alkyl, C₂-C₂₅-alkenyl, C₃-C₁₅-alkylalkenyl, C₆₋C₂₄-aryl, C₅-C₂₄-heteroaryl which together with the cyclopentadienyl ring form azapentalenes, thiapentalenes of phosphapentalenes, C₇-C₃₀₋arylalkyl, C₇-C₃₀-alkylaryl, fluorinated C₁-C₂₅₋alkyl, fluorinated C₆-C₂₄-aryl, fluorinated C₇-C₃₀₋arylalkyl, fluorinated C₇-C₃₀-alkylaryl or C₁-C₁₂₋alkoxy,
or two or more radicals R² may be joined to one another so that the radicals R² and the atoms of the cyclopentadienyl ring which connect them form a C₄-C₂₄ ring system which may in turn be substituted,
R⁵, R⁶ are identical or different and are each a hydrogen atom or Si(R¹²)₃, where R¹² are identical or different and are each a hydrogen atom, C₁-C₂₀₋alkyl, C₁-C₁₀-fluoroalkyl, C₁-C₁₀-alkoxy, C₆-C₂₀₋aryl, C₆-C₁₀-fluoroaryl, C₆-C₁₀-aryloxy, C₂-C₁₀₋alkenyl, C₇-C₄₀-arylalkyl, C₇-C₄₀-alkylaryl or C₈₋C₄₀-arylalkenyl,
or R⁵ and R⁶ are identical or different and are each C₁-C₂₅-alkyl, C₂-C₂₅-alkenyl, C₃-C₁₅₋alkylalkenyl, C₆-C₂₄-aryl, C₅-C₂₄-heteroaryl, C₇-C₃₀₋arylalkyl, C₇-C₃₀-alkylaryl, fluorinated C₁-C₂₅₋alkyl, fluorinated C₆-C₂₄-aryl, fluorinated C₇-C₃₀₋arylalkyl, fluorinated C₇-C₃₀-alkylaryl or C₁-C₁₂₋alkoxy,
or the radicals R⁵ and R⁶ may be joined to one another so that the radicals R⁵ and R⁶ form a C₄₋C₂₄-ring system which may in turn be substituted,
R⁶⁰ is hydrogen,
L may be identical or different and are each a hydrogen atom, C₁-C₁₀-alkyl or C₆-C₁₀-aryl, a halogen atom or OR⁹, SR⁹, OSiR⁹₃, SiR⁹₃, PR⁹₂ or NR⁹₂, where R⁹ is a halogen atom, a C₁-C₁₀-alkyl group, a halogenated C₁-C₁₀-alkyl group, a C₆-C₂₀-aryl group or a halogenated C₂-C₂₀-aryl group, or L is a toluenesulfonyl, trifluoroacetyl, trifluoroacetoxyl, trifluoromethanesulfonyl, nonafluorobutanesulfonyl or 2,2,2-trifluoroethanesulfonyl group,
n is 2.

3. The compound according to claim 1, wherein Z is CH₂, CH₂CH₂, CH(CH₃)CH₂, CH(C₄H₉)C(CH₃)₂, C(CH₃)₂, C(CH₃)₂Si, (CH₃)₂Ge, (CH₃)₂Sn, (C₆H₅)₂Si, (C₆H₅)(CH₃)Si, (C₆H₅)₂Ge, (CH₃)₃Si-Si(CH₃)(C₆H₅)₂-Sn, (CH₂)₄Si, CH₂Si(CH₃)₂, o-C₆H₄ or 2,2'-(C₆H₄)₂ or a 1,2-(1-methylethanediyl), 1,2-(1,1-dimethylethanediyl) or 1,2-(1,2-dimethylethanediyl) bridge.

4. The compound according to claim 1, wherein the formula (I) represents a bridged organometallic compound in which v is 1 and the cyclopentadienyl ring is substituted by R² so as to form an indenyl ring.

5. A compound of the formula (II), 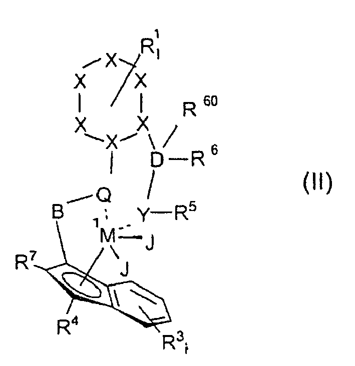 where
M¹ is Ti, Zr or Hf, particularly preferably zirconium,
R¹ are identical or different and are each a hydrogen atom, O-Si (R¹²)₃ or Si (R¹²)₃, where R¹² are identical or different and are each a hydrogen atom or a C₁-C₄₀ group such as C₁-C₂₀₋alkyl, C₁-C₁₀-fluoroalkyl, C₁-C₁₀-alkoxy, C₆-C₂₀₋aryl, C₆-C₁₀-fluoroaryl, C₆-C₁₀-aryloxy, C₂-C₁₀₋alkenyl, C₇-C₄₀-arylalkyl, C₇-C₄₀-alkylaryl or C₈₋C₄₀-arylalkenyl,
or R¹ are identical or different and are each a C₁-C₃₀ group such as C₁-C₂₅-alkyl, C₂-C₂₅-alkenyl, C₃-C₁₅-alkylalkenyl, C₆-C₂₄-aryl, C₅-C₂₄₋heteroaryl, C₇-C₃₀-arylalkyl, C₇-C₃₀-alkylaryl, fluorinated C₁-C₂₅-alkyl, fluorinated C₆-C₂₄₋aryl, fluorinated C₇-C₃₀-arylalkyl, fluorinated C₇-C₃₀-alkylaryl or C₁-C₁₂-alkoxy,
or two or more radicals R¹ may be joined to one another so that the radicals R¹ and the atoms connecting them form a C₄-C₂₄ ring system which may in turn be substituted,
R⁴, R⁷ are each a hydrogen atom, a C₁-C₂₀ group, preferably C₁-C₁₈-alkyl such as methyl, ethyl, n-butyl, n-hexyl, cyclohexyl or octyl, C₂-C₁₀₋alkenyl, C₃-C₁₅-alkylalkenyl, C₆-C₁₈-aryl, C₅-C₁₈₋heteroaryl, C₇-C₂₀-arylalkyl, C₇-C₂₀-alkylaryl, fluorinated C₁-C₁₂-alkyl, fluorinated C₆-C₁₈₋aryl, fluorinated C₇-C₂₀-arylalkyl or fluorinated C₇-C₂₀-alkylaryl,
R⁵, R⁶ are identical or different and are each a hydrogen atom or Si(R¹²)₃, where R¹² are identical or different and are each a hydrogen atom or a C₁-C₄₀ group such as C₁-C₂₀-alkyl, C₁₋C₁₀-fluoroalkyl, C₁-C₁₀-alkoxy, C₆-C₂₀-aryl, C₆₋C₁₀-fluoroaryl, C₆-C₁₀-aryloxy, C₂-C₁₀-alkenyl, C₇-C₄₀-arylalkyl, C₇-C₄₀-alkylaryl or C₈-C₄₀₋arylalkenyl,
or R⁵ and R⁶ are identical or different and are each a C₁-C₃₀ group such as C₁-C₂₅-alkyl, e.g. methyl, ethyl, tert-butyl, n-hexyl, n-butyl, cyclohexyl or octyl, C₂-C₂₅-alkenyl, C₃-C₁₅₋alkylalkenyl, C₆-C₂₄-aryl, C₅-C₂₄-heteroaryl, C₇₋C₃₀-arylalkyl, C₇-C₃₀-alkylaryl, fluorinated C₁₋C₂₅-alkyl, fluorinated C₆-C₂₄-aryl, fluorinated C₇-C₃₀-arylalkyl, fluorinated C₇-C₃₀-alkylaryl or C₁-C₁₂-alkoxy,
or the radicals R⁵ and R⁶ may be joined to one another so that the radicals R⁵ and R⁶ form a C₄-C₂₄ ring system which may in turn be substituted,
R³ is a hydrogen atom, a halogen atom or a C₁-C₂₀ group, preferably a linear or branched C₁-C₁₈₋alkyl group such as methyl, ethyl, tert-butyl, cyclohexyl or octyl, C₂-C₁₀-alkenyl, C₃-C₁₅₋alkylalkenyl, a C₆-C₁₈-aryl group which may be substituted, in particular phenyl, tolyl, xylyl, tert-butylphenyl, ethylphenyl, naphthyl, acenaphthyl, phenanthrenyl or anthracenyl, C₅₋C₁₈-heteroaryl, C₇-C₂₀-arylalkyl, C₇-C₂₀₋alkylaryl, fluorinated C₁-C₁₂-alkyl, fluorinated C₆-C₁₈-aryl, fluorinated C₇-C₂₀-arylalkyl or fluorinated C₇-C₂₀-alkylaryl, or two or more radicals R³ may form a monocyclic or polycyclic ring system which may in turn be substituted,
R⁶⁰ is a hydrogen atom or a C₁-C₁₂-alkyl group, preferably a hydrogen atom,
J is a halogen atom, in particular chlorine, an alkyl group such as a C₁-C₁₈-alkyl group, in particular methyl, ethyl, tert-butyl, or a substituted or unsubstituted phenoxide,
Q, Y, D are each an element of group 13, 14, 15 or 16 of the Periodic Table of the Elements, in particular boron, carbon, silicon, nitrogen, oxygen or sulfur,
X may be identical or different and are each an element of group 13, 14, 15 or 16 of the Periodic Table of the Elements, in particular boron, carbon, silicon, nitrogen, oxygen or sulfur, where the radicals X together form cyclic systems such as aromatics or aliphatics in which one or more carbon atoms may be replaced by N, O, S, B, in particular phenyl, naphthyl, adamantyl, fluorenyl, cyclohexyl, boratabenzene, which may in turn be substituted by R¹,
l, i are identical or different and are each an integer from 0 to 4, preferably 1 or 2, particularly preferably 1,
B is M³R¹³R¹⁴, where M³ is silicon or carbon and R¹³ and R¹⁴ are identical or different and are each C₁-C₁₀-alkyl, C₆-C₁₄-alkyl or trimethylsilyl, and
R⁶⁰ is a hydrogen atom.

6. The compound according to claim 5, wherein the indenyl ring is substituted in the 2 position, the 4 position, the 2,4,5 positions, the 2,4,6 positions, the 2,4,7 positions or the 2,4,5,6 positions by one or more radicals R³ which are each a C₁-C₂₀ group such as C₁-C₁₈-alkyl or C₆-C₁₈-aryl, where two or more substituents R³ may also together form a ring system.

7. The compound according to claim 5, wherein
M¹ is zirconium,
R⁷ is a hydrogen atom or a linear or branched C₁₋C₁₂-alkyl group,
R⁵ is a hydrogen atom, a halogen atom or a linear or branched C₁-C₈-alkyl group, C₂-C₆-alkenyl, C₃₋C₆-alkylalkenyl, a C₆-C₁₈-aryl group which may be substituted, C₅-C₁₈-heteroaryl, C₇-C₁₂-arylalkyl, C₇-C₁₂-alkylaryl, fluorinated C₁-C₈-alkyl, fluorinated C₆-C₁₈-aryl, fluorinated C₇-C₁₂₋arylalkyl or fluorinated C₇-C₁₂-alkylaryl,
R⁶ are identical or different and are each a hydrogen atom or a C₁-C₁₂-alkyl group,
R³ is a hydrogen atom, a halogen atom or a linear or branched C₁-C₈-alkyl group, C₂-C₆-alkenyl, C₃₋C₆-alkylalkenyl, a C₆-C₁₈-aryl group, a substituted C₆-C₁₈-aryl group, C₅-C₁₈-heteroaryl, C₇-C₁₂-arylalkyl, C₇-C₁₂-alkylaryl, fluorinated C₁-C₈-alkyl, fluorinated C₆-C₁₈-aryl, fluorinated C₇-C₁₂-arylalkyl or fluorinated C₇-C₁₂-alkylaryl,
J is chlorine or methyl,
Q, Y, D are each, independently of one another, an element of group 14, 15 or 16 of the Periodic Table of the Elements,
X may be identical or different and are each an element of group 14, 15 or 16 of the Periodic Table of the Elements,
l, i are identical or different and are each an integer from 0 to 4,
B is a bridging structural element and is a divalent radical Si(Me)₂, Si(Ph)₂, Si(Et)₂, Si (MePh), CH₂, CH₂CH₂, (CH₃)₃Si-Si(CH₃) where Me is methyl, Et is ethyl and Ph is phenyl.

8. A compound of the formula (IIa) 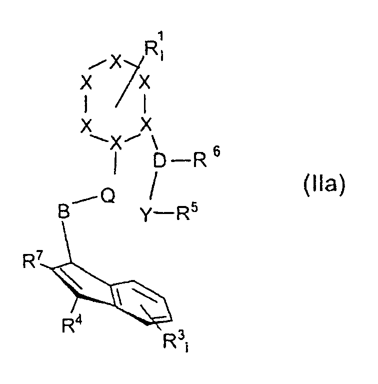 where
R¹ are identical or different and are each a hydrogen atom, O-Si(R¹²)₃ or Si(R¹²)₃, where R¹² are identical or different and are each a hydrogen atom or a C₁-C₄₀ group such as C₁-C₂₀₋alkyl, C₁-C₁₀-fluoroalkyl, C₁-C₁₀-alkoxy, C₆-C₂₀₋aryl, C₆-C₁₀-fluoroaryl, C₆-C₁₀-aryloxy, C₂-C₁₀₋alkenyl, C₇-C₄₀-arylalkyl, C₇-C₄₀-alkylaryl or C₈₋C₄₀-arylalkenyl,
or R¹ are identical or different and are each a C₁-C₃₀ group such as C₁-C₂₅-alkyl, C₂-C₂₅-alkenyl, C₃-C₁₅-alkylalkenyl, C₆-C₂₄-aryl, C₅-C₂₄₋heteroaryl, C₇-C₃₀-arylalkyl, C₇-C₃₀-alkylaryl, fluorinated C₁-C₂₅-alkyl, fluorinated C₆-C₂₄₋aryl, fluorinated C₇-C₃₀-arylalkyl, fluorinated C₇-C₃₀-alkylaryl or C₁-C₁₂-alkoxy,
or two or more radicals R¹ may be joined to one another so that the radicals R¹ and the atoms connecting them form a C₄-C₂₄ ring system which may in turn be substituted,
R⁴, R⁷ are each a hydrogen atom, a C₁-C₂₀ group, preferably C₁-C₁₈-alkyl such as methyl, ethyl, n-butyl, n-hexyl, cyclohexyl or octyl, C₂-C₁₀₋alkenyl, C₃-C₁₅-alkylalkenyl, C₆-C₁₈-aryl, C₅-C₁₈₋heteroaryl, C₇-C₂₀-arylalkyl, C₇-C₂₀-alkylaryl, fluorinated C₁-C₁₂-alkyl, fluorinated C₆-C₁₈₋aryl, fluorinated C₇-C₂₀-arylalkyl or fluorinated C₇-C₂₀-alkylaryl,
R⁵, R⁶ are identical or different and are each a hydrogen atom or Si(R¹²)₃, where R¹² are identical or different and are each a hydrogen atom or a C₁-C₄₀ group such as C₁-C₂₀-alkyl, C₁₋C₁₀-fluoroalkyl, C₁-C₁₀-alkoxy, C₆-C₂₀-aryl, C₆₋C₁₀-fluoroaryl, C₆-C₁₀-aryloxy, C₂-C₁₀-alkenyl, C₇-C₄₀-arylalkyl, C₇-C₄₀-alkylaryl or C₈-C₄₀₋arylalkenyl,
or R⁵ and R⁶ are identical or different and are each a C₁-C₃₀ group such as C₁-C₂₅-alkyl, e.g. methyl, ethyl, tert-butyl, n-hexyl, cyclohexyl or octyl, C₂-C₂₅-alkenyl, C₃-C₁₅-alkylalkenyl, C₆₋C₂₄-aryl, C₅-C₂₄-heteroaryl, C₇-C₃₀-arylalkyl, C₇₋C₃₀-alkylaryl, fluorinated C₁-C₂₅-alkyl, fluorinated C₆-C₂₄-aryl, fluorinated C₇-C₃₀₋arylalkyl, fluorinated C₇-C₃₀-alkylaryl or C₁₋C₁₂-alkoxy,
or the radicals R⁵ and R⁶ may be joined to one another so that the radicals R⁵ and R⁶ form a C₄-C₂₄ ring system which may in turn be substituted,
R³ is a hydrogen atom, a halogen atom or a C₁-C₂₀ group, preferably a linear or branched C₁-C₁₈₋alkyl group such as methyl, ethyl, tert-butyl, cyclohexyl or octyl, C₂-C₁₀-alkenyl, C₃-C₁₅₋alkylalkenyl, a C₆-C₁₈-aryl group which may be substituted, in particular phenyl, tolyl, xylyl, tert-butylphenyl, ethylphenyl, naphthyl, acenaphthyl, phenanthrenyl or anthracenyl, C₅₋C₁₈-heteroaryl, C₇-C₂₀-arylalkyl, C₇-C₂₀₋alkylaryl, fluorinated C₁-C₁₂-alkyl, fluorinated C₆-C₁₈-aryl, fluorinated C₇-C₂₀-arylalkyl or fluorinated C₇-C₂₀-alkylaryl, or two or more radicals R³ may form a monocyclic or polycyclic ring system which may in turn be substituted,
Q, Y, D are each an element of group 13, 14 15 or 16 of the Periodic Table of the Elements, in particular boron, carbon, silicon, nitrogen, oxygen or sulfur,
X may be identical or different and are each an element of group 13, 14, 15 or 16 of the Periodic Table of the Elements, in particular boron, carbon, silicon, nitrogen, oxygen or sulfur, where the radicals X together form cyclic systems such as aromatics or aliphatics in which one or more carbon atoms may be replaced by N, O, S, B, in particular phenyl, naphthyl, adamantyl, fluorenyl, cyclohexyl, boratabenzene, which may in turn be substituted by R¹,
l, i are identical or different and are each an integer from 0 to 4,
B is M³R¹³R¹⁴, where M³ is silicon or carbon and R¹³ and R¹⁴ are identical or different and are each C₁-C₁₀-alkyl, C₆-C₁₄-alkyl or trimethylsilyl.

9. A catalyst system comprising one or more compounds according to any of claims 1 to 7 and one or more cocatalysts and/or one or more supports.

10. The use of a compound according to claim 8 for preparing a compound according to claim 5.

11. The use of one or more compounds according to any of claims 1 to 7 for preparing a polyolefin.

12. The use of a catalyst system according to claim 9 for preparing a polyolefin.

13. A process for preparing a polyolefin by polymerization of one or more olefins in the presence of one or more compounds according to any of claims 1 to 7.

## Revendications

1. Composés de la formule (I) : 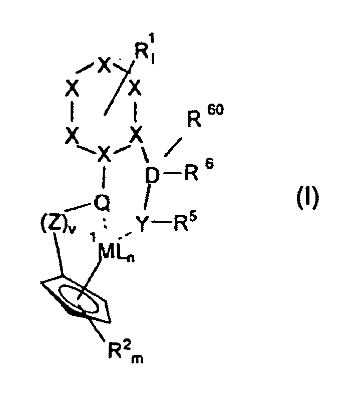 où
M¹ est Ti, Zr, Hf, Ni, Co, Fe, Pd, Sc, Cr ou Nb,
R¹ sont identiques ou différents et sont l'atome d' hydrogène ou Si(R¹²)₃, où R¹² sont identiques ou différents et sont un atome d'hydrogène ou un groupe carboné en C₁-C₄₀ tels qu'alkyle en C₁-C₂₀, fluoroalkyle en C₁-C₁₀, alcoxy en C₁-C₁₀, aryle en C₆-C₂₀, fluoroaryle en C₆-C₁₀, aryloxy en C₆-C₁₀, alcényle en C₂-C₁₀, arylalkyle en C₇-C₄₀, alkylaryle en C₇-C₄₀ ou arylalcényle en C₈-C₄₀,
ou R¹ sont identiques ou différents et sont un groupe carboné en C₁-C₃₀ tels qu'alkyle en C₁-C₂₅, alcényle en C₂-C₂₅, alkylalcényle en C₃-C₁₅, aryle en C₆₋C₂₄, hétéroaryle en C₅-C₂₄, arylalkyle en C₇-C₃₀, alkylaryle en C₇-C₃₀, alkyle en C₁-C₂₅ fluoré, aryle en C₆-C₂₅ fluoré, alkylaryle en C₇-C₃₀ fluoré, arylalkyle en C₇-C₃₀ fluoré ou alcoxy en C₁-C₁₂,
ou deux radicaux R¹ ou plus peuvent être reliés l'un à l'autre, de sorte que les radicaux R¹ et les atomes qui les relient, forment un système cyclique en C₄-C₂₄, qui peut être pour sa part, substitué,
R² sont identiques ou différents et sont l'atome d'hydrogène ou Si(R¹²)₃, où R¹² sont identiques ou différents et sont un atome d'hydrogène ou un groupe carboné en C₁-C₄₀ tel qu'alkyle en C₁-C₂₀, fluoroalkyle en C₁-C₁₀, alcoxy en C₁-C₁₀, aryle en C₆-C₁₄, fluoroaryle en C₆-C₁₀, aryloxy en C₆-C₁₀, alcényle en C₂-C₁₀, arylalkyle en C₇-C₄₀, alkylaryle en C₇-C₄₀ ou arylalcényle en C₈-C₄₀,
ou R² sont identiques ou différents et sont un groupe carboné en C₁-C₃₀ tel qu'alkyle en C₁-C₂₅, alcényle en C₂-C₂₅, alkylalcényle en C₃-C₁₅, aryle en C₆₋C₂₄, hétéroaryle en C₅-C₂₄, qui forment avec le cycle cyclopentadiényle, un azapentalène, un thiopentalène ou un phosphopentalène, arylalkyle en C₇-C₃₀, alkylaryle en C₇-C₃₀, alkyle en C₁-C₂₅ fluoré, aryle en C₆-C₂₄ fluoré, alkylaryle en C₇-C₃₀ fluoré, arylalkyle en C₇-C₃₀ fluoré ou alcoxy en C₁-C₁₂,
ou deux radicaux R² ou plus peuvent être reliés l'un à l'autre, de sorte que les radicaux R² et les atomes du cycle cyclopentadiényle, qui les relient, forment un système cyclique en C₄-C₂₄, qui peut être pour sa part, substitué,
R⁵, R⁶ sont identiques ou différents et sont l'atome d'hydrogène ou Si(R¹²)₃, où R¹² sont identiques ou différents et sont un atome d'hydrogène ou un groupe carboné en C₁-C₄₀ tel qu'alkyle en C₁-C₂₀, fluoroalkyle en C₁-C₁₀, alcoxy en C₁-C₁₀, aryle en C₆-C₂₀, fluoroaryle en C₆-C₁₀, aryloxy en C₆-C₁₀, alcényle en C₂-C₁₀, arylalkyle en C₇-C₄₀, alkylaryle en C₇-C₄₀ ou arylalcényle en C₈-C₄₀,
ou R⁵ ou R⁶ sont identiques ou différents et sont un groupe carboné en C₁-C₃₀ tel qu'alkyle en C₁-C₂₅, alcényle en C₂-C₂₅, alkylalcényle en C₃-C₁₅, aryle en C₆₋C₂₄, hétéroaryle en C₅-C₂₄, arylalkyle en C₇-C₃₀, alkylaryle en C₇-C₃₀, alkyle en C₁-C₂₅ fluoré, aryle en C₆-C₂₄ fluoré, alkylaryle en C₇-C₃₀ fluoré, arylalkyle en C₇-C₃₀ fluoré ou alcoxy en C₁-C₁₂,
ou les radicaux R⁵ et R⁶ peuvent être reliés l'un à l'autre, de sorte que les radicaux R⁵ et R⁶ forment un système cyclique en C₄-C₂₄, qui peut être pour sa part, substitué,
R⁶⁰ est un atome d'hydrogène ou un groupe alkyle en C₁-C₁₂,
l est égal à 4,
m est égal à 4,
D, Q, Y est un élément des groupes 13, 14, 15 ou 16 du système périodique des éléments,
X peuvent être identiques ou différents et sont un élément des groupes 13, 14, 15 ou 16 du système périodique des éléments, où ils forment les uns avec les autres, un système cyclique tel des aromatiques ou des aliphatiques,
L peuvent être identiques ou différents et sont un atome d'hydrogène, un groupe hydrocarboné en C₁-C₁₀, tel qu'alkyle en C₁-C₁₀ ou aryle en C₆-C₁₀, un atome d'halogène ou OR⁹, SR⁹, OSiR⁹₃, SiR⁹₃, PR⁹₂ ou NR⁹₂,
où R⁹ sont un atome d'halogène, un groupe alkyle en C₁-C₁₀, un groupe alkyle en C₁-C₁₀ halogéné, un groupe aryle en C₆-C₂₀ ou un groupe aryle en C₆-C₂₀ halogéné, ou L sont un groupe toluènesulfonyle, trifluoroacétyle, trifluoroacétoxyle, trifluorométhane-sulfonyle, nonafluorobutanesulfonyle ou 2,2,2-trifluoroéthanesulfonyle,
n est un nombre entier allant de 1 à 4,
Z est égal à M²R¹⁰R¹¹, où M² est du carbone, du silicium, du germanium, du bore ou de l'étain et R¹⁰ et R¹¹ sont identiques ou différents et représentent l'un alkyle en C₁-C₁₀, un aryle en C₆-C₁₄ ou un triméthylsilyle, et
v est 1.

2. Composés selon la revendication 1, **caractérisés en ce que**
M¹ est Ti, Zr, Hf, Ni, Co, Fe, Pd, Sc, Cr ou Nb,
R¹ sont identiques ou différents et sont l'atome d' hydrogène ou Si(R¹²)₃, où R¹² sont identiques ou différents et sont un atome d'hydrogène, un alkyle en C₁-C₂₀, un fluoroalkyle en C₁-C₁₀, un alcoxy en C₁-C₁₀, un aryle en C₆-C₂₀, un fluoroaryle en C₆-C₁₀, un aryloxy en C₆-C₁₀, un alcényle en C₂-C₁₀, un arylalkyle en C₇-C₄₀, une alkylaryle en C₇-C₄₀ ou un arylalcényle en C₈-C₄₀,
ou R¹ sont identiques ou différents et sont un alkyle en C₁-C₂₅, un alcényle en C₂-C₂₅, un alkylalcényle en C₃-C₁₅, un aryle en C₆-C₂₄, un hétéroaryle en C₅-C₂₄, un arylalkyle en C₇-C₃₀, un alkylaryle en C₇-C₃₀, un alkyle en C₁-C₂₅ fluoré, un aryle en C₆-C₂₄ fluoré, un alkylaryle en C₇-C₃₀ fluoré, un arylalkyle en C₇-C₃₀ fluoré ou un alcoxy en C₁-C₁₂,
ou deux radicaux R¹ ou plus peuvent être reliés l'un à l'autre, de sorte que les radicaux R¹ et les atomes du cycle cyclopentadiényle, qui les relient, forment un système cyclique en C₄-C₂₄, qui peut être pour sa part, substitué,
R² sont identiques ou différents et sont l'atome d' hydrogène ou Si(R¹²)₃, où R¹² sont identiques ou différents et sont un atome d'hydrogène, un alkyle en C₁-C₂₀, un fluoroalkyle en C₁-C₁₀, un alcoxy en C₁-C₁₀, un aryle en C₆-C₁₄, un fluoroaryle en C₆-C₁₀, un aryloxy en C₆-C₁₀, un alcényle en C₂-C₁₀, un arylalkyle en C₇-C₄₀, un alkylaryle en C₇-C₄₀ ou un arylalcényle en C₈-C₄₀,
ou R² sont identiques ou différents et sont un alkyle en C₁-C₂₅, un alcényle en C₂-C₂₅, un alkylalcényle en C₃-C₁₅, un aryle en C₆-C₂₄, un hétéroaryle en C₅-C₂₄, qui forment avec le cycle cyclopentadiényle, un azapentalène, un thiopentalène ou un phosphopentalène, un arylalkyle en C₇-C₃₀, un alkylaryle en C₇-C₃₀, un alkyle en C₁-C₂₅ fluoré, un aryle en C₆-C₂₄ fluoré, un alkylaryle en C₇-C₃₀ fluoré, un arylalkyle en C₇-C₃₀ fluoré ou un alcoxy en C₁-C₁₂,
ou deux radicaux R² ou plus peuvent être reliés l'un à l'autre, de sorte que les radicaux R² et les atomes du cycle cyclopentadiényle, qui les relient, forment un système cyclique en C₉-C₂₄, qui peut être pour sa part, substitué,
R⁵, R⁶ sont identiques ou différents et sont l'atome d'hydrogène ou Si(R¹²)₃, où R¹² sont identiques ou différents et sont un atome d'hydrogène, un alkyle en C₁-C₂₀, un fluoroalkyle en C₁-C₁₀, un alcoxy en C₁-C₁₀, un aryle en C₆-C₂₀, un fluoroaryle en C₆-C₁₀, un aryloxy en C₆-C₁₀, un alcényle en C₂-C₁₀, un arylalkyle en C₇-C₄₀, un alkylaryle en C₇-C₄₀ ou un arylalcényle en C₈-C₄₀,
ou R⁵ ou R⁶ sont identiques ou différents et sont un alkyle en C₁-C₂₅, un alcényle en C₂-C₂₅, un alkylalcényle en C₃-C₁₅, un aryle en C₆-C₂₄, un hétéroaryle en C₅-C₂₄, un arylalkyle en C₇-C₃₀, un alkylaryle en C₇-C₃₀, un alkyle en C₁-C₂₅ fluoré, un aryle en C₆-C₂₄ fluoré, un alkylaryle en C₇-C₃₀ fluoré, un arylalkyle en C₇-C₃₀ fluoré ou un alcoxy en C₁-C₁₂,
ou les radicaux R⁵ et R⁶ peuvent être reliés l'un à l'autre, de sorte que les radicaux R⁵ et R⁶ forment un système cyclique en C₄-C₂₄, qui peut être pour sa part, substitué,
R⁶⁰ représente un atome d'hydrogène,
L peuvent être identiques ou différents et sont un atome d'hydrogène, un alkyle en C₁-C₁₀ ou un aryle en C₅-C₁₀, un atome d'halogène ou OR⁹, SR⁹, OSiR⁹₃, SiR⁹₃, PR⁹₂ ou NR⁹₂,
où R⁹ sont un atome d'halogène, un groupe alkyle en C₁-C₁₀, un groupe alkyle en C₁-C₁₀ halogéné, un groupe aryle en C₆-C₂₀ ou un groupe aryle en C₆-C₂₀ halogéné, ou L sont un groupe toluènesulfonyle, trifluoroacétyle, trifluoroacétoxyle, trifluorométhane-sulfonyle, nonafluorobutanesulfonyle ou 2,2,2-trifluoroéthanesulfonyle,
n est égal à 2.

3. Composés selon la revendication 1, **caractérisés en ce que** Z représente CH₂, CH₂CH₂, CH(CH₃)CH₂, CH (C₄H₉)C(CH₃)₂, C (CH₃)₂, (CH₃)₂Si, (CH₃)₂Ge, (CH₃)₂Sn, (C₆H₅)₂Si, (C₆H₅)(CH₃)Si, (C₆H₅)₂Ge, (CH₃)₃Si-Si(CH₃)(C₆H₅)₂Sn, (CH₂)₄Si, CH₂Si(CH₃)₂, o-C₆H₄ ou 2,2'-(C₆H₄)₂ ainsi que les ponts 1,2-(1-méthyléthanediyle), 1,2-(1,1-diméthyléthanediyle) et 1,2-(1,2-diméthyléthanediyle).

4. Composés selon la revendication 1, **caractérisés en ce que** la formule (I) représente des composés métallo-organiques pontés, pour lesquels v vaut 1 et le cycle cyclopentadiényle est substitué avec R², de sorte qu'il en résulte un cycle indényle.

5. Composés de la formule (II) : 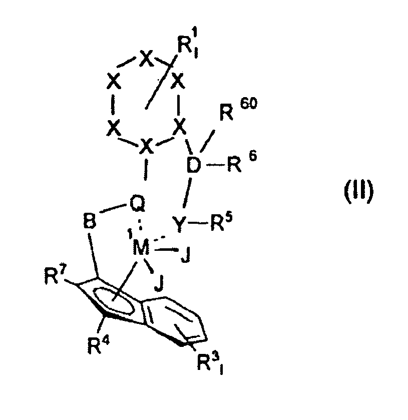 où
M¹ est Ti, Zr ou Hf, de manière particulièrement préférée, le zirconium,
R¹ sont identiques ou différents et sont l'atome d' hydrogène ou O-Si (R¹²)₃ ou Si (R¹²)₃, où R¹² sont identiques ou différents et sont un atome d'hydrogène ou un groupe carboné en C₁-C₄₀ comme un alkyle en C₁-C₂₀, un fluoroalkyle en C₁-C₁₀, un alcoxy en C₁-C₁₀, un aryle en C₆-C₂₀, un fluoroaryle en C₆-C₁₀, un aryloxy en C₆-C₁₀, un alcényle en C₂-C₁₀, un arylalkyle en C₇-C₄₀, un alkylaryle en C₇-C₄₀ ou un arylalcényle en C₈-C₄₀,
ou R¹ sont identiques ou différents et sont un groupe carboné en C₁-C₃₀ comme un alkyle en C₁-C₂₅, un alcényle en C₂-C₂₅, un alkylalcényle en C₃-C₁₅, un aryle en C₆-C₂₄, un hétéroaryle en C₅-C₂₄, un arylalkyle en C₇₋C₃₀, un alkylaryle en C₇-C₃₀, un alkyle en C₁-C₂₅ fluoré, un aryle en C₆-C₂₄ fluoré, un alkylaryle en C₇-C₃₀ fluoré, un arylalkyle en C₇-C₃₀ fluoré ou un alcoxy en C₁-C₁₂,
ou deux radicaux R¹ ou plus peuvent être reliés l'un à l'autre, de sorte que les radicaux R¹ et les atomes qui les relient, forment un système cyclique en C₄-C₂₄, qui peut être pour sa part, substitué,
R⁴, R⁷ sont identiques et sont l'atome d'hydrogène, un groupe carboné en C₁-C₂₀, de préférence un alkyle en C₁-C₁₈, comme le méthyle, l'éthyle, le n-butyle, le n-hexyle, le cyclohexyle ou l'octyle, l'alcényle en C₂-C₁₀, l'alkylalcényle en C₃-C₁₅, l'aryle en C₆-C₁₈, l'hétéroaryle en C₅-C₁₈, l'arylalkyle en C₇-C₂₀, l'alkylaryle en C₇-C₂₀, l'alkyle en C₁-C₁₂ fluoré, l'aryle en C₆-C₁₈ fluoré, l'arylalkyle en C₇-C₂₀ fluoré ou l'alkylaryle en C₇-C₂₀ fluoré,
R⁵, R⁶ sont identiques ou différents et sont l'atome d'hydrogène ou Si(R¹²)₃, où R¹² sont identiques ou différents et sont un atome d'hydrogène ou un groupe carboné en C₁-C₄₀ comme un alkyle en C₁-C₂₀, fluoroalkyle en C₁-C₁₀, un alcoxy en C₁-C₁₀, un aryle en C₆-C₂₀, un fluoroaryle en C₆-C₁₀, un aryloxy en C₆-C₁₀, un alcényle en C₂-C₁₀, un arylalkyle en C₇-C₄₀, un alkylaryle en C₇₋C₄₀ ou un arylalcényle en C₈-C₄₀,
ou R⁵ ou R⁶ sont identiques ou différents et sont un groupe carboné en C₁-C₃₀ comme un alkyle en C₁-C₂₅, par exemple le méthyle, l'éthyle, le t-butyle, le n-hexyle, le n-butyle, le cyclohexyle ou l'octyle, un alcényle en C₂-C₂₅, un alkylalcényle en C₃-C₁₅, un aryle en C₆-C₂₄, un hétéroaryle en C₅-C₂₄, un arylalkyle en C₇₋C₃₀, un alkylaryle en C₇-C₃₀, un alkyle en C₁-C₂₅ fluoré, un aryle en C₆-C₂₄ fluoré, un alkylaryle en C₇-C₃₀ fluoré, un arylalkyle en C₇-C₃₀ fluoré ou un alcoxy en C₁-C₁₂,
ou les radicaux R⁵ et R⁶ peuvent être reliés l'un à l'autre, de sorte que les radicaux R⁵ et R⁶ forment un système cyclique en C₄-C₂₄, qui peut être pour sa part, substitué,
R³ représentent un atome d'hydrogène, un atome d'halogène ou un groupe carboné en C₁-C₂₀, de préférence un groupe alkyle en C₁-C₁₈ linéaire ou ramifié, comme le méthyle, l'éthyle, le t-butyle, le cyclohexyle ou l'octyle, un alcényle en C₂-C₁₀, un alkylalcényle en C₃₋C₁₅, un groupe aryle en C₆-C₁₈, qui peut être le cas échéant substitué, en particulier le phényle, le tolyle, le xylyle, le t-butylphényle, l'éthylphényle, le naphtyle, l'acénaphtyle, le phénanthrényle ou l'anthracényle, un hétéroaryle en C₅-C₁₈, un arylalkyle en C₇-C₂₀, un alkylaryle en C₇-C₂₀, un alkyle en C₁-C₁₂ fluoré, un aryle en C₆-C₁₈ fluoré, un alkylaryle en C₇₋C₂₀ fluoré ou un arylalkyle en C₇-C₂₀ fluoré, et deux radicaux R³ ou plus peuvent former un système cyclique mono- ou polycyclique, qui peut être pour sa part, substitué, le cas échéant
R⁶⁰ est un atome d'hydrogène ou un groupe alkyle en C₁-C₁₂, de préférence l'atome d'hydrogène,
J est un atome d'halogène, en particulier le chlore, un groupe alkyle en C₁-C₁₈, en particulier le méthyle, l'éthyle ou le t-butyle, ou un phénolate substitué ou non substitué,
D, Q, Y est un élément des groupes 13, 14, 15 ou 16 du système périodique des éléments, en particulier le bore, le carbone, le.silicium, l'azote, l'oxygène et le soufre,
X peuvent être identiques ou différents et sont un élément des groupes 13, 14, 15 ou 16 du système périodique des éléments, en particulier le bore, le carbone, le silicium, l'azote, l'oxygène et le soufre, où ils forment les uns avec les autres, un système cyclique tels des aromatiques ou aliphatiques, où un ou plusieurs atomes C peuvent être remplacés par N, O, S, B, en particulier le phényle, le naphtyle, l'adamantyle, le fluorényle, le cyclohexyle, le boratabenzène, qui peuvent être substitués par R¹,
l, i sont identiques ou différentes et sont un nombre entier allant de 0 à 4, de préférence 1 ou 2, de manière particulièrement préférée 1,
B est égal à M³R¹³R¹⁴, où M³ est le silicium ou le carbone, et R¹³ et R¹⁴ sont identiques ou différents et représentent un alkyle en C₁-C₁₀, un aryle en C₆-C₁₄ ou un triméthylsilyle, et
R⁶⁰ est un atome d'hydrogène.

6. Composé selon la revendication 5, **caractérisé en ce que** le cycle indényle est substitué en positions 2 ; 4 ; 2,4,5 ; 2,4,6 ; ,2,4,7 ; ou 2,4,5,6, avec un ou plusieurs radicaux R³ et R³ sont un groupe carboné en C₁-C₂₀, tel qu'un alkyle en C₁-C₁₈ ou un aryle en C₆-C₁₈, où également deux ou plusieurs substituants R³ peuvent former un système cyclique.

7. Composé selon la revendication 5, **caractérisé en ce que**
M¹ est le zirconium,
R⁷ est l'atome d'hydrogène ou un groupe alkyle en C₁-C₁₂ linéaire ou ramifié,
R⁵ est l'atome d'hydrogène, un atome d'halogène ou un groupe alkyle en C₁-C₈ linéaire ou ramifié, un alcényle en C₂-C₆, un alkylalcényle en C₃-C₆, un groupe aryle en C₆-C₁₈, qui peut être le cas échéant substitué, un hétéroaryle en C₅-C₁₈, un arylalkyle en C₇-C₁₂, un alkylaryle en C₇-C₁₂, un alkyle en C₁-C₈ fluoré, un aryle en C₆-C₁₈ fluoré, un arylalkyle en C₇-C₁₂ fluoré ou un alkylaryle en C₇-C₁₂ fluoré,
R⁶ sont identiques ou différents et sont l'atome d'hydrogène ou un radical alkyle en C₁-C₁₂,
R³ représentent un atome d'hydrogène, un atome d'halogène ou un groupe alkyle en C₁-C₈ linéaire ou ramifié, un alcényle en C₂-C₆, un alkylalcényle en C₃-C₆, un groupe aryle en C₆-C₁₈, un groupe aryle en C₆-C₁₈ substitué, un hétéroaryle en C₅-C₁₈, un arylalkyle en C₇-C₁₂, un alkylaryle en C₇-C₁₂, un alkyle en C₁-C₈ fluoré, un aryle en C₆-C₁₈ fluoré, un alkylaryle en C₇₋C₁₂ fluoré ou arylalkyle en C₇-C₁₂ fluoré,
J est l'atome de chlore ou le méthyle,
D, Q, Y est indépendamment l'un de l'autre, un élément des groupes 14, 15 ou 16 du système périodique des éléments,
X peuvent être identiques ou différents et sont un élément des groupes 14, 15 ou 16 du système périodique des éléments,
l, i sont identiques ou différentes et sont un nombre entier allant de 0 à 4,
B caractérise un élément de structure pontant, et représente les radicaux divalents Si(Me)₂, Si(Ph)₂, Si(Et)₂, Si (MePh), CH₂, CH₂CH₂, (CH₃)₃Si-Si(CH₃) où Me représente le méthyle, Et l'éthyle et Ph le phényle.

8. Composés de la formule (IIa) : 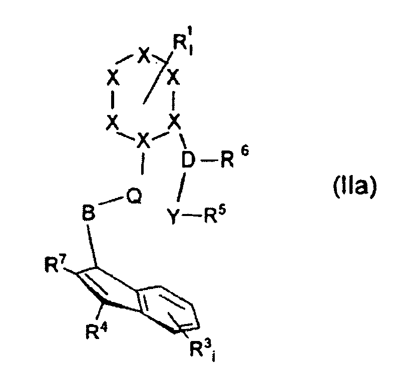 où
R¹ sont identiques ou différents et sont l'atome d'hydrogène, O-Si(R¹²)₃ ou Si(R¹²)₃, où R¹² sont identiques ou différents et sont un atome d'hydrogène ou un groupe carboné en C₁-C₄₀ comme un alkyle en C₁-C₂₀, un fluoroalkyle en C₁-C₁₀, un alcoxy en C₁-C₁₀, un aryle en C₆-C₂₀, un fluoroaryle en C₅-C₁₀, un aryloxy en C₆-C₁₀, un alcényle en C₂-C₁₀, un arylalkyle en C₇-C₄₀, un alkylaryle en C₇-C₄₀ ou un arylalcényle en C₈-C₄₀,
ou R¹ sont identiques ou différents et sont un groupe carboné en C₁-C₃₀ comme un alkyle en C₁-C₂₅, un alcényle en C₂-C₂₅, un alkylalcényle en C₃-C₁₅, un aryle en C₆-C₂₄, un hétéroaryle en C₅-C₂₄, un arylalkyle en C₇₋C₃₀, un alkylaryle en C₇-C₃₀, un alkyle en C₁-C₂₅ fluoré, un aryle en C₆-C₂₄ fluoré, un alkylaryle en C₇-C₃₀ fluoré, un arylalkyle en C₇-C₃₀ fluoré ou un alcoxy en C₁-C₁₂,
ou deux radicaux R¹ ou plus peuvent être reliés l'un à l'autre, de sorte que les radicaux R¹ et les atomes qui les relient, forment un système cyclique en C₄-C₂₄, qui peut être pour sa part, substitué,
R⁴, R⁷ sont identiques et sont l'atome d'hydrogène, un groupe carboné en C₁-C₂₀, de préférence un alkyle en C₁-C₁₈, comme le méthyle, l'éthyle, le n-butyle, le n-hexyle, le cyclohexyle ou l'octyle, un alcényle en C₂₋C₁₀, un alkylalcényle en C₃-C₁₅, un aryle en C₆-C₁₈, un hétéroaryle en C₅-C₁₈, un arylalkyle en C₇-C₂₀, un alkylaryle en C₇-C₂₀, un alkyle en C₁-C₁₂ fluoré, un aryle en C₆-C₁₈ fluoré, un arylalkyle en C₇-C₂₀ fluoré ou alkylaryle en C₇-C₂₀ fluoré,
R⁵, R⁶ sont identiques ou différents et sont l'atome d'hydrogène ou Si(R¹²)₃, où R¹² sont identiques ou différents et sont un atome d'hydrogène ou un groupe carboné en C₁-C₄₀ comme un alkyle en C₁-C₂₀, un fluoroalkyle en C₁-C₁₀, un alcoxy en C₁-C₁₀, un aryle en C₆-C₂₀, un fluoroaryle en C₆-C₁₀, un aryloxy en C₆-C₁₀, un alcényle en C₂-C₁₀, un arylalkyle en C₇-C₄₀, un alkylaryle en C₇-C₄₀ ou un arylalcényle en C₈-C₄₀,
ou R⁵ ou R⁶ sont identiques ou différents et sont un groupe carboné en C₁-C₃₀ comme un alkyle en C₁-C₂₅, par exemple le méthyle, l'éthyle, le t-butyle, le n-hexyle, le cyclohexyle ou l'octyle, l'alcényle en C₂-C₂₅, un alkylalcényle en C₃-C₁₅, un aryle en C₆-C₂₄, un hétéroaryle en C₅-C₂₄, un arylalkyle en C₇-C₃₀, un alkylaryle en C₇-C₃₀, un alkyle en C₁-C₂₅ fluoré, un aryle en C₆-C₂₄ fluoré, un alkylaryle en C₇-C₃₀ fluoré, un arylalkyle en C₇-C₃₀ fluoré ou un alcoxy en C₁-C₁₂,
ou les radicaux R⁵ et R⁶ peuvent être reliés l'un à l'autre, de sorte que les radicaux R⁵ et R⁶ forment un système cyclique en C₄-C₂₄, qui peut être pour sa part, substitué,
R³ représentent un atome d'hydrogène, un atome d'halogène ou un groupe carboné en C₁-C₂₀, de préférence un groupe alkyle en C₁-C₁₈ linéaire ou ramifié, comme le méthyle, l'éthyle, le t-butyle, le cyclohexyle ou l'octyle, un alcényle en C₂-C₁₀, un alkylalcényle en C₃₋C₁₅, un groupe aryle en C₆-C₁₈, qui peut être le cas échéant substitué, en particulier le phényle, le tolyle, le xylyle, le t-butylphényle, l'éthylphényle, le naphtyle, l'acénaphtyle, le phénanthrényle ou l'anthracényle, un hétéroaryle en C₅-C₁₈, un arylalkyle en C₇-C₂₀, un alkylaryle en C₇-C₂₀, un alkyle en C₁-C₁₂ fluoré, un aryle en C₆-C₁₈ fluoré, un alkylaryle en C₇₋C₂₀ fluoré ou un arylalkyle en C₇-C₂₀ fluoré et deux radicaux R³ ou plus peuvent former un système cyclique mono- ou polycyclique, qui peut être pour sa part, substitué, le cas échéant
D, Q, Y est un élément des groupes 13, 14, 15 ou 16 du système périodique des éléments, en particulier le bore, le carbone, le silicium, l'azote, l'oxygène et le soufre,
X peuvent être identiques ou différents et sont un élément des groupes 13, 14, 15 ou 16 du système périodique des éléments, en particulier le bore, le carbone, le silicium, l'azote, l'oxygène et le soufre, où ils forment les uns avec les autres, un système cyclique comme des aromatiques ou aliphatiques, où un ou plusieurs atomes C peuvent être remplacés par N, O, S, B, en particulier le phényle, le naphtyle, l'adamantyle, le fluorényle, le cyclohexyle, le boratabenzène, qui peuvent être substitués par R¹,
l, i sont identiques ou différentes et sont un nombre entier allant de 0 à 4,
B est égal à M³R¹³R¹⁴, où M³ est le silicium ou le carbone, et R¹³ et R¹⁴ sont identiques ou différents et représentent un alkyle en C₁-C₁₀, un aryle en C₆-C₁₄ ou le triméthylsilyle.

9. Systèmes catalytiques contenant un ou plusieurs composés selon une des revendications 1 à 7, ainsi qu'un ou plusieurs cocatalyseurs et/ou un ou plusieurs supports.

10. Utilisation d'un composé selon la revendication 8, pour la préparation d'un composé selon la revendication 5.

11. Utilisation d'un ou plusieurs composés selon l'une des revendications 1 à 7, pour la préparation d'une polyoléfine.

12. Utilisation d'un système catalytique selon la revendication 9, pour la préparation d'une polyoléfine.

13. Procédé de préparation d'une polyoléfine par polymérisation d'une ou plusieurs oléfines en présence d'un ou plusieurs composés selon l'une des revendications 1 à 7.
